# EUROPÄISCHE PATENTSCHRIFT

(11) **EP 3 815 326 B1**
(45) Veröffentlichungstag und Bekanntmachung des Hinweises auf die Patenterteilung: **08.02.2023**
(21) Anmeldenummer: 19734053.2
(22) Anmeldetag: 25.06.2019
(51) Int. Cl.: H04L 9/40

(54) **ERSTELLEN EINER FAHRZEUGBESCHEINIGUNG UNTER VERWENDUNG EINER BLOCKCHAIN**
CREATING A VEHICLE CERTIFICATE USING A BLOCKCHAIN
CRÉATION D'UN CERTIFICAT DE VÉHICULE À L'AIDE D'UNE CHAÎNE DE BLOCS

(30) Priorität: 26.06.2018 DE 102018115347
(43) Veröffentlichungstag der Anmeldung: 05.05.2021
(73) Patentinhaber: Bundesdruckerei GmbH, 10969 Berlin (DE)
(72) Erfinder: RÜCKRIEMEN, Jörg, 10999 Berlin (DE)
(74) Vertreter: Richardt Patentanwälte PartG mbB
(86) Internationale Anmeldenummer: PCT/EP2019/066851
(87) Internationale Veröffentlichungsnummer: WO 2020/002340

(56) Entgegenhaltungen:
- EP-A1- 3 319 006
- US-A1- 2018 018 723

## Beschreibung

Die Erfindung betrifft ein Verfahren zum Erstellen einer Fahrzeugbescheinigung unter Verwendung von manipulationssicher in einer Blockchain gespeicherter Fahrzeugdaten sowie ein System zur Ausführung des Verfahrens.

Eine Identität von Fahrzeugen wird im Allgemeinen durch eine amtliche Fahrzeugbescheinigung, wie etwa im Falle von Kraftfahrzeugen durch eine Zulassungsbescheinigung, nachgewiesen. Solche Zulassungsbescheinigung sind zwar im Allgemeinen durch Sicherheitsmerkmale geschützt. Jedoch bieten diese nur einen begrenzten Schutz, insbesondere im Verhältnis zum Wert der dadurch zu schützenden Fahrzeuge.

Ferner besteht die Gefahr, dass Zulassungsstellen zu Opfer von Diebstahl werden, bei denen Blanko-Formulare von Zulassungsbescheinigungen entwendet wurden. Diese Zulassungsbescheinigungen sind beispielsweise bereits mit einer Dokumentenseriennummer versehen und werden von Fahrzeugdieben auf die gestohlenen Fahrzeuge ausgestellt.

Die US 2018/018723 A1 beschreibt eine Fahrzeugaufzeichnungsplattform, welche die Blockchain-Technologie verwendet. Fahrzeugaufzeichnungen werden in Blöcken aufgezeichnet, mittels einer Fahrzeugidentifikationsnummer verknüpft sind. Die Fahrzeugaufzeichnungen speichern historische Informationen über Fahrzeuge, einschließlich Kollisionsinformationen, Finanzierungsinformationen, Besitzübertragungsinformationen und andere Transaktionsinformationen.

Der Erfindung liegt daher die Aufgabe zugrunde, ein effizientes und sicheres Verfahren zum manipulationssicheren Erstellen einer Fahrzeugbescheinigung eines Fahrzeugs zu schaffen.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum manipulationssicheren Speichern von Fahrzeugdaten eines Fahrzeugs in einer Blockchain. Die Blockchain umfasst in einem Block ein Programmmodul mit ersten und zweiten Programminstruktionen. Das Programmmodul ist dem Fahrzeug zugeordnet. Durch Ausführen der ersten Programminstruktionen wird ein dem Programmmodul zugeordneter Eintrag mit Fahrzeugdaten des Fahrzeugs in der Blockchain erzeugt, durch Ausführen der zweiten Programminstruktionen wird eine Fahrzeugbescheinigung mit einem das Fahrzeug charakterisierenden erster Datensatz erstellt. Der erste Datensatz umfasst in einem dem Programmmodul zugeordneten Eintrag der Blockchain gespeicherte Fahrzeugdaten. Das Programmmodul ist einem ersten öffentlichen kryptografischen Schlüssel eines ersten asymmetrischen Schlüsselpaars eines ersten Fahrzeugeigentümers zugeordnet und in einem Speicher eines Computersystems eines ersten Eigentümers des Fahrzeugs ist ein privater kryptografischer Schlüssel des ersten asymmetrischen Schlüsselpaars gespeichert.

Das Verfahren umfasst:
- Erstellen einer Ausgabeanweisung zum Ausgeben der Fahrzeugbescheinigung, wobei die Ausgabeanweisung das dem Fahrzeug zugeordnete Programmmodul identifiziert,
- Signieren der Ausgabeanweisung mit dem ersten privaten kryptografischen Schlüssel,
- Senden der signierten Ausgabeanweisung durch das Computersystem des ersten Eigentümers über ein erstes Netzwerk an einen Blockchain-Server einer Mehrzahl von Blockchain-Servern des Blockchain-Netzwerks, welche dazu konfiguriert sind die Programminstruktionen des Programmmoduls auszuführen,
- Empfang der signierten Ausgabeanweisung durch den Blockchain-Server,
- Ausführen der zweiten Programminstruktionen des durch die Ausgabeanweisung identifizierten Programmmoduls durch den Blockchain-Server, wobei das Ausführen der zweiten Programminstruktionen ein Prüfen der Signatur der Ausgabeanweisung unter Verwendung des ersten öffentlichen kryptografischen Schlüssels umfasst und, im Falle einer gültigen Signatur, ein Erstellen der Fahrzeugbescheinigung,
- Senden der Fahrzeugbescheinigung durch den Blockchain-Server an das Computersystem des ersten Eigentümers,
- Empfangen der Fahrzeugbescheinigung durch das Computersystem des ersten Eigentümers,
- Ausgeben der Fahrzeugbescheinigung durch das Computersystem des ersten Eigentümers, wobei die ausgegebene Fahrzeugbescheinigung einen maschinenlesbaren Code umfasst, wobei der maschinenlesbare Code das dem Fahrzeug zugeordnete Programmmodul identifiziert und einen zweiten privaten kryptografischen Schlüssel eines zweiten asymmetrischen Schlüsselpaars umfasst, wobei ein zweiter öffentlicher kryptografischer Schlüssel des zweiten asymmetrischen Schlüsselpaars in der Blockchain identifiziert ist als Prüfwert zum Prüfen einer Signatur einer Leseanfragen zum Lesen von Fahrzeugdaten der Fahrzeugbescheinigung aus der Blockchain.

Ausführungsformen können den Vorteil haben, dass ein Verfahren bereitgestellt wird, mit welchem ein in der Blockchain registrierter Eigentümer eines Fahrzeugs nach Bedarf eine Fahrzeugbescheinigung erstellen kann. Die Authentizität der in der Fahrzeugbescheinigung bereitgestellten Fahrzeugdaten wird durch die Blockchain garantiert, welche eine manipulationssichere Speicherung der Fahrzeugdaten ermöglicht. Unter Verwendung des maschinenlesbaren Codes können die Fahrzeugdaten der Fahrzeugbescheinigung mittels der Leseanfragen zum Lesen von Fahrzeugdaten der Fahrzeugbescheinigung aus der Blockchain ausgelesen. Die Berechtigung zum Auslesen der Daten der Fahrzeugbescheinigung kann dabei durch eine Signatur mit dem von dem maschinenlesbaren Code bereitgestellten zweiten privaten Schlüssel als Signaturschlüssel ermöglicht werden.

Bei dem maschinenlesbaren Code kann es sich beispielsweise um einen ein- oder zweidimensionalen graphischen Code handeln, welcher mittels eines optoelektronischen Lesegeräts lesbar ist. Der Code kann gängige Schrift-, Zahl- und/oder Sonderzeichen umfassen. ferner kann der Code geometrische Formen, wie etwa Striche und Punkte unterschiedlicher Dimensionierung umfassen. Bei dem Code handelt es sich beispielsweise um einen eindimensionalen Strichcode, einen gestapelten eindimensionalen Strichcode, einen Array-Code, wie etwa einen Matrix-Code, z.B. einen QR-Code, oder einen Punktcode. Ferner kann es sich um einen zusammengesetzten Code (Composite-Codes) wie etwa einen Doppelcode handeln. Ein Doppelcode setzt sich beispielsweise zusammen aus einem linearen Barcode und einem zusätzlichen zweidimensionalen Code. Ferner kann es sich um einen eindimensionalen Barcode, welcher zusätzlich die zweite Dimension in Form von unterschiedlich langen Strichen zur Codierung nutzt. Auch höherdimensionale Codes mit drei oder mehr Dimensionen können implementiert werden, etwa über eine Verwendung von unterschiedlichen Farben.

Bei dem maschinenlesbaren Code kann es sich ferner um in einem Speicher, etwa eines Chips oder eines RFID-Tags, gespeicherte Daten handeln, welche mit einem Lesegerät ausgelesen werden können.

Unter einem "Fahrzeug" wird hier ein mobiles Verkehrsmittel verstanden. Ein solches Verkehrsmittel kann beispielsweise dem Transport von Gütern (Güterverkehr), von Werkzeugen (Maschinen oder Hilfsmittel) oder Personen (Personenverkehr) dienen. Fahrzeuge umfassen insbesondere auch motorisierte Verkehrsmittel. Bei einem Fahrzeug kann es sich beispielsweise um ein Landfahrzeug, ein Wasserfahrzeug und/oder ein Luftfahrzeug handeln. Ein Landfahrzeug kann beispielsweise sein: ein Automobil, wie etwa ein Personenkraftwagen, Omnibus oder ein Lastkraftwagen, ein motorbetriebenes Zweirad, wie etwa ein Motorrad, Kleinkraftrad, Motorroller oder Motorfahrrad, ein landwirtschaftlicher Traktor, Gabelstapler, Golfmobil, Autokran. Darüber hinaus kann es sich bei einem Landfahrzeug auch um ein Schienen gebundenes Fahrzeug handeln. Wasserfahrzeug kann beispielsweise sein: ein Schiff oder Boot. Ferner kann ein Luftfahrzeug beispielsweise sein: ein Flugzeug oder Hubschrauber. Unter einem Fahrzeug wird insbesondere auch ein Kraftfahrzeug verstanden.

Unter einer "Blockchain" wird hier und im Folgenden eine geordnete Datenstruktur verstanden, welche eine Mehrzahl von miteinander verketteten Datenblöcken umfasst. Insbesondere wird unter einer Blockchain eine geordnete Datenstruktur verstanden, bei welcher jeder der Blöcke (außer dem ersten Block) einen Prüfwert, beispielsweise einen Hash-Wert, seines Vorgängerblocks umfasst und somit anhand jedes Blocks die Gültigkeit aller seiner Vorgängerblocks geprüft und ggf. bestätigt werden kann. Beispiele einer Blockchain vergleiche https://en.wikipedia.org/wiki/Block_chain_(database) und "Mastering Bitcoin", Chapter 7, The Blockchain, Seite 161 ff. Das Konzept der Blockchain wurde beispielsweise im Jahre 2008 in einem White Paper unter dem Pseudonym Satoshi Nakamoto zu Bitcoin beschrieben ("Bitcoin: Peer-to-Peer Electronic Cash System" (https://bitcoin.org/bitcoin.pdf)). Die darin beschriebene Blockchain besteht aus einer Reihe von Datenblöcken, in denen jeweils ein oder mehrere Einträge bzw. Transaktionen zusammengefasst und mit einer Prüfsumme in Form eines Hashwerts versehen sind. Zusätzliche Blöcke der Blockchain werden beispielsweise in einem rechenintensiven Prozess erzeugt, der auch als sogenanntes Mining bezeichnet wird. Diese zusätzlich erzeugten Blöcke werden anschließend der Blockchain hinzugefügt und über ein Netzwerk an alle Teilnehmer, bzw. Knoten des Netzwerks, verbreitet.

Ausführungsformen können den Vorteil haben, dass die Blockchain durch die Speicherung kryptografischer Prüfsumme, d.h. Hashwerten, des vorangehenden Blocks im jeweils nachfolgenden Block ein hohes Maß an Sicherheit gegenüber nachträglichen Manipulationen bietet. Bei einer Blockchain werden die Einträge bzw. Transaktionen eines Blocks beispielsweise durch einen Merkle-Baum paarweise miteinander gehasht und nur der letzte auf diese Weise erhaltene Hashwert des Blocks, der sogenannte Root-Hashwert bzw. Wurzelhashwert, als Prüfsumme beispielsweise in einem Header des Blocks vermerkt. Das Verketten der Blöcke kann dann unter Verwendung dieser Root-Hashwerte überprüft werden. Jeder Block der Blockchain enthält in seinem Header beispielsweise den Hash des gesamten vorherigen Blockheaders. Somit wird die Reihenfolge der Blöcke eindeutig festgelegt und es entsteht eine Kettenstruktur. Durch die so implementierte Verkettung der einzelnen Blöcke miteinander wird erreicht, dass ein nachträgliches Modifizieren vorangegangener Blöcke bzw. einzelner Transaktionen praktisch ausgeschlossen ist, da hierfür die Hashwerte aller nachfolgenden Blöcke in kurzer Zeit ebenfalls neu berechnet werden müssten.

Der erste Block in der Blockchain ist vorgegeben und wird Genesisblock genannt. Nach Ausführungsformen sind die öffentlichen kryptografischen Schlüssel eines oder mehrerer Provider, welche zum Erstellen von Programmodulen berechtigt sind, in dem Genesisblock gespeichert. Der Genesisblock ist aufgrund der zuvor beschriebenen Kettenstruktur, derjenige Block, dessen Einträge das höchste Maß an Sicherheit aufweisen, da zu seiner Änderung die gesamte Blockchain durch eine neue Blockchain ersetzt werden müsste. Mithin kann der Eintrag des öffentlichen kryptografischen Schlüssels in den Genesisblock einen Vertrauensanker mit einem ausreichenden Maß an Sicherheit darstellen, sodass beispielsweise keine zusätzliche PKI-Prüfung notwendig ist, um der Authentizität des öffentlichen kryptografischen Schlüssels zu vertrauen. Dadurch kann die Sicherheit des Systems auch in einem Offline-Modus gewährt werden.

Zudem kann durch eine Anpassung der notwendigen Rechenintensität für die Erstellung jeweils zusätzlicher Blöcke die Sicherheit zusätzlich erhöht werden. Die für die Erstellung zusätzlicher Blöcke notwendige Rechenintensität lässt sich über Anforderungen an den Hashwert des zu erstellenden zusätzlichen Blocks steuern. Der resultierende Hash-Wert ist nicht vorhersagbar, vielmehr handelt es sich um eine zufallsverteilte Zahl. Es lässt sich aber berechnen, wieviel Zeit in Abhängigkeit von der aufgewendeten Rechenleistung im statistischen Mittel zum Auffinden eines gültigen zusätzlichen Blocks notwendig ist. Der Hashwert eines Blocks lässt sich beispielsweise durch Hinzufügen und Variieren eines Nounce variieren. Aufgrund der Kettenstruktur können Daten, die einmal in einer Blockchain gespeichert sind, nicht mehr geändert oder entfernt werden, ohne große Teile der Blockchain zu ersetzen. Eine solche Ersetzung scheidet jedoch als Folge einer ausreichend rechenintensiven Generierung zusätzlicher Blöcke aus. Bekannte Ausführungsformen einer Blockchain, wie etwa im Fall der Kryptowährung Bitcoin, basieren auf einer Anonymität der an den Transaktionen beteiligten Partner. Demgegenüber kann durch oben beschriebene Signatur der in die Transaktionen eingetragenen Hashwerte, deren Authentizität belegt und ihr Ursprung nachgewiesen werden. Hierdurch kann die Fälschungssicherheit verbessert werden.

Eine Anforderung an einen gültigen Block kann beispielsweise darin bestehen, dass der Hashwert des Headers des Blocks kleiner gleich einem Grenzwert ist. Die Hashwertberechnung kann beispielsweise mit dem Secure Hash Algorithm (SHA) SHA 256 erfolgen. Der resultierende Hash-Wert ist in diesem Fall eine Zufallszahl zwischen 0 und 2²⁵⁶-1. Die Wahrscheinlichkeit, dass beim Anwenden des Hashalgorithmus einen bestimmten Hash herauskommt, ist somit (maximaler Hash-Wert+1)⁻¹, im Falle des SHA 256-Algorithums also 2⁻²⁵⁶. Die Wahrscheinlichkeit, dass der resultierende Hash-Wert kleiner gleich einem Grenzwert bzw. Zielwert (engl. target) ist, beträgt daher (target)/(max. Hash-Wert). Für einen beispielhaften maximalen Grenzwert von (2¹⁶-1)·2²⁰⁸ beträgt die Wahrscheinlichkeit [(2¹⁶-1)·2²⁰⁸]/ 2²⁵⁶ ≈ 2⁻³². Die Schwierigkeit S eine Hash-Wert zu erhalten, welcher kleiner gleich einem gewählten Grenzwert bzw. target ist, kann in Abhängigkeit eines maximalen Grenzwerts bzw. max. target wie folgt angegeben werden: S = (max. target)/target. Mithin ist die Wahrscheinlichkeit einen Hash-Wert zu erhalten, welcher kleiner gleich dem gewählten Grenzwert ist, für das zuvor gegebene Beispiel: 2⁻³²/S. Als Beispiel sei ein Computersystem mit einer bestimmten Hashrate betrachtet, welches im Durchschnitt alle x·Sek. einen Hash-Wert findet, welcher kleiner gleich dem gewählten Grenzwert ist. Soll das Computersystem anstelle aller x·Sek. im Durchschnitt alle y·Sek. einen Treffer erzielen, so kann die Schwierigkeit entsprechend angepasst werden: S_{y}=(x/y)·S. Entsprechende Anpassungen der Schwierigkeit können auch dazu verwendet werden die Trefferrate bei Veränderungen des Computersystems, z.B. Veränderungen der Rechenleistung durch Erhöhen oder Verringern der Anzahl an Blockchain-Servern, konstant zu halten. Wird die Schwierigkeit so angepasst, dass alle y·Sek. ein Treffer erzielt wird, kann die Hashrate R des Computersystems wie folgt parametrisiert werden: R = (2³²·S)/(y·Sek.).

Eine Blockchain kann beispielsweise auch in Form einer privaten Blockchain implementiert werden, wobei nur eine ausgewählte Gruppe von Teilnehmern eine Berechtigung zum Hinzufügen gültiger Blöcke besitzt. Eine entsprechende Berechtigung kann beispielsweise mittels einer Signatur unter Verwendung eines privaten kryptografischen Schlüssels nachgewiesen werden. Der private kryptografische Schlüssel kann zu einem asymmetrischen Schlüsselpaar gehören, zu welchem auch ein öffentlicher kryptografischer Schlüssel gehört, mit dem die Signatur geprüft werden kann. Dem asymmetrischen Schlüsselpaar kann zudem beispielsweise ein Zertifikat zugeordnet sein, welches die Berechtigung zum Erzeugen eines gültigen Blocks der Blockchain belegt. Dieses Zertifikat kann ferner einer PKI zugeordnet sein, welche die Authentizität des Zertifikats belegt. Nach einer weiteren Ausführungsform kann beispielsweise für jeden Teilnehmer aus der ausgewählten Gruppe ein öffentlicher Schlüssel in der Blockchain hinterlegt sein, beispielsweise in einem Genesisblock. Anhand dieser öffentlichen Schlüssel kann geprüft werden, ob Signaturen von Blöcken und damit die entsprechenden Blöcke selbst gültig sind.

Ein Konsens kann auch auf andere Weise in einer Blockchain implementiert werden. So kann etwa ein Konsens erreicht werden, indem über eine Aufnahme vorgeschlagener Einträge in die Blockchain abgestimmt wird. Beispielsweise führt jeder Teilnehmer eine eindeutige Liste anderer Teilnehmer, welchen er als Gruppe vertraut. Jeder Teilnehmer kann zusätzliche Einträge vorschlagen, die in einen zusätzlichen Block der Blockchain aufgenommen werden sollen. Über die Aufnahme und damit die Anerkennung der Gültigkeit der vorgeschlagenen Einträge wird abgestimmt. So stimmt beispielsweise jeder Teilnehmer nur über diejenigen Vorschläge ab, welche von Teilnehmer seiner Liste stammen. Mit anderen Worten werden für die Entscheidung, ob ein Vorschlag für einen zusätzlichen Eintrag als gültig anerkannt wird, d.h. ob bezüglich der Gültigkeit dieses Eintrages ein Konsens zwischen den Teilnehmern besteht, nur die Stimmen derjenigen Teilnehmer berücksichtig, die von der Liste desjenigen Teilnehmers umfasst sind, der den entsprechenden Vorschlag macht. Damit ein Vorschlag für einen Eintrag als gültig angenommen wird, muss ein bestimmter Minimumanteil an stimmberechtigten Teilnehmern mit Ja stimmen, beispielsweise 80%. Alle vorgeschlagenen Einträge, die dieses Kriterium erfüllen werden in die Blockchain aufgenommen. Eine solche Abstimmung kann mehrere Runden umfassen. Alle anderen Vorschläge, die das zuvor genannte Kriterium nicht erfüllen, werden verworfen oder bei der Abstimmung über den nächsten Block der Blockchain erneut zur Abstimmung gestellt. Die zuvor genannten Listen stellen Untergruppen des Blockchain-Netzwerks dar, denen der Teilnehmer, welcher die jeweilige Liste führt, als Gruppe insgesamt traut, ohne dass dies erfordert, dass er jedem einzelnen Teilnehmer der Liste traut. Ein Beispiel für ein solches Konsensverfahren bietet der Ripple Protokoll Konsens Algorithmus (David Schwartz et al.: "The Ripple Protocol Consensus Algorithm", Ripple Labs Inc., 2014, https://ripple.com/files/ripple_consensus_whitepaper.pdf).

Beispielsweise kann es sich bei der Blockchain um eine private oder öffentliche Blockchain handeln. Beispielsweise handelt es sich um eine Bitcoin-, Litecoin- oder Ethereum-Blockchain.

Ein "Programmmodul" bezeichnet hier ein eigenständiges Programm, welches in einer Blockchain gespeichert ist. Das Programmmodul kann dazu konfiguriert sein das Erstellen von dem Programmmodul zugeordneten Einträgen in der Blockchain zu steuern. Das Programmodul kann in einem Block der Blockchain oder über mehrere Blöcke der Blockchain verteilt gespeichert sein. Jedem Fahrzeug ist beispielsweise ein individuelles Programmmodul zugeordnet. Bei der Blockchain handelt es sich beispielsweise um eine spezielle Fahrzeugblockchain. Bei einem Programmmodul kann es sich beispielsweise um einen "smart contract" handeln, wie er beispielsweise in der Open Source Ethereum Blockchain implementierbar ist.

Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Unter einem "Zertifikat" wird hier ein digitales Zertifikat verstanden, welches auch als Public-Key-Zertifikat bezeichnet wird. Durch solche Zertifikate basierend auf asymmetrischen Schlüsselpaaren wird eine so genannte Public Key Infrastructure (PKI) realisiert. Bei einem solchen Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Ein Zertifikat kann beispielsweise einen öffentlichen Schlüssel beinhalten und signiert sein. Alternativ sind auch Zertifikate basierend auf zero-knowledge Kryptosystemen möglich. Beispielsweise kann das Zertifikat dem Standard X.509 oder einem anderen Standard entsprechen. Beispielsweise handelt es sich bei dem Zertifikat um ein CV-Zertifikat oder auch Card Verifiable Certificate (CVC). Eine Implementierung von solchen CVCs ist beispielsweise in der ISO/IEC 7816-8 spezifiziert.

Die PKI stellt ein System zum Ausstellen, Verteilen und Prüfen digitaler Zertifikate. Ein digitales Zertifikat dient in einem asymmetrischen Kryptosystem dazu die Authentizität eines öffentlichen Schlüssels und seinen zulässigen Anwendungs- und Geltungsbereich zu bestätigen. Das digitale Zertifikat ist selbst durch eine digitale Signatur geschützt, deren Echtheit mit dem öffentlichen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikats, des sogenannten Wurzelzertifikats, und des durch dieses Zertifikat zertifizierten Schlüssels, müssen sich die Teilnehmer der PKI ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Digitale Zertifikate sind bei der Absicherung elektronischer Kommunikation durch asymmetrische kryptografische Verfahren ein bewährtes Mittel um Berechtigungen nachzuweisen. Zertifikate sind strukturierte Daten, die die Authentizität und/oder weitere Eigenschaften/Berechtigungen des Eigentümers eines öffentlichen Schlüssels (Signaturprüfschlüssel) dokumentieren und durch eine unabhängige, glaubwürdige Instanz (Zertifizierungsdienstanbieter/ZDA), im Allgemeinen die das Zertifikat zuteilende Zertifizierungsstelle, bestätigen. Zertifikate werden in der Regel einem breiten Personenkreis zur Verfügung gestellt um diesem eine Prüfung elektronischer Signaturen auf Authentizität und Gültigkeit zu ermöglichen.

Ein Zertifikat kann einer elektronischen Signatur zugeordnet sein, wenn der zu dem öffentlichen Schlüssel gehörende private Schlüssel zur Generierung der zu prüfenden elektronischen Signatur verwendet wurde. Dadurch, dass ein ZDA ein Zertifikat in Assoziation mit einem öffentlichen Schlüssel der Allgemeinheit zur Verfügung stellt, ermöglicht ein ZDA den Nutzern asymmetrischer Kryptosysteme den öffentlichen Schlüssel einer Identität, beispielsweise einer Person, einer Organisation, einem Energie- oder Computersystem, zuzuordnen.

Asymmetrische Schlüsselpaare werden für eine Vielzahl von Kryptosystemen eingesetzt und spielen auch bei der Signatur elektronischer Dokumente eine wichtige Rolle. Ein asymmetrisches Schlüsselpaar besteht aus einem öffentlichen Schlüssel, welcher zur Ver- und/oder Entschlüsselung von Daten verwendet wird und an Dritte, beispielsweise an einen Dienstanbieter, weitergegeben werden darf sowie einem privaten Schlüssel, welcher zur Ver- und/oder Entschlüsselung von Daten verwendet wird und im Regelfall geheim gehalten werden muss. Der öffentliche Schlüssel ermöglicht es jedermann, Daten für den Inhaber des privaten Schlüssels zu verschlüsseln, digitale Signaturen von dessen Dokumenten zu prüfen oder ihn zu authentifizieren. Ein privater Schlüssel ermöglicht es seinem Inhaber, mit dem öffentlichen Schlüssel verschlüsselte Daten zu entschlüsseln oder digitale Signaturen für elektronische Dokumente zu erstellen. Eine mit einem privaten Schlüssel erstellte Signatur kann mit dem zugehörigen öffentlichen Schlüssel verifiziert werden.

Digitale Signaturen werden zum sicheren elektronischen Datenaustausch, beispielsweise im Internet, eingesetzt und ermöglichen die Prüfung von Identitäten und/oder Berechtigungen und der Unverfälschtheit der ausgetauschten Daten. Um dies zu gewährleisten, ist in der Regel eine Public-Key-Infrastruktur notwendig, die die Gültigkeit der verwendeten Schlüssel durch Zertifikate bestätigt.

Die Erstellung einer digitalen Signatur, im Folgenden auch lediglich als "Signatur" bezeichnet, ist ein kryptografisches Verfahren, bei dem zu beliebigen Daten, zum Beispiel einem elektronischen Dokument, ein weiterer Datenwert, welcher als "Signatur" bezeichnet wird, berechnet wird. Die Signatur kann zum Beispiel ein verschlüsselter Hashwert des elektronischen Dokumentes sein, insbesondere ein mit einem privaten Schlüssel eines einem Zertifikat zugeordneten kryptografischen Schlüsselpaares verschlüsselter Hashwert. Ein entsprechendes Verschlüsseln eines Hashwerts wird mithin als Signieren des Hashwerts bezeichnet. Die Besonderheit einer solchen Signatur besteht darin, dass deren Urheberschaft und Zugehörigkeit zu einer bestimmten Person oder Instanz durch jeden Dritten geprüft werden kann.

Unter einer digitalen Signatur wird hier auch ein digitales Siegel verstanden, welches nicht einer natürlichen Person, sondern einer juristischen Person zugeordnet ist. Ein digitales Siegel dient somit nicht der Abgabe einer Willenserklärung einer einzelnen Person, sondern einer Institution als Herkunftsnachweis. Es kann somit den Ursprung und die Unversehrtheit digitaler Dokumente sicherstellen und nachweisen, dass diese von einer bestimmten juristischen Person stammen.

Unter einem "Speicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten verstanden. Ein nichtflüchtiger Speicher kann als nichtänderbarere Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem "flüchtigen elektronischen Speicher" wird hier ein Speicher zur vorübergehenden Speicherung von Daten, welcher dadurch gekennzeichnet ist, dass alle Daten nach dem Abschalten der Energieversorgung verloren gehe. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem "geschützten Speicherbereich" wird hier ein Bereich eines elektronischen Speichers verstanden, auf den ein Zugriff, das heißt ein Lesezugriff oder ein Schreibzugriff, nur über einen Prozessor des entsprechenden elektronischen Geräts möglich ist. Nach Ausführungsformen ist der Zugriff von dem mit dem Speicher gekoppelten Prozessor nur dann möglich, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Unter einer "Schnittstelle" wird hier eine Schnittstelle verstanden, über die Daten empfangen und gesendet werden können, wobei die Kommunikationsschnittstelle kontaktbehaftet oder kontaktlos konfiguriert sein kann. Bei der Kommunikationsschnittstelle kann es sich um eine interne Schnittstelle oder um eine externe Schnittstelle handeln, welche beispielsweise mittels eines Kabels oder kabellos mit einem zugeordneten Gerät verbunden ist.

Eine Kommunikation kann beispielsweise über ein Netzwerk erfolgen. Unter einem "Netzwerk" wird hier jedes Übertragungsmedium mit einer Anbindung zur Kommunikation verstanden, insbesondere eine lokale Verbindung oder ein lokales Netzwerk, insbesondere ein Local Area Network (LAN), ein privates Netzwerk, insbesondere ein Intranet, und ein virtuelles privates Netzwerk (Virtual Private Network - VPN). Beispielsweise kann ein Computersystem eine Standardfunkschnittstelle zur Anbindung an ein WLAN aufweisen. Ferner kann es sich um ein öffentliches Netzwerk, wie beispielsweise das Internet handeln. Je nach Ausführungsform kann diese Verbindung auch über ein Mobilfunknetz hergestellt werden.

Unter einem "Mobilfunknetzwerk" wird hier und im Folgenden ein digitales zellulares Mobilfunknetzwerk verstanden, welches nach einem Mobilfunkstandard wie zum Beispiel GSM, UMTS, LTE, CDMA oder einem anderen Standard aufgebaut sein kann.

Nach Ausführungsformen ist der zweite private kryptografische Schlüssel mit einem in der Blockchain identifizierten dritten öffentlichen kryptografischen Schlüssel eines dritten asymmetrischen Schlüsselpaars verschlüsselt. Der maschinenlesbare Code ermöglicht es mit dem verschlüsselten zweiten privaten kryptografischen Schlüssel einem Besitzer eines dritten privaten kryptografischen Schlüssels des dritten asymmetrischen Schlüsselpaars, Leseanfragen zum Lesen von Fahrzeugdaten der Fahrzeugbescheinigung aus der Blockchain mit dem zweiten privaten kryptografischen Schlüssel gültig zu signieren.

Ausführungsformen können den Vorteil haben, dass sie eine sichere Bereitstellung des zweiten privaten kryptografischen Schlüssels ermöglichen. Beispielsweise handelt es sich bei dem dritten privaten Schlüssel um einen Schlüssel, welcher sich in der Verfügungsgewalt der Polizei, des Kraftfahrzeugbundesamtes und/oder der Zulassungsbehörden befindet. Unter Verwendung des dritten privaten Schlüssels kann können die Angaben der Fahrzeugbescheinigung somit durch eine dazu Berechtigte Institution überprüft werden. Der Fahrzeugeigentümer kann unter Verwendung seines ersten privaten Schlüssels die Fahrzeugdaten aus der Blockchain auslesen.

Nach Ausführungsformen ist das zweite asymmetrische Schlüsselpaar identisch mit dem ersten asymmetrischen Schlüsselpaar.

Nach Ausführungsformen ist das zweite asymmetrische Schlüsselpaar ein fahrzeugbescheinigungsindividuelles Schlüsselpaar, wobei die Ausgabeanweisung den zweiten öffentlichen kryptografischen Schlüssel umfasst und wobei der zweite öffentliche kryptografische Schlüssel, im Fall einer gültigen Signatur, in der Blockchain gespeichert wird. Ausführungsformen können den Vorteil haben, dass jeder Fahrzeugbescheinigung ein individueller fahrzeugbescheinigungsindividuelles Schlüsselpaar zum Prüfen der von der Fahrzeugbescheinigung bereitgestellten Fahrzeugdaten implementiert wird.

Nach Ausführungsformen umfasst das Ausgeben ein Ausdrucken der Fahrzeugbescheinigung unter Verwendung eines Druckers. Ausführungsformen können den Vorteil haben, dass die ausgedruckte Fahrzeugbescheinigung unabhängig von der technischen Infrastruktur verwendet werden kann.

Nach Ausführungsformen umfasst das Ausgeben ein Anzeigen der Fahrzeugbescheinigung auf einem Display eines mobilen tragbaren Telekommunikationsgeräts.

Ausführungsformen können den Vorteil haben, dass bei einer Kontrolle die Fahrzeugbescheinigung auf dem Display des mobilen tragbaren Telekommunikationsgeräts vorgezeigt werden kann.

Nach Ausführungsformen umfasst das Verfahren ferner:
- Erfassen des maschinenlesbaren Codes der ausgegebenen Fahrzeugbescheinigung mit einem Lesegerät eines Prüfcomputersystems,
- Erstellen der Leseanfrage zum Lesen von Fahrzeugdaten der Fahrzeugbescheinigung aus der Blockchain unter Verwendung des erfassten maschinenlesbaren Codes, wobei die Leseanfrage den von dem maschinenlesbaren Code bereitgestellten Identifikator des Programmmoduls umfasst,
- Signieren der Leseanfrage mit dem von dem maschinenlesbaren Code bereitgestellten zweiten privaten kryptografischen Schlüssel,
- Senden der signierten Leseanfrage durch das Prüfcomputersystem über ein zweites Netzwerk an einen Blockchain-Server des Blockchain-Netzwerks,
- Empfang der signierten Leseanfrage durch den Blockchain-Server,
- Ausführen dritter Programminstruktionen des durch die Leseanfrage identifizierten Programmmoduls durch den Blockchain-Server, wobei das Ausführen der dritten Programminstruktionen ein Prüfen der Signatur der Leseanfrage unter Verwendung des von dem Programmmodul identifizierten zweiten öffentlichen kryptografischen Schlüssels umfasst und, im Falle einer gültigen Signatur, ein Auslesen der zum Lesen angefragten Fahrzeugdaten der Fahrzeugbescheinigung,
- Senden der ausgelesenen Fahrzeugdaten durch den Blockchain-Server an das Prüfcomputersystem,
- Empfangen der ausgelesenen Fahrzeugdaten durch das Prüfcomputersystem,
- Ausgeben der ausgelesenen Fahrzeugdaten durch das Prüfcomputersystem.

Ausführungsformen können den Vorteil haben, dass ein effizientes und sicheres Verfahren zum Überprüfen von Angeben in einer Fahrzeugbescheinigung unter Verwendung der Blockchain ermöglicht wird.

Nach Ausführungsformen umfasst das Verfahren ferner ein Entschlüsseln des von dem maschinenlesbaren Code in verschlüsselter Form bereitgestellten zweiten privaten kryptografischen Schlüssel mit dem dritten privaten Schlüssel.

Nach Ausführungsformen umfasst das Verfahren:
- Erstellen einer ersten Transaktionsanweisung zur Transaktion des Programmmoduls von einer dem ersten Fahrzeugeigentümer zugeordneten ersten Adresse, welche dem ersten asymmetrischen Schlüsselpaar zugeordnet ist, an eine einem zweiten Fahrzeugeigentümer zugeordneten zweiten Adresse,
- Signieren der ersten Transaktionsanweisung durch das Computersystem des ersten Fahrzeugeigentümers mit dem ersten privaten kryptografischen Schlüssel,
- Senden der signierten ersten Transaktionsanweisung durch das Computersystem des ersten Fahrzeugeigentümers über ein drittes Netzwerk an einen Blockchain-Server des Blockchain-Netzwerks,
- Empfangen der ersten Transaktionsanweisung durch den Blockchain-Server,
- Ausführen vierter Programminstruktionen des durch die Transaktionsanweisung identifizierten Programmmoduls durch den Blockchain-Server, wobei das Ausführen der vierten Programminstruktionen ein Prüfen umfasst, ob die erste Transaktionsanweisung mit dem der ersten Adresse zugeordneten privaten kryptografischen Schlüssel gültig signiert ist, und, im Falle einer gültigen Signatur, Hinzufügen der ersten Transaktionsanweisung zu einem zusätzlichen Block für die Blockchain.

Ausführungsformen können den Vorteil haben, dass mit der Übertragung des Fahrzeugs die Berechtigung zum Ausgeben von Fahrzeugbescheinigungen auf den neuen Fahrzeugeigentümer übergeht.

Nach Ausführungsformen umfasst das Fahrzeug ein Fahrzeugcomputersystem. Ferner umfasst das Fahrzeugcomputersystem einen Speicher. In dem Speicher, beispielsweise in einem geschützten Speicherbereich des Speichers, ist ein vierter privater kryptografischer Schlüssel eines dem Fahrzeug zugeordneten vierten asymmetrischen Schlüsselpaars gespeichert. Das Fahrzeugcomputersystem umfasst zudem eine Mobilfunkschnittstelle zur Kommunikation über ein Mobilfunknetzwerk.

Die Blockchain umfasst in einem Block ein Programmmodul mit ersten Programminstruktionen, welches dem Fahrzeug zugeordnet ist. Durch Ausführen der ersten Programminstruktionen wird ein dem Programmmodul zugeordneter Eintrag mit Fahrzeugdaten des Fahrzeugs in der Blockchain erzeugt. Ferner identifizier das Programmmodul einen vierten öffentlichen kryptografischen Schlüssel des dem Fahrzeug zugeordneten asymmetrischen Schlüsselpaars.

Das Verfahren zum manipulationssicheren Speichern von Fahrzeugdaten des Fahrzeugs umfasst:
- Empfangen von Fahrzeugdaten des Fahrzeugs durch das Fahrzeugcomputersystem,
- Erstellen eines zweiten Datensatzes zum Eintragen in die Blockchain, wobei der zweite Datensatz die Fahrzeugdaten des Fahrzeugs umfasst und das dem Fahrzeug zugeordnete Programmmodul identifiziert,
- Signieren des zweiten Datensatzes durch das Fahrzeugcomputersystem mit dem privaten vierten kryptografischen Schlüssel,
- Senden des signierten zweiten Datensatzes durch das Fahrzeugcomputersystem über das Mobilfunknetzwerk an einen Blockchain-Server einer Mehrzahl von Blockchain-Servern eines Blockchain-Netzwerks, wobei die Blockchain-Server dazu konfiguriert sind, zusätzliche Blöcke für die Blockchain zu erstellen,
- Empfangen des signierten zweiten Datensatzes durch den Blockchain-Server,
- Ausführen der ersten Programminstruktionen des durch den zweiten Datensatz identifizierten Programmmoduls durch den Blockchain-Server, wobei das Ausführen der ersten Programminstruktionen ein Prüfen der Signatur des zweiten Datensatzes unter Verwendung des von dem Programmmodul identifizierten vierten öffentlichen kryptografischen Schlüssels umfasst und, im Falle einer gültigen Signatur, ein Hinzufügen eines ersten Eintrag mit dem signierten zweiten Datensatz und einem ersten Zeitstempel zu einem zusätzlichen Block für die Blockchain.

Der Wert eines gebrauchten Fahrzeugs und damit auch der auf dem Gebrauchtwagenmarkt erzielbare Preis richtet sich maßgeblich nach dem Zustand des zu verkaufenden Fahrzeugs. Den tatsächlichen Zustand eines Fahrzeugs zu ermitteln gestaltet sich jedoch unter Umstanden schwierig. Insbesondere der Verschleiß einzelner Komponente und die sich daraus ergebende Wahrscheinlichkeit für Ausfälle und notwendige Reparaturen lässt sich anhand des äußeren Erscheinungsbilds der entsprechenden Komponenten bisweilen nur schwer abschätzen. Eine verlässliche Bewertung wäre gegebenenfalls auf Basis eingehender Untersuchungen möglich, welche sich jedoch im Allgemeinen aufgrund des hohen Aufwands und den damit einhergehenden Kosten als unwirtschaftlich erweisen.

Für eine einfache und effiziente Bewertung werden daher Hilfsgrößen zur Hand gezogen, um den Zustand eines entsprechenden Fahrzeugs abzuschätzen. Eine weitverbreitete indirekte Hilfsgröße zum Bewerten des Zustands eines Fahrzeugs ist dessen Kilometerstand. Mithin hat der Kilometerstand direkten Einfluss auf den Wiederverkaufswert des Fahrzeugs.

Um auf dem Gebrauchtwagenmarkt einen höheren Gewinn zu erzielen, kommt es daher vor, dass Kilometerstände an Fahrzeugen manipuliert und eine geringere Laufleistung vorgetäuscht wird. Grundsätzlich können aus dem Zustand eines Fahrtzeugs zwar Rückschlüsse auf den ungefähren Kilometerstand gezogen werden, aber gerade diesen Zustand gilt es ja zu ermitteln und zu bewerten. Je älter das Fahrzeug und je erheblicher die Diskrepanzen zwischen manipuliertem Kilometerstand und tatsächlichem Kilometerstand ist, desto leichter mögen sich offensichtliche Unstimmigkeiten noch anhand des äußeren Erscheinungsbilds des Fahrzeugs erkennen lassen. Je jünger jedoch das Fahrzeug und je weniger gravierenden die Abweichungen zum tatsächlichen Kilometerstand sind, desto schwieriger gestaltet es sich die Manipulation zu erkennen.

Ausführungsformen können den Vorteil haben, dass sich in einfacher Weise ein manipulationssicheres Speichern von Fahrzeugdaten eines Fahrzeugs implementieren lässt, welche eine hohe Fälschungssicherheit aufweist. Die sich daraus ergebende fälschungssichere Fahrzeughistorie kann als Nachweis dienen, dass es zu keinen Unregelmäßigkeiten gekommen ist. Mithin lässt sich so ein höherer Wiederverkaufswert für das Fahrzeug erzielen. Dabei kann die protokollierte Fahrzeughistorie nicht nur dazu dienen zu belegen, dass es zu keinen Unregelmäßigkeiten bei der Erfassung von Fahrzeugdaten, wie etwa dem Kilometerstand, gekommen ist. Darüber hinaus lässt sich anhand der Fahrzeughistorie beispielsweise auch ablesen, ob es zu besonderen Ereignissen, wie etwa Unfällen oder Funktionsstörungen gekommen ist.

Die manipulationssicher gespeicherten Fahrzeugdaten können ferner für eine aktuelle Fehlerdiagnostik herangezogen werden. Tritt ein Problem auf, kann geprüft werde, ob dies bereits früher einmal aufgetreten ist bzw. ob sich aus den gespeicherten Fahrzeugdaten Hinweise auf die mögliche Ursache des beobachteten Problems ergeben.

Unter Fahrzeugdaten werden hierbei sowohl Zustandsdaten des Fahrzeugs als auch Kennungen und rechtliche Zuordnungen verstanden.

Nach Ausführungsformen umfasst das Fahrzeug zumindest einen Sensor zum Erfassen von Fahrzeugdaten des Fahrzeugs. Die Fahrzeugdaten des Fahrzeugs werden durch das Fahrzeugcomputersystem von dem zumindest einen Sensor empfangen. Nach Ausführungsformen umfasst das Fahrzeug eine Mehrzahl von Sensoren zum Erfassen von Fahrzeugdaten des Fahrzeugs. Ausführungsformen können den Vorteil haben, dass die fahrzeugeigene Sensorik genutzt werden kann, um den Zustand des Fahrzeugs zu erfassen. Bei dem Zustand des Fahrzeugs kann beispielsweise beschrieben werden durch Angaben zu Kenngrößen des aktuellen Leistungsvermögens des Fahrzeugs, Kilometerstand des Fahrzeugs, Fehlermeldungen, Ergebnisse vordefinierter Prüfprotokolle und/oder Kennungen von Fahrzeugkomponenten.

Kenngrößen des aktuellen Leistungsvermögens können zum Beispiel Drehzahl, Geschwindigkeit, Kraftstoffverbrauch, Abgaswerte, Getriebegang sein. Fehlermeldungen können von dem Fahrzeugcomputersystem unter Verwendung eines Fehlererkennungsprotokolls identifizierte Fehlfunktionen, d.h. Abweichungen durch Sensoren erfasster Messwerte von vordefinierten Werten oder Wertebereichen, angeben. Ein vordefiniertes Prüfprotokoll kann einzelne Komponenten abfragen und auf Basis der erhaltenen oder nicht erhaltenen Antworten eine Liste erstellen, welche nicht oder nicht wie erwartetet funktionierende Komponenten identifiziert.

Beispielsweise fragt das Fahrzeugcomputersystem Kennungen von Komponenten der Fahrzeugelektronik ab, wie etwa Serien-, Typ- und/oder Herstellerkennungen, die in den Komponenten der Fahrzeugelektronik gespeichert sind. Nach Ausführungsformen kann aus den Kennungen der einzelnen Komponenten eine Kennung des Fahrzeugs berechnet werden. Diese Kennung ist ein Charakteristikum dieses Fahrzeugs, welches die konkrete Zusammenstellung seiner Komponenten und damit den Zustand des Fahrzeugs definiert. Es handelt sich gewissermaßen um einen "Fingerabdruck" des Fahrzeugs.

Nach Ausführungsformen sind in die Kennungen der Komponenten der Fahrzeugelektronik jeweils in einem Speicher der jeweiligen Komponente, beispielsweise in einem geschützten Speicherbereich des Speichers, gespeichert und werden kryptografisch gesichert an das Fahrzeugcomputersystem übertragen.

Unter einem "Sensor" wird hier ein Element zum Erfassen von Messdaten verstanden. Messdaten sind Daten, welche physikalische oder chemische Eigenschaften eines Messobjekts, wie beispielsweise Wärmemenge, Temperatur, Feuchtigkeit, Druck, Schallfeldgrößen, Helligkeit, Beschleunigung, pH-Wert, lonenstärke, elektrochemisches Potential, und/oder dessen stoffliche Beschaffenheit qualitativ oder quantitativ wiedergeben. Messdaten werden mittels physikalischer oder chemischer Effekte erfasst und in ein elektronisch weiterverarbeitbares elektrisches Signal umgeformt. Ferner können Messdaten Zustände und/oder Zustandsänderung von elektronischen Geräten durch Außeneinflüsse und/oder in Folge einer Benutzung durch einen Nutzer wiedergeben.

Sensoren zum Erfassen von Fahrzeugdaten in einem Fahrzeug können beispielsweise umfassen: Kurbelwellensensor, Nockenwellensensor, Luftmassenmesser, Lufttemperatursensor, Kühlwassertemperatursensor, Drosselklappensensor, Klopfsensor, Getriebesensor, Wegstreckensensor, Getriebesensor, Niveausensor, Bremsverschleißsensor, Achslastsensor, Lenkwinkelsensor. Diese Sensoren erfassen und überwachen das Fahrverhalten des Fahrzeugs. Aus Abweichungen von Sollwerten und/oder einem Auftreten bestimmter Muster lassen sich Fehlfunktionen erkennen und identifizieren. Teils lassen sich auch konkrete Fehlerursachen, wie ausgefallene Komponenten des Fahrzeugs, identifizieren. Sensoren können zudem auch Kennungen elektronischer Komponenten, die in das Fahrzeug eingebaut sind abfragen, um deren Identität zu prüfen.

Nach Ausführungsformen umfassen die Fahrzeugdaten den Kilometerstand des Fahrzeugs. Ausführungsformen können den Vorteil haben, dass der Kilometerstand eine einfach zu erfassende Kenngröße zur Erfassung des Zustands eines Fahrzeugs darstellt. Insbesondere ist der Kilometerstand bei einem Verkauf eines gebrauchten Fahrzeugs eine maßgebliche Größe zur Bewertung des Fahrzeugs und zur Ermittlung eines Kaufpreises. Insbesondere wird durch die Protokollierung der Kilometerstände des Fahrzeugs mit Zeitstempeln in der Blockchain eine fälschungssichere Zusammenfassung der zeitlichen Entwicklung des Kilometerstands bereitgestellt. Bei einer geeigneten Wahl der Protokollierungsintervalle kann somit sichergestellt werden, dass es zu keinen maßgeblichen Manipulationen gekommen ist. Wird der Kilometerstand derart manipuliert, dass er kleiner als der zuletzt gespeicherte Kilometerstand ist, wird die Manipulation bei Prüfung der Blockchain-Einträge leicht erkennbar. Ferner lässt sich an der Entwicklung der der Kilometerstände die Nutzungshistorie des Fahrzeugs nachvollziehen. Wurde es regelmäßig bzw. gleichmäßig genutzt oder unregelmäßig genutzt, d.h. gab es längere Ruhephasen und Zeiten sehr intensiver Nutzung, welche auf eine erhöhte Belastung des Fahrzeugs hindeuten können.

Über die Protokollierung der Kilometerstände lässt sich beispielsweise auch ein fälschungssicheres Fahrtenbuch in einfacherer Weise implementieren. Hierfür wird der Kilometerstand zumindest jeweils bei Beendigung einer Fahrt, beispielsweise auf ein Ausschalten der Zündung durch den Fahrzeugführer hin protokolliert. Zusätzlich kann auch der Kilometerstand zu Beginn der Fahrt, z.B. bei Einschalten der Zündung, mitprotokolliert werden. Ferner können der Ausgangs- und/oder Zielort der Fahrt automatisch miterfasst werden. Informationen über den aktuellen Aufenthaltsort werden beispielsweise durch ein Navigationssystem des Fahrzeugs bereitgestellt. Nach Ausführungsformen fordert das Fahrzeug den Fahrer schließlich auf seinen Namen und sowie den Zweck der Fahrt anzugeben. Die Eingabe kann über eine entsprechende Eingabeschnittstelle des Fahrzeugs erfolgen. Beispielsweise wird mittels Spracherkennung erfasst, was der Fahrer mündlich auf die Aufforderung hin erwidert. Nach Ausführungsformen authentifiziert sich der Nutzer gegenüber dem Fahrzeug mit einem ID-Token. Die als Eintrag des Fahrtenbuchs zusammengefassten Angaben werden beispielweise vollständig oder zumindest teilweise verschlüsselt an die Blockchain übertragen und dort eingetragen. Die Verschlüsselung erfolgt beispielsweise mit einem privaten oder öffentlichen kryptografischen Schlüssel eines asymmetrischen Schlüsselpaars, welches dem Fahrtenbuch zugeordnet ist. Somit kann nur wer über den zweiten Schlüssel des asymmetrischen Schlüsselpaars, d.h. den öffentlichen bzw. privaten kryptografischen Schlüssel verfügt, den Inhalt der Fahrtenbucheinträge im Entschlüsseln und im Klartext lesen. Nach Ausführungsformen werden Zeitstempel und Kilometerstände unverschlüsselt gespeichert, während persönliche Daten wie Ausgangs- und/oder Zielort, Namen des Fahrers oder Zweck der Fahrt verschlüsselt werden.

Nach Ausführungsformen umfassen die Fahrzeugdaten eine Störmeldung des Fahrzeugs. Ausführungsformen können den Vorteil haben, dass anhand der Blockchain nachvollzogen werden kann, wann welche Störungen aufgetreten sind. Somit lässt sich aus der Blockchain ohne viel Aufwand ablesen, ob das Fahrzeug in der Vergangenheit störanfällig war, welche Fehler aufgetreten sind und es lassen sich beim Auftreten neuer Fehler mögliche Zusammenhänge mit bereits in der Vergangenheit aufgetretenen Problemen erkennen und somit Fehlerursachen besser identifizieren.

Nach Ausführungsformen umfassen die Fahrzeugdaten eine Software-ID eines Softwareupdates des Fahrzeugcomputersystems. Ausführungsformen können den Vorteil haben, dass das nachvollzogen werden kann, wann welche Software bzw. Softwareversion auf dem Fahrzeugcomputersystem installiert war. Da in modernen Fahrzeugen die Fahrzeugsoftware weiterreichenden Einfluss auf die Steuerung der technischen Komponenten, wie etwa den Motor, besitzt, kann eine Identifikation der Software wichtige Informationen zum Zustand und das Funktionsverhalten des Fahrzeugs liefern.

Nach Ausführungsformen umfassen die Fahrzeugdaten eine einer Mehrzahl von Elektronikkomponenten des Fahrzeugs zugeordnete Kennung. Ausführungsformen können den Vorteil haben, dass die Kennung eine Kombination von Elektronikkomponenten kennzeichnet. Diese Kennung kann beispielsweise aus Serien-, Typ- und/oder Herstellerkennungen, die in den Komponenten der Fahrzeugelektronik gespeichert sind, berechnet werden. Es kann sich bei dieser Kennung somit beispielsweise um eine dem individuellen Fahrzeug zugeordnete Kennung handeln, welche ein Charakteristikum des Fahrzeugs darstellt, das durch die konkrete Kombination der Elektronikkomponenten definiert ist. Mit anderen Worten kann die Kombination der Elektronikkomponenten eine Art "Fingerabdruck" des Fahrzeugs darstellen.

Anhand der Kennung können sich insbesondere Änderung in der Zusammensetzung der Elektronikkomponenten des Fahrzeugs erkennen lassen. Beispielsweise umfasst jede der Elektronikkomponenten eine eigene Kennung. Hierbei kann es sich beispielsweise um eine individuelle Kennung handeln. Wird eine Komponente entfernt und/oder ausgetauscht ändert sich die Kombination der Elektronikkomponenten und damit die zugeordnete Kennung. Somit können die Elektronikkomponenten selbst als Sensoren zum Erfassen einer Zusammensetzung von Elektronickomponenten in dem Fahrzeug verstanden werden. Nach Ausführungsformen umfassen die Fahrzeugdaten eine Mehrzahl von Kennungen einzelner Elektronikkomponenten. Nach Ausführungsformen umfassen die Fahrzeugdaten im Falle einer Änderung einer Kennung, die einer Mehrzahl von Elektronikkomponenten zugeordnet ist, Kennungen einzelner Elektronikkomponenten der Mehrzahl von Elektronickomponenten, welche sich geändert haben.

Nach Ausführungsformen empfängt das Fahrzeugcomputersystems die Fahrzeugdaten von einem Computersystem einer Werkstatt. Die von dem Computersystem der Werkstatt empfangenen Fahrzeugdaten sind signiert mit einem fünften privaten kryptografischen Schlüssel eines der Werkstatt zugeordneten fünften asymmetrischen Schlüsselpaars. Das Verfahren umfasst ferner: Prüfen der Signatur der von der Werkstatt empfangenen Daten unter Verwendung eines fünften öffentlichen kryptografischen Schlüssels des der Werkstatt zugeordneten fünften asymmetrischen Schlüsselpaars und, im Falle einer gültigen Signatur, Verwenden der von der Werkstatt empfangenen Daten zum Erstellen des zweiten Datensatzes. Ausführungsformen können den Vorteil haben, dass zusätzliche Daten zum Zustand des Fahrzeugs von der Werkstatt bereitgestellt und in die Blockchain eingetragen werden können. Diese zusätzlichen Fahrzeugdaten können beispielsweise von der Werkstatt ausgeführte Reparatur- und Wartungsarbeiten betreffen. Beispielsweise wird der Grund einer Reparatur, d.h. der behobene Fehler, sowie die durchgeführten Reparaturmaßnahmen, z.B. ersetzten Fahrzeugteile, angegeben. Nach Ausführungsformen umfassen die Daten Kennungen von ausgebauten sowie von neu eingebauten Fahrzeugteilen. Zudem können die von der Werkstatt bereitgestellten Daten Zustände des Fahrzeugs beschreiben, welche nicht von fahrzeugeigenen Sensoren erfasst werden, wie etwa eine Beschädigung einer Windschutzscheibe durch Steinschlag oder einen Blechschaden.

Zudem können auf diese Weise Daten zu durchgeführten Wartungsarbeiten gemäß einem vordefinierten Serviceplan, auch Wartungsplan genannt, gespeichert werden. Der Serviceplan wird vom Hersteller des Fahrzeugs vorgegeben und kann neben dem Fahrzeugmodell vom Intervall oder der Intensität der Nutzung abhängen. Die Wartung kann dabei insbesondere auf verschiedene Prüfpunkte ausgelegt sein, die auf vermuteten oder erkannten Schwächen beruhen. Unter anderem werden dabei beispielsweise die Abnutzung und die Wahrscheinlichkeit technischer Defekte berücksichtigt. Insbesondere kann die Wartung ein auch ein Softwareupdate umfassen.

Der Serviceplan dient vorwiegend zur Erhaltung der Funktionsfähigkeit und der Betriebssicherheit des Fahrzeugs. Zudem kann die Einhaltung der Serviceintervalle durch autorisierte Werkstätten eine Grundvoraussetzung für die Gewährleistung seitens des Herstellers sein. Anhand der Blockchain lässt sich somit ablesen, ob der Serviceplan eingehalten wurde und/oder welche Maßnahmen im Zuge der Wartung von der Werkstatt durchgeführt wurden.

Nach Ausführungsformen umfasst der zweite Datensatz zusätzlich eine Werkstatt-ID als Ursprung der Fahrzeugdaten. Ausführungsformen können den Vorteil haben, dass das sich eindeutig identifizieren lässt, durch wen welche zusätzlichen Daten zur Verfügung gestellt wurden. Beispielsweise ist so ersichtlich, ob Reparatur und/oder Wartungsarbeiten durch eine autorisierte Werkstatt durchgeführt wurden.

Nach Ausführungsformen umfasst der zweite Datensatz als Werkstatt-ID die Signatur der von dem Computersystem der Werkstatt empfangen Fahrzeugdaten. Ausführungsformen können den Vorteil haben, dass die Identität der Werkstatt durch die Signatur an den zweiten Datensatz gebunden wird und sich diese mittels eines öffentlichen kryptografischen Schlüssels der Werkstatt, welcher einem zum Erstellen der Signatur verwendeten geheimen kryptografischen Schlüssel zugeordnet ist, auf ihre Authentizität hin prüfen lässt.

Nach Ausführungsformen umfassen die von dem Computersystem der Werkstatt empfangenen Fahrzeugdaten Daten über ausgeführte Wartungs- und/oder Reparaturmaßnahmen.

Nach Ausführungsformen umfassen die von dem Computersystem der Werkstatt empfangenen Fahrzeugdaten zumindest eine Fahrzeugteile-ID eines ausgetauschten Fahrzeugteils. Ausführungsformen können den Vorteil haben, dass nachvollzogen werden kann, welche Fahrzeugteil ein Fahrzeug tatsächlich umfasst. Diese Angaben können beispielsweise im Falle von elektronischen Komponenten beispielsweise den Kennungen der Komponenten abgeglichen werden, welche das Fahrzeugcomputersystem erfasst und in der Blockchain speichert. So lassen sich effektive Unstimmigkeiten und mögliche Manipulationen aufdecken.

Nach Ausführungsformen umfasst die Blockchain einen Eintrag mit der Fahrzeug-ID und dem öffentlichen kryptografischen Schlüssel des dem Fahrzeug zugeordneten asymmetrischen Schlüsselpaars. Ausführungsformen können den Vorteil haben, ein leichter Zugriff auf den öffentlichen kryptografischen Schlüssel des Fahrzeugs und eine effiziente Überprüfung der Signatur der Datensätze des Fahrzeugs ermöglicht wird. Somit lassen sich allein auf Basis der Blockchain die Datensätze des Fahrzeugs auf ihre Authentizität hin prüfen.

Nach Ausführungsformen erfolgt das Erstellen des zweiten Datensatzes nach Ablauf eines vordefinierten Zeitintervalls. Ausführungsformen können den Vorteil haben, dass Daten in regelmäßigen Intervallen in die Blockchain eingefügt werden.

Nach Ausführungsformen erfolgt das Erstellen des zweiten Datensatzes auf das Empfangen der Fahrzeugdaten, wenn die Fahrzeugdaten ein vordefiniertes Kriterium erfüllen. Ausführungsformen können den Vorteil haben, dass das Erstellen eines Datensatzes und dessen Einfügen in die Blockchain beispielsweise nutzungs- oder ereignisabhängig erfolgen kann. Ein Datensatz wird beispielsweise auf eine bestimmte Fehlermeldung hin erzeugt und umfasst diese Fehlermeldung ggf. zusammen mit weiteren Sensordaten, aus denen sich der Fahrzeugzustand bei Auftreten der Fehlermeldung ableiten lässt.

Nach Ausführungsformen ist das Kriterium ein Erreichen eines vordefinierten Kilometerstands. Ausführungsformen können den Vorteil haben, dass sich aus den in der Blockchain gespeicherten Daten ablesen lässt, zu welchem Zeitpunkt und in welchen zeitlichen Abständen bestimmte Kilometerstände erreicht wurden. Dies hat den Vorteil, dass die Menge an Blockchain-Einträgen im Falle einer nur geringen Nutzung eines Fahrzeugs ebenfalls entsprechend begrenzt bleibt, wodurch die zum Speichern der Blockchain benötige Speichergröße begrenzt werden kann.

Nach Ausführungsformen identifiziert das Programmmodul den fünften öffentlichen kryptografischen Schlüssel des der Werkstatt zugeordneten fünften asymmetrischen Schlüsselpaars. Zudem ist in einem Speicher des Computersystems der Werkstatt, beispielsweise in einem geschützten Speicherbereich des Speichers, der fünfte private kryptografische Schlüssel des der Werkstatt zugeordneten fünften asymmetrischen Schlüsselpaars gespeichert. Ferner umfasst das Computersystem der Werkstatt eine Kommunikationsschnittstelle zur Kommunikation über ein drittes Kommunikationsnetzwerk. Das Verfahren umfasst ferner:
- Erstellen eines dritten Datensatzes zum Eintragen in die Blockchain durch das Computersystem der Werkstatt, wobei der dritte Datensatz Fahrzeugdaten des Fahrzeugs umfasst und das dem Fahrzeug zugeordnete Programmmodul identifiziert,
- Signieren des dritten Datensatzes durch das Computersystem der Werkstatt mit dem fünften privaten kryptografischen Schlüssel der Werkstatt,
- Senden des signierten dritten Datensatzes durch das Computersystem der Werkstatt über das dritte Kommunikationsnetzwerk an einen Blockchain-Server des Blockchain-Netzwerks,
- Empfangen des signierten dritten Datensatzes durch den Blockchain-Server,
- Ausführen der ersten Programminstruktionen des durch den dritten Datensatz identifizierten Programmmoduls durch den Blockchain-Server, wobei das Ausführen der ersten Programminstruktionen ein Prüfen der Signatur des dritten Datensatzes unter Verwendung des von dem Programmmodul identifizierten fünften öffentlichen kryptografischen Schlüssels des der Werkstatt zugeordneten asymmetrischen Schlüsselpaars umfasst und, im Falle einer gültigen Signatur, ein Hinzufügen eines zweiten Eintrags mit dem signierten dritten Datensatz und einem zweiten Zeitstempel zu einem zusätzlichen Block für die Blockchain.

Ausführungsformen können den Vorteil haben, dass die Werkstatt auch selbstständig Einträge mit Fahrzeugdaten des Fahrzeugs in der Blockchain vornehmen kann. Somit steht neben dem Fahrzeug eine weitere unabhängige Datenquelle zur Verfügung. Durch Abgleich der von dem Fahrzeug und von der Werkstatt vorgenommen Einträge in der Blockchain, können Unstimmigkeiten und mögliche Manipulationen erkannt werden.

Nach Ausführungsformen identifiziert das Programmmodul einen sechsten öffentlichen kryptografischen Schlüssel eines einem Hersteller des Fahrzeugs zugeordneten sechsten asymmetrischen Schlüsselpaars. In einem Speicher eines Computersystems des Fahrzeugherstellers, beispielsweise in einem geschützten Speicherbereich des Speichers, ist ein sechster privater kryptografischer Schlüssel des dem Fahrzeugherstellers zugeordneten asymmetrischen Schlüsselpaars gespeichert. Das Computersystem des Fahrzeugherstellers umfasst eine Kommunikationsschnittstelle zur Kommunikation über ein viertes Kommunikationsnetzwerk. Ferner umfasst das Verfahren:
- Erstellen eines vierten Datensatzes zum Eintragen in die Blockchain durch das Computersystem des Fahrzeugherstellers, wobei der vierte Datensatz Fahrzeugdaten des Fahrzeugs umfasst und das dem Fahrzeug zugeordnete Programmmodul identifiziert,
- Signieren des vierten Datensatzes durch das Computersystem des Fahrzeugherstellers mit dem sechsten privaten kryptografischen Schlüssel des Fahrzeugherstellers,
- Senden des signierten vierten Datensatzes durch das Computersystem des Fahrzeugherstellers über das vierte Kommunikationsnetzwerk an einen Blockchain-Server des Blockchain-Netzwerks,
- Empfangen des signierten vierten Datensatzes durch den Blockchain-Server,
- Ausführen der ersten Programminstruktionen des durch den vierten Datensatz identifizierten Programmmoduls durch den Blockchain-Server, wobei das Ausführen der ersten Programminstruktionen ein Prüfen der Signatur des vierten Datensatzes unter Verwendung des von dem Programmmodul identifizierten sechsten öffentlichen kryptografischen Schlüssels des dem Fahrzeughersteller zugeordneten asymmetrischen Schlüsselpaars umfasst und, im Falle einer gültigen Signatur, ein Hinzufügen eines dritten Eintrags mit dem signierten vierten Datensatz und einem dritten Zeitstempel zu einem zusätzlichen Block für die Blockchain.

Ausführungsformen können den Vorteil haben, dass der Hersteller des Fahrzeugs selbstständig Einträge zu dem Fahrzeug in der Blockchain vornehmen kann. Da Einträge in der Blockchain aufgrund der Kettenstruktur, bei der jeder Block auf den vorausgehenden Blöcken beruht, nicht gelöst werden können, wird dem Fahrzeughersteller ermöglicht grundlegende Angaben zu dem Fahrzeug bereitzustellen, auf die jederzeit zurückgegriffen werden kann. Insbesondere wird es dem Fahrzeughersteller ermöglicht das Fahrzeug so zu initialisieren bzw. das Programmmodul zu personalisieren. Hierbei können initiale Fahrzeugdaten des Fahrzeugs in die Blockchain eingetragen werden. Somit steht neben dem Fahrzeug eine weitere unabhängige Datenquelle zur Verfügung.

Nach Ausführungsformen umfasst der vierte Datensatz technische Fahrzeugspezifikationen. Ausführungsformen können den Vorteil haben, dass ein solcher Datensatz Auskunft erteilt über die grundlegenden Eigenschaften des Fahrzeugs. Insbesondere kann ein solcher Eintrag nachträglich nicht mehr manipuliert werden. Beispielsweise kann der Datensatz eine Fahrgestellnummer, eine Motornummer, Angaben zu Fahrzeugeigenschaften und/oder einen Hash der Zulassungsbescheinigung, d.h. Zulassungsbescheinigung Teil I und/oder II, des Fahrzeugs umfassen. Zudem kann ein solcher Eintrag auch einen initialen Kilometerstand des Fahrzeugs umfassen. Die Angaben zu den Fahrzeugeigenschaften können beispielsweise die Angaben gemäß Zulassungsbescheinigung Teil I und/oder II umfassen, wie etwa Datum der Erstzulassung, Fahrzeugklasse, Art des Aufbaus, Fahrzeug-Identifizierungsnummer, Marke, Typ/ Variante/ Version, Handelsbezeichnungen, Hersteller-Kurzbezeichnung, Bezeichnung der Fahrzeugklasse und des Aufbaus, für die EG-Typgenehmigung maßgebliche Schadstoffklasse, Bezeichnung der nationalen Emissionsklasse, Kraftstoffart oder Energiequelle, Hubraum, Ausnahmen, Anzahl der Achsen, Anzahl der Antriebsachsen, Nennleistung, Nenndrehzahl, Höchstgeschwindigkeit, Länge, Breite, Höhe, Leermasse, Rauminhalt des Tanks, Stützlast, Leistungsgewicht, CO₂-Emission, technisch zulässige Gesamtmasse, Achslasten der einzelnen Achsen, Lautstärke Standgeräusch, Lautstärke Fahrgeräusch, technisch zulässige Anhängelast (gebremst/ungebremst), Anzahl Sitzplätze, Anzahl Stehplätze, Bereifung, Farbe des Fahrzeugs, Nummer der EG-Typgenehmigung und/oder Allgemeine Betriebserlaubnis.

Nach Ausführungsformen umfasst das Verfahren ferner:
- Erstellen eines fünften Datensatzes zum Eintragen in die Blockchain durch das Computersystem des ersten Fahrzeugeigentümers, wobei der fünfte Datensatz Fahrzeugdaten des Fahrzeugs umfasst und das dem Fahrzeug zugeordnete Programmmodul identifiziert,
- Signieren des fünften Datensatzes durch das Computersystem des ersten Fahrzeugeigentümers mit dem ersten privaten kryptografischen Schlüssel des ersten Fahrzeugeigentümers,
- Senden des signierten fünften Datensatzes durch das Computersystem des ersten Fahrzeugeigentümers über das erste Kommunikationsnetzwerk an einen Blockchain-Server des Blockchain-Netzwerks,
- Empfangen des signierten fünften Datensatzes durch den Blockchain-Server,
- Ausführen der ersten Programminstruktionen des durch den fünften Datensatz identifizierten Programmmoduls durch den Blockchain-Server, wobei das Ausführen der ersten Programminstruktionen ein Prüfen der Signatur des fünften Datensatzes unter Verwendung des von dem Programmmodul identifizierten ersten öffentlichen kryptografischen Schlüssels des dem ersten Fahrzeugeigentümer zugeordneten ersten asymmetrischen Schlüsselpaars umfasst und, im Falle einer gültigen Signatur, ein Hinzufügen eines vierten Eintrags mit dem signierten fünften Datensatz und einem vierten Zeitstempel zu einem zusätzlichen Block für die Blockchain.

Ausführungsformen können den Vorteil haben, dass der Eigentümer des Fahrzeugs auch selbstständig Einträge mit Fahrzeugdaten des Fahrzeugs in der Blockchain vornehmen kann. Somit steht neben dem Fahrzeug eine weitere unabhängige Datenquelle zur Verfügung. Durch Abgleich der von dem Fahrzeug und von dem Eigentümer vorgenommen Einträge in der Blockchain, können Unstimmigkeiten und mögliche Manipulationen erkannt werden.

Nach Ausführungsformen umfasst der fünfte Datensatz einen Indikator eines Diebstahls und/oder einer Stilllegung des Fahrzeugs. Ausführungsformen können den Vorteil haben, dass selbst bei einem Abhandenkommen des Fahrzeugs, einer Aufgabe des Fahrzeugs und/oder einer Funktionsunfähigkeit diese abschließenden Fahrzeugzustände in die Blockchain eingetragen werden können. Ein solcher Eintrag ermöglicht es beispielsweise beim Erwerb eines Fahrzeugs ohne großen Aufwand zu prüfen, ob es als gestohlen vermerkt ist. Nach Ausführungsbeispielen kann ein Indikator eines Diebstahls und/oder einer Stilllegung des Fahrzeugs auch in einem Datensatz enthalten sein, welcher von dem Fahrzeug selbst oder dem Fahrzeughersteller erzeugt und in die Blockchain eingebracht wird. Ein Indikator einer Stilllegung des Fahrzeugs kann beispielsweise auch in einem Datensatz enthalten sein, welcher von einer Werkstatt erzeugt und in die Blockchain eingebracht wird.

Nach Ausführungsformen ist in einem Speicher eines Computersystems eines Providers des Programmmoduls, beispielsweise in einem geschützten Speicherbereich des Speichers, ein siebter privater kryptografischer Schlüssel einer dritten Adresse gespeichert, welche dem Provider des Programmmoduls zugeordnet ist. Das Computersystem des Providers umfasst eine Kommunikationsschnittstelle zur Kommunikation über ein fünftes Kommunikationsnetzwerk. Zudem ist in dem Speicher des Computersystems des Fahrzeugherstellers, beispielsweise in dem geschützten Speicherbereich des Speichers, ein privater kryptografischer Schlüssel einer vierten Adresse gespeichert ist, welche dem Fahrzeughersteller zugeordnet ist. Das Verfahren umfasst ferner:
- Erstellen einer zweiten Transaktionsanweisung zur Transaktion des Programmmoduls von der dem Provider des Programmmoduls zugeordneten dritten Adresse an die dem Fahrzeughersteller zugeordneten vierte Adresse durch das Computersystem des Providers,
- Signieren der zweiten Transaktionsanweisung durch das Computersystem des Providers mit dem privaten kryptografischen Schlüssel der dritten Adresse,
- Senden der signierten zweiten Transaktionsanweisung durch das Computersystem des Providers über das fünfte Netzwerk an einen Blockchain-Server des Blockchain-Netzwerks,
- Empfangen der signierten zweiten Transaktionsanweisung durch den Blockchain-Server,
- Prüfen durch den Blockchain-Server, ob die zweite Transaktionsanweisung mit dem der dritten Adresse zugeordneten privaten kryptografischen Schlüssel gültig signiert ist,
- im Falle einer gültigen Signatur, Hinzufügen der zweiten Transaktionsanweisung zu einem zusätzlichen Block für die Blockchain.

Ausführungsformen können den Vorteil haben, dass das Programmmodul von einem Provider erstellt und in die Blockchain eingebracht werden. Das Programmmodul kann beispielsweise zum Ausführen der zuvor beschriebenen Ausführungsformen des Verfahrens konfiguriert sein. Insbesondere kann das Programmmodul zum Erzeugen zusätzlicher Einträge in die Blockchain und zum Auffinden alter, beispielsweise durch das Programmmodul erzeugten Blockchain-Einträgen konfiguriert sein.

Das so erzeugte Programmmodul kann so konfiguriert sein, dass eine bestimmte Funktionalität nur ausgeführt werden kann, wenn zu deren Bestätigung eine Signatur mit einem privaten kryptografischen Schlüssel bereitgestellt wird, welcher einer Instanz zugeordnet ist, die eine Berechtigung zum Ausführen dieser Funktionalität besitzt. Bei einem solchen privaten kryptografischen Schlüssel kann es sich beispielsweise um einen privaten kryptografischen Schlüssel einer in der Blockchain gespeichert Adresse des Programmmoduls handeln. Mit anderen Worten kann dies beispielsweise ein privater kryptografischer Schlüssel einer Adresse sein, welche durch einen dem privaten kryptografischen Schlüssel zugeordneten öffentlichen kryptografischen Schlüssel definiert ist und für die die Blockchain einen Eintrag umfasst, welcher festhält, dass das Programmmodul an diese Adresse übertragen bzw. diesem öffentlichen kryptografischen Schlüssel zugeordnet wurde. Nur wer im Besitz des entsprechenden privaten kryptografischen Schlüssels ist, kann bestimmte Funktionen ausführen und besitzt zugleich die Verfügungshoheit über das Programmmodul. Ein solcher privaten kryptografischen Schlüssel kann als Generalschlüssel oder Masterkey dienen.

Ferner kann die Blockchain dem Programmmodul zugeordnete Einträge umfassen, welche einen öffentlichen kryptografischen Schlüssel umfassen und einem dem öffentlichen kryptografischen Schlüssel zugeordneten asymmetrischen Schlüsselpaar die Berechtigung zum Ausführen einer oder mehrerer Funktionalitäten des Programmmoduls zuweisen. Die Einträge können beispielsweise unter Verwendung eines dem Provider des Programmmoduls zugeordneten privaten kryptografischen Schlüssel signiert sein. Nach Ausführungsformen können die Einträge mit einem privaten kryptografischen Schlüssel eines asymmetrischen Schlüsselpaars signiert sein, welchem die Berechtigung hierzu zugewiesen wurde. Somit können Berechtigungsketten implementiert werden, welche auf eine Signatur des Providers des Programmmoduls zurückgeführt werden können.

Die Verfügungshoheit über das Programmmodul kann von einem privaten kryptografischen Schlüssel an einen anderen übertragen werden, indem das Programmmodul von einer Adresse bzw. einem ersten öffentlichen kryptografischen Schlüssel, der bzw. dem ein erster privaten kryptografischen Schlüssel zugeordnet ist, an eine andere Adresse bzw. einen zweiten öffentlichen kryptografischen Schlüssel, der bzw. dem ein zweiter privaten kryptografischen Schlüssel zugeordnet ist, übertragen wird. Eine solche Transaktion wird durch einen entsprechenden Eintrag in der Blockchain definiert.

Durch die Transaktion des Programmmoduls von einer dem Provider des Programmmoduls zugeordneten Adresse an eine dem Fahrzeughersteller zugeordneten Adresse geht die Verfügungsgewalt über das Programmmodul von dem Provider des Programmmoduls an den Fahrzeughersteller über. Beispielsweise wird der Fahrzeugherstelle durch die Transaktion berechtigt unter Verwendung des der zweiten Adresse zugeordneten privaten kryptografischen Schlüssels das Programmodul für ein bestimmtes Fahrzeug zu personalisieren, d.h. das Programmodul einem bestimmten Fahrzeug zuzuordnen. "Personalisierung" wird hier als Zuordnung zu einem individuellen Fahrzeug verstanden. Eine Personalisierung kann unter Verwendung von Attributen implementiert werden, welche das entsprechende Fahrzeug identifizieren. Beispielsweise kennzeichnen diese Attribute einzeln für sich genommen oder in Kombination miteinander das Fahrzeug eindeutig.

Der Eigentümer des Masterkeys ist beispielsweise in der Lage Funktionalitäten des Programmmoduls für andere Teilnehmer freizuschalten. So kann etwa die Funktion Datensätze mit Fahrzeugdaten des Fahrzeugs gültig einzutragen unter Verwendung des Masterkeys freigeschaltet werden, wobei ein mit dem Masterkey signierter Eintrag in der Blockchain erzeugt wird, welcher einen öffentlichen kryptografischen Schlüssel umfasst. Durch einen solchen Eintrag wird der entsprechende öffentliche kryptografische Schlüssel identifiziert. Hierbei kann anhand der Blockchain jederzeit nachgeprüft werden, dass der zur Signatur des entsprechenden Eintrags verwendete Masterkey einer Adresse bzw. einem öffentlichen kryptografischen Schlüssel zugeordnet ist, welcher dem Programmmodul zum Zeitpunkt der Aufnahme des Eintrags in die Blockchain entspricht.

Das Erzeugen und Einbringen des Programmmoduls in die Blockchain umfasst beispielsweise:
- Erstellen des Programmmoduls durch das Computersystem des Providers,
- Erstellen einer Eintragungsaufforderung zur Eintragung des Programmmoduls mit einer dem Provider zugeordnete Initialadresse durch das Computersystem des Providers, wobei die Eintragungsaufforderung das Programmmodul umfasst und der Initialadresse ein privater kryptografischer Schlüssel zugeordnet ist,
- Signieren der Eintragungsaufforderung durch das Computersystem des Providers mit dem privaten kryptografischen Schlüssel der Initialadresse,
- Senden der signierten Eintragungsaufforderung durch das Computersystem des Providers über das vierte Netzwerk an einen Blockchain-Server des Blockchain-Netzwerks,
- Empfangen der signierten Eintragungsaufforderung durch den Blockchain-Server,
- Prüfen durch den Blockchain-Server, ob die Eintragungsaufforderung mit dem der Initialadresse zugeordneten privaten kryptografischen Schlüssel gültig signiert ist,
- im Falle einer gültigen Signatur, Hinzufügen des Programmmoduls zu einem zusätzlichen Block für die Blockchain.

Nach Ausführungsformen wird zudem ein dem asymmetrischen Schlüsselpaar der Initialadresse zugeordnetes Zertifikat in die Blockchain eingetragen. Beispielsweise wird das Zertifikat zusammen mit dem Programmmodul in die Blockchain eingetragen. Bei dem Zertifikat kann es sich beispielsweise um ein Zertifikat einer PKI, beispielsweise einer hierarchischen PKI mit einer zentralen Wurzelzertifizierungsinstanz, handeln. Ausführungsformen können den Vorteil haben, dass durch das Zertifikat ein Vertrauensanker geschaffen wird, durch welchen sichergestellt werden kann, dass es sich bei dem Programmmodul um einen authentischen Eintrag handelt, welcher zu einer offiziell anerkannten Ausgangsinstanz in Form des Providers des Programmmoduls zurückverfolgt werden kann. Von diesem Vertrauensanker kann das Vertrauen in alle nachfolgenden Einträge in der Blockchain zu diesem Fahrzeug abgeleitet werden. Beispielsweise müssen die für die Authentifizierung der nachfolgenden Einträge verwendeten kryptografischen Schlüssel zunächst durch den zertifizierten privaten kryptografischen Schlüssel bestätigt werden.

Nach Ausführungsformen kann das Programmmodul über eine Mehrzahl von Blöcken der Blockchain verteilt eingetragen werden.

Nach Ausführungsformen verbleibt die Verfügungsgewalt über das Programmmodul bei dem Fahrzeughersteller.

Nach Ausführungsformen ist in dem Speicher des Computersystems des Fahrzeugeigentümers, beispielsweise in dem geschützten Speicherbereich des Speichers, ein privater kryptografischer Schlüssel einer ersten Adresse gespeichert, welche dem ersten Fahrzeugeigentümer zugeordnet ist und das Verfahren umfasst:
- Erstellen einer dritten Transaktionsanweisung zur Transaktion des Programmmoduls von der dem Fahrzeughersteller zugeordneten zweiten Adresse an die dem Fahrzeugeigentümer zugeordnete erste Adresse durch das Computersystem des Fahrzeugherstellers,
- Signieren der dritten Transaktionsanweisung durch das Computersystem des Fahrzeugherstellers mit dem privaten kryptografischen Schlüssel der vierten Adresse,
- Senden der signierten dritten Transaktionsanweisung durch das Computersystem des Fahrzeugherstellers über das vierte Netzwerk an einen Blockchain-Server des Blockchain-Netzwerks,
- Empfangen der dritten Transaktionsanweisung durch den Blockchain-Server,
- Prüfen durch den Blockchain-Server, ob die zweite Transaktionsanweisung mit dem der vierten Adresse zugeordneten privaten kryptografischen Schlüssel gültig signiert ist,
- im Falle einer gültigen Signatur, Hinzufügen der zweiten Transaktionsanweisung zu einem zusätzlichen Block für die Blockchain.

Ausführungsformen können den Vorteil haben, dass durch die Transaktion des Programmmoduls von der dem Fahrzeughersteller zugeordneten Adresse an die dem Fahrzeugeigentümer zugeordnete Adresse die Verfügungsgewalt über das Programmodul an den Fahrzeugeigentümer übergeht. Somit wird die Verfügungsgewalt über das Programmodul an den Besitz des Fahrzeugs gekoppelt. Bei einem Verkauf des Fahrzeugs kann beispielsweise eine weitere Transaktion an den neuen Eigentümer des Fahrzeugs erfolgen.

Nach Ausführungsformen ist in einem Speicher eines Computersystems eines neuen Fahrzeugeigentümers, beispielsweise in einem geschützten Speicherbereich des Speichers, ein privater kryptografischer Schlüssel einer ersten Adresse gespeichert, welche dem ersten Fahrzeugeigentümer zugeordnet ist und das Verfahren umfasst ferner:
- Erstellen einer dritten Transaktionsanweisung zur Transaktion des Programmmoduls von der dem bisherigen Fahrzeugeigentümer zugeordneten vierten Adresse an die dem ersten Fahrzeugeigentümer zugeordnete erste Adresse durch das Computersystem des Fahrzeugherstellers,
- Signieren der dritten Transaktionsanweisung durch das Computersystem des Fahrzeugherstellers mit dem privaten kryptografischen Schlüssel der vierten Adresse,
- Senden der signierten dritten Transaktionsanweisung durch das Computersystem des Fahrzeugherstellers über das vierte Netzwerk an einen Blockchain-Server des Blockchain-Netzwerks,
- Empfangen der dritten Transaktionsanweisung durch den Blockchain-Server,
- Prüfen durch den Blockchain-Server, ob die dritte Transaktionsanweisung mit dem der vierten Adresse zugeordneten privaten kryptografischen Schlüssel signiert ist,
- im Falle einer gültigen Signatur, Hinzufügen der dritten Transaktionsanweisung zu einem zusätzlichen Block für die Blockchain.

Nach Ausführungsformen umfasst das Programmmodul vierte Programminstruktionen. Durch Ausführen der vierten Programminstruktionen wird ein dem Programmmodul zugeordneter Eintrag in der Blockchain erzeugt, welcher eine Freigabe zur Zuordnung des Programmmoduls zu dem Fahrzeug umfasst. Das Programmmodul umfasst ferner fünfte Programminstruktionen, durch deren Ausführen ein dem Programmmodul zugeordneter Eintrag in der Blockchain erzeugt wird, welcher das Programmmodul dem Fahrzeug zuordnet. Dabei umfasst das Verfahren:
- durch einen Blockchain-Server des Blockchain-Netzwerks Empfangen einer ersten Aufforderung zum Freischalten einer Berechtigung zum Zuordnen des Programmmoduls zu dem Fahrzeug durch den Fahrzeughersteller, wobei die erste Aufforderung den öffentlichen kryptografischen Schlüssel des Fahrzeugherstellers umfasst, das dem Fahrzeug zuzuordnende Programmmodul identifiziert und mit dem privaten kryptografischen Schlüssel des Providers des Programmmoduls gültig signiert ist,
- Ausführen der vierten Programminstruktionen des durch die erste Aufforderung identifizierten Programmmoduls durch den Blockchain-Server, wobei das Ausführen der vierten Programminstruktionen ein Prüfen der Signatur der ersten Aufforderung unter Verwendung des von dem Programmmodul identifizierten öffentlichen kryptografischen Schlüssels des asymmetrischen Schlüsselpaars umfasst, welches dem Provider zugeordnet ist, und, im Falle einer gültigen Signatur, ein Hinzufügen eines fünften Eintrags mit dem öffentlichen kryptografischen Schlüssel des Fahrzeugherstellers, einer Zuordnungsfreigabe und einem fünften Zeitstempel zu dem zusätzlichen Block für die Blockchain,
- Empfangen einer zweiten Aufforderung des Fahrzeugherstellers zum Zuordnen des Programmmoduls zu dem Fahrzeug durch den Blockchain-Server, wobei die zweite Aufforderung das dem Fahrzeug zuzuordnende Programmmodul identifiziert und mit dem privaten kryptografischen Schlüssel des Fahrzeugherstellers gültig signiert ist,
- Ausführen der fünften Programminstruktionen des Programmmoduls durch den Blockchain-Server, wobei das Ausführen der fünften Programminstruktionen ein Prüfen der Signatur der zweiten Aufforderung unter Verwendung des in dem fünften Eintrag gespeicherten öffentlichen kryptografischen Schlüssels des asymmetrischen Schlüsselpaars umfasst, welches dem Fahrzeugherstellers zugeordnet ist, und, im Falle einer gültigen Signatur, ein Hinzufügen eines sechsten Eintrags mit dem öffentlichen kryptografischen Schlüssel des Fahrzeugs, einer Zuordnung des Programmmoduls zu dem Fahrzeug und einem sechsten Zeitstempel zu einem zusätzlichen Block für die Blockchain.

Ausführungsformen können den Vorteil haben, dass das Programmmodul von dem Provider erstellt und in die Blockchain eingefügt wird. Das so erstellte Programmmodul ist noch nicht personalisiert, d.h. es ist noch keinem bestimmten Fahrzeug zugeordnet. Dieses nicht-personalisiert Programmmodul wird durch den Fahrzeughersteller personalisiert, d.h. einem Fahrzeug zugeordnet, indem eine Kennung des Fahrzeugs in einem dem Programmmodul zugeordneten Block der Blockchain gespeichert wird. Bei der Kennung kann es sich beispielsweise um eine Identifikationsnummer des Fahrzeugs oder einen dem Fahrzeug zugeordneten öffentlichen kryptografischen Schlüssel handeln.

Beispielsweise fragt der Fahrzeughersteller, wenn er ein neues Fahrzeug herstellt bzw. hergestellt hat, bei dem Provider ein zusätzliches Programmodul für das neue Fahrzeug an. Zudem übermittelt der Fahrzeughersteller dem Provider seinen öffentlichen kryptografischen Schlüssel. Dieser öffentlichen kryptografischen Schlüssel wird von dem Provider freigeschaltet, so dass der Fahrzeughersteller das Programmmodul für das neue Fahrzeug personalisieren kann.

Nach Ausführungsformen umfasst das Programmmodul sechste Programminstruktionen. Durch Ausführen der sechsten Programminstruktionen wird ein dem Programmmodul zugeordneter Eintrag in der Blockchain erzeugt, welcher eine Freigabe zur Zuordnung des Programmmoduls zu dem Fahrzeug umfasst. Das Zuordnen umfasst:
- durch einen Blockchain-Server des Blockchain-Netzwerks Empfangen einer dritten Aufforderung zum Freischalten einer Berechtigung zum Zuordnen des Programmmoduls zu dem Fahrzeug durch den Fahrzeughersteller, wobei die dritte Aufforderung ein Passwort und den öffentlichen kryptografischen Schlüssel des Fahrzeugherstellers umfasst und das dem Fahrzeug zuzuordnende Programmmodul identifiziert,
- Ausführen der sechsten Programminstruktionen des durch die dritte Aufforderung identifizierten Programmmoduls durch den Blockchain-Server, wobei das Ausführen der sechsten Programminstruktionen ein Prüfen des Passworts unter Verwendung eines in der Blockchain gespeicherten verschlüsselten Referenzwerts und, im Falle eines gültigen Referenzwerts, ein Hinzufügen eines siebten Eintrags mit dem öffentlichen kryptografischen Schlüssel des Fahrzeugherstellers, einer Zuordnungsfreigabe und einem siebten Zeitstempel zu einem zusätzlichen Block für die Blockchain,
- Empfangen einer zweiten Aufforderung des Fahrzeugherstellers zum Zuordnen des Programmmoduls zu dem Fahrzeug durch den Blockchain-Server, wobei die zweite Aufforderung das dem Fahrzeug zuzuordnende Programmmodul identifiziert und mit dem privaten kryptografischen Schlüssel des Fahrzeugherstellers gültig signiert ist,
- Ausführen der fünften Programminstruktionen des Programmmoduls durch den Blockchain-Server, wobei das Ausführen der fünften Programminstruktionen ein Prüfen der Signatur der zweiten Aufforderung unter Verwendung des in dem fünften Eintrag gespeicherten öffentlichen kryptografischen Schlüssels des asymmetrischen Schlüsselpaars umfasst, welches dem Fahrzeugherstellers zugeordnet ist, und, im Falle einer gültigen Signatur, ein Hinzufügen eines sechsten Eintrags mit dem öffentlichen kryptografischen Schlüssel des Fahrzeugs, einer Zuordnung des Programmmoduls zu dem Fahrzeug und einem sechsten Zeitstempel zu einem zusätzlichen Block für die Blockchain.

Ausführungsformen können den Vorteil haben, dass dem Fahrzeughersteller auf Anfrage ein Passwort von dem Provider des Programmmoduls übermittelt wird, mit welchem der Fahrzeughersteller die Berechtigung zum Zuordnen des Programmmoduls zu einem Fahrzeug, d.h. ein registrierend es Fahrzeugs, für sich freischalten kann.

Bei dem Passwort kann es sich beispielsweise um eine "One-Time-Password" oder "OTP" handeln. Unter einem OTP wird hier ein Einmal-Passwort oder ein Einmal-Kennwort verstanden, welches nur für eine einmalige Verwendung gültig sein soll. Beispielsweis kann es sich bei einem solchen Einmal-Passwort um eine TAN handeln.

Nach Ausführungsformen ist die Blockchain zusätzlich zum Ausführen von Überweisungen von Beträgen einer Kryptowährung konfiguriert. Ausführungsformen können den Vorteil haben, dass Rechnungen, wie etwa für einen Erwerb des Fahrzeugs, Reparaturen, Ersatzteile, Unterhalt etc., dem Fahrzeug bzw. seinem Eigentümer zugeordnet und von diesen unter Verwendung der Blockchain beglichen werden können.

Ausführungsformen umfassen ferner ein welches ein Computersystem eines ersten Fahrzeugeigentümers und ein Blockchain-Netzwerk mit zumindest einem Blockchain-Server umfasst. Das Computersystem des ersten Fahrzeugeigentümers umfasst einen Speicher und eine Kommunikationsschnittstelle zur Kommunikation über das erste Netzwerk. Der zumindest eine Blockchain-Server ist dazu konfiguriert, ein in der Blockchain gespeichertes Programmmodul auszuführen und eine Fahrzeugbescheinigung zur Verfügung zu stellen. Das System ist zum Ausführen eines Verfahrens nach einer der zuvor beschriebenen Ausführungsformen des Verfahrens konfiguriert.

Nach Ausführungsformen umfasst das System ferner ein Prüfcomputersystem, wobei das Prüfcomputersystem ein Lesegerät und eine Kommunikationsschnittstelle zur Kommunikation über ein zweites Netzwerk umfasst. Das System ist zum Ausführen eines Verfahrens nach einer der zuvor beschriebenen Ausführungsformen konfiguriert.

Nach Ausführungsformen umfasst das System ferner ein Fahrzeug mit einem Fahrzeugcomputersystem Das Fahrzeugcomputersystem umfasst einen Speicher. Ferner umfasst das Fahrzeugcomputersystem eine Mobilfunkschnittstelle zur Kommunikation über ein Mobilfunknetzwerk. Das System ist zum Ausführen eines Verfahrens nach einer der zuvor beschriebenen Ausführungsformen des Verfahrens konfiguriert.

Nach Ausführungsformen umfasst das System ferner ein Computersystem einer Werkstatt. Das Computersystem der Werkstatt umfasst einen Speicher und eine Kommunikationsschnittstelle zur Kommunikation über ein erstes Kommunikationsnetzwerk. Das System ist zum Ausführen eines Verfahrens nach einer der zuvor beschriebenen Ausführungsformen konfiguriert.

Nach Ausführungsformen umfasst das System ferner ein Computersystem eines Herstellers des Fahrzeugs. Das Computersystem des Fahrzeugherstellers einen Speicher und eine Kommunikationsschnittstelle zur Kommunikation über ein zweites Kommunikationsnetzwerk. Das System ist zum Ausführen eines Verfahrens nach einer der zuvor beschriebenen Ausführungsformen konfiguriert.

Nach Ausführungsformen umfasst das System ferner ein Computersystem eines Eigentümers des Fahrzeugs. Das Computersystem des Fahrzeugeigentümers umfasst einen Speicher und eine Kommunikationsschnittstelle zur Kommunikation über ein drittes Kommunikationsnetzwerk. Das System ist zum Ausführen eines Verfahrens nach einer der zuvor beschriebenen Ausführungsformen konfiguriert.

Nach Ausführungsformen umfasst das System ferner ein Computersystem eines Providers des Programmmoduls. Das Computersystem eines Providers des Programmmoduls umfasst einen Speicher und eine Kommunikationsschnittstelle zur Kommunikation über ein viertes Kommunikationsnetzwerk. Das System ist zum Ausführen eines Verfahrens nach einer der zuvor beschriebenen Ausführungsformen konfiguriert.

Die Verwendung von Ordinalzahlen wie erstes, zweites, drittes etc. dient hier, soweit sich aus dem konkreten Zusammenhang nicht eindeutig etwas anderes ergibt, allein der Unterscheidung voneinander verschiedener Elemente und soll keine bestimmte Reihenfolge implizieren.

Bei den zuvor genannten Kommunikationsnetzwerken kann es sich nach Ausführungsformen bei allen oder einem Teil davon um ein und dasselbe oder verschiedene Kommunikationsnetzwerke handeln.

Nach Ausführungsformen werden alle oder ein Teil der zuvor genannten Einträge zu demselben zusätzlichen Block oder verschiedenen zusätzlichen Blöcken für die Blockchain hinzugefügt.

Im Weiteren werden Ausführungsformen der Erfindung mit Bezugnahme auf die Zeichnungen näher erläutert. Es zeigen:
- Figuren 1: Blockdiagramme einer ersten Ausführungsform eines exemplarischen Systems zum manipulationssicheren Speichern von Fahrzeugdaten eines Fahrzeugs in einer Blockchain,
- Figuren 2: Blockdiagramme einer zweiten Ausführungsform eines exemplarischen Systems zum manipulationssicheren Speichern von Fahrzeugdaten eines Fahrzeugs in einer Blockchain,
- Figur 3: ein Blockdiagramm einer Ausführungsform eines exemplarischen Systems zum Erfassen von Fahrzeugdaten eines Fahrzeugs,
- Figur 4: ein Flussdiagramm einer ersten Ausführungsform eines exemplarischen Verfahrens zum manipulationssicheren Speichern von Fahrzeugdaten eines Fahrzeugs in einer Blockchain,
- Figur 5: ein Flussdiagramm einer zweiten Ausführungsform eines exemplarischen Verfahrens zum manipulationssicheren Speichern von Fahrzeugdaten eines Fahrzeugs in einer Blockchain,
- Figur 6: ein Flussdiagramm einer dritten Ausführungsform eines exemplarischen Verfahrens zum manipulationssicheren Speichern von Fahrzeugdaten eines Fahrzeugs in einer Blockchain,
- Figur 7: ein Flussdiagramm einer vierten Ausführungsform eines exemplarischen Verfahrens zum manipulationssicheren Speichern von Fahrzeugdaten eines Fahrzeugs in einer Blockchain,
- Figur 8: ein Flussdiagramm einer Ausführungsform eines exemplarischen Verfahrens zum Auslesen von manipulationssicheren in einer Blockchain gespeicherten Fahrzeugdaten eines Fahrzeugs,
- Figur 9: ein Flussdiagramm Ausführungsform eines exemplarischen Verfahrens zum Übertragen des Eigentums an einem Fahrzeug von einem ersten Eigentümer an einen zweiten Eigentümer,
- Figur 10: ein Blockdiagramm eines Verfahrens zum manipulationssichern Speichern von Fahrzeugdaten in einer Blockchain,
- Figur 11: ein Blockdiagramm eines Verfahrens zum manipulationssichern Eintragen eines Eigentümers des Fahrzeugs in der Blockchain,
- Figur 12: ein Blockdiagramm eines Verfahrens zum manipulationssichern Eintragen von Zustandsdaten des Fahrzeugs in der Blockchain und
- Figur 13: ein Blockdiagramm eines Verfahrens zum manipulationssichern Eintragen von Reparaturdaten des Fahrzeugs in der Blockchain.

Elemente der nachfolgenden Ausführungsformen, die einander entsprechen, werden mit denselben Bezugszeichen gekennzeichnet.

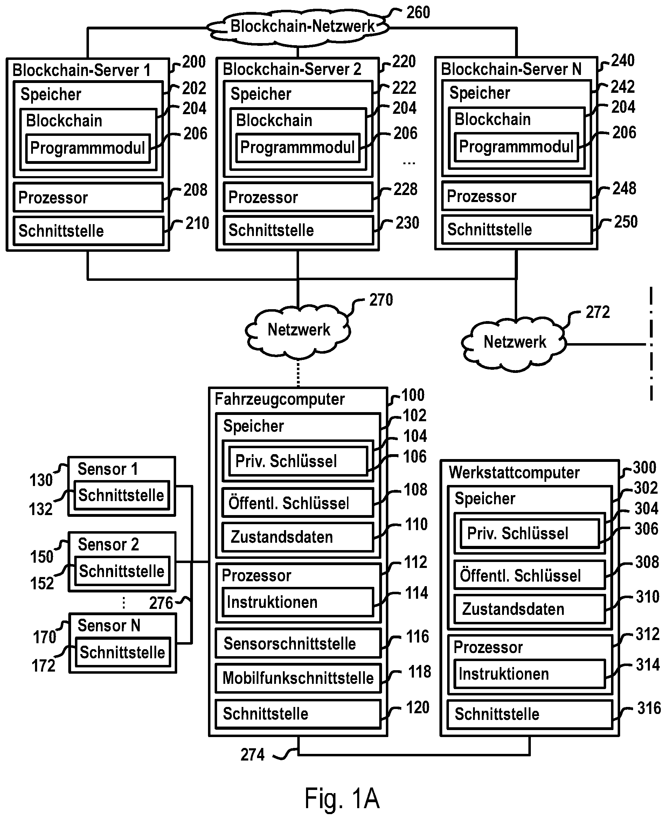

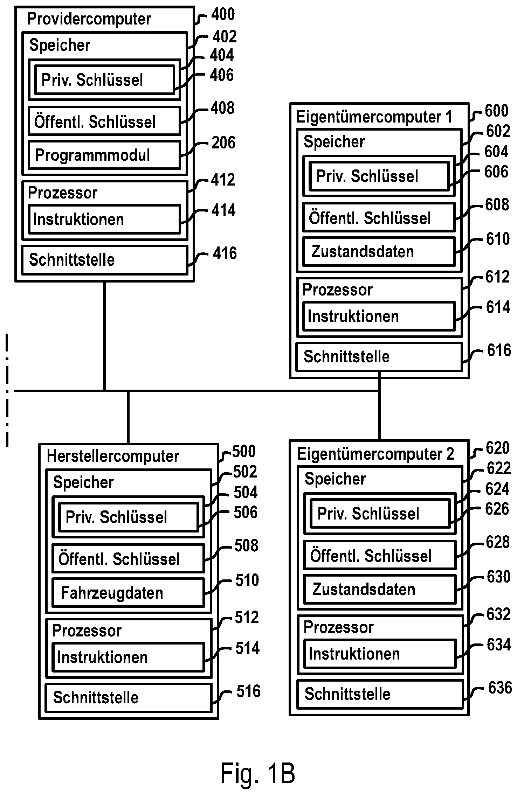

Figuren 1A und 1B zeigen eine erste Ausführungsform eines exemplarischen Systems zum manipulationssicheren Speichern von Fahrzeugdaten 110, 310, 510, 610 eines Fahrzeugs in einer Blockchain 204. Bei dem Fahrzeug handelt es sich beispielsweise um ein Automobil, wie etwa einen Personenkraftwagen. Das Fahrzeug umfasst ein Fahrzeugcomputersystem 100. Das Fahrzeugcomputersystem 100 weist einen Speicher 102 auf, in welchem ein öffentlicher kryptografischer Schlüssel 106 eines dem Fahrzeug zugeordneten asymmetrischen Schlüsselpaars gespeichert ist. Ferner sind in dem Speicher 102 Fahrzeugdaten 110 des Fahrzeugs gespeichert, welche das Fahrzeugcomputersystem 100 beispielsweise von fahrzeugeigenen Sensoren 130, 150, 170 oder einem Computersystem 300 einer Werkstatt empfangen hat. Diese Fahrzeugdaten können beispielsweise den Kilometerstand des Fahrzeugs umfassen. Ferner umfasst der Speicher 102 einen geschützten Speicherbereich 104, auf welchen ein Zugriff nur über einen Prozessor 112 des Fahrzeugcomputersystems 100 möglich ist und in dem ein privater kryptografischer Schlüssel 106 des dem Fahrzeug zugeordneten asymmetrischen Schlüsselpaars gespeichert ist. Der privater kryptografischer Schlüssel 106 kann dazu verwendet werden, in die Blockchain einzutragende Datensätze mit Fahrzeugdaten des Fahrzeugs zu signieren. Der Prozessor 112 ist dazu konfiguriert Programminstruktionen 114 auszuführen, durch deren Ausführung der Prozessor 112 das Fahrzeugcomputersystem 100 so steuert, dass ein Datensatz mit den Fahrzeugdaten 110 des Fahrzeugs erzeugt und in einer Blockchain 204 gespeichert wird. Schließlich kann der Prozessor 112 Programminstruktionen 114 ausführen, welche ein kryptografisches Protokoll implementieren. Mittels des kryptografischen Protokolls kann eine Datenübertragung zwischen dem Fahrzeugcomputersystem 100 und dem Computersystem 300 der Werkstatt, den Sensoren 130, 150, 170 und/oder den Blockchain-Servern 200, 220, 240 kryptografisch gesichert werden. Ferner umfasst das Fahrzeugcomputersystem 100 eine Mobilfunkschnittstelle 118 zur Kommunikation über ein Mobilfunknetzwerk 270. Über das Mobilfunknetzwerk 270 kann das Fahrzeugcomputersystem 100 mit einem oder mehreren der Blockchain-Server 200, 220, 240 des Blockchain-Netzwerks 260 kommunizieren. Zudem umfasst das Fahrzeugcomputersystem 100 eine Sensorschnittstelle zur Kommunikation mit fahrzeugeigenen Sensoren 130, 150, 170, insbesondere zum Empfangen von Sensormesswerten, welche Fahrzeugdaten des Fahrzeugs bereitstellen.

Das Fahrzeug umfasst zudem eine Mehrzahl von fahrzeugeigenen Sensoren 130, 150, 170, welche jeweils eine Sensorschnittstelle 132, 152, 172 zur Kommunikation mit dem Fahrzeugcomputersystem 100 über ein fahrzeugeigenes Netzwerk 276 aufweisen. Falls die Sensormesswerte kryptografisch gesichert, d.h. beispielsweise verschlüsselt und/oder signiert, an das Fahrzeugcomputersystem 100 übertragen werden sollen, umfassen die Sensoren 130, 150, 170 zudem jeweils einen Speicher ggf. mit einem geschützten Speicherbereich, entsprechende kryptografische Schlüssel, wie etwa ein dem jeweiligen Sensor zugeordnetes kryptografisches Schlüsselpaar, und einen Prozessor mit Programminstruktionen zur Ausführung der kryptografisch gesicherten Kommunikation.

Ferner kann ein Computersysteme 300 einer Werkstatt vorgesehen sein, welches einen Speicher 302 umfasst. Bei dem Computersysteme 300 kann sich beispielsweise um ein mobiles Diagnosegerät oder einen Personalcomputer handeln. Beispielsweise handelt es sich um ein mobiles Diagnosegerät in Form eines speziellen Computersystems mit verschiedenen Diagnosefunktionen für das Fahrzeugcomputersystem und/oder die Fahrzeugelektronik. Das Computersysteme 300 kann beispielsweise unmittelbar über ein oder mehrere Kabel 274 mit dem Fahrzeugcomputersystem und/oder der Fahrzeugelektronik verbunden werden. Desktop. In dem Speicher 302 ist ein öffentlicher kryptografischer Schlüssel 308 eines der Werkstatt zugeordneten asymmetrischen Schlüsselpaars gespeichert ist. Ferner sind in dem Speicher 302 Fahrzeugdaten 310 des Fahrzeugs gespeichert. Diese Fahrzeugdaten 310 des Fahrzeugs werden beispielsweise durch Sensoren der Werkstatt bereitgestellt und/oder umfassen Angaben zur Reparatur oder Wartungsarbeiten, welche die Werkstatt durchgeführt hat. Ferner können diese Fahrzeugdaten auch Angaben von Mitarbeitern der Werkstatt über den Zustand des Wagens umfassen, insbesondere über festgestellte Mängel. Ferner umfasst der Speicher 302 einen geschützten Speicherbereich 304, auf welchen ein Zugriff nur über einen Prozessor 312 des Computersystems 300 möglich ist und in dem ein privater kryptografischer Schlüssel 306 des der Werkstatt zugeordneten asymmetrischen Schlüsselpaars gespeichert ist. Der Prozessor 312 ist dazu konfiguriert Programminstruktionen 314 auszuführen, durch deren Ausführung der Prozessor 312 das Computersystem 300 so steuert, dass die Fahrzeugdaten 310 eines Fahrzeugs zur Speicherung in der Blockchain 204 an das Fahrzeugcomputersystem 100 übertragen werden. Zum Nachweis der Authentizität der entsprechenden Fahrzeugdaten 310 können diese mit dem privaten kryptografischen Schlüssel 306 signiert sein. Die Authentizität des der Werkstatt zugeordneten asymmetrischen Schlüsselpaar kann zudem beispielsweise durch ein Zertifikat und/oder eine entsprechende PKI belegt werden. Schließlich kann der Prozessor 312 Programminstruktionen 114 ausführen, welche ein kryptografisches Protokoll implementieren. Mittels des kryptografischen Protokolls kann eine Datenübertragung zwischen dem Computersystem 300 der Werkstatt und dem Fahrzeugcomputersystem 100 über die Kommunikationsverbindung 274 kryptografisch gesichert werden. Beispielsweise werden die Fahrzeugdaten 310 vor dem Senden an das Fahrzeugcomputersystem 100 mit dem öffentlichen kryptografischen Schlüssel 108 des Fahrzeugcomputersystems 100 verschlüsselt, sodass sie von dem Fahrzeugcomputersystems 100 mittels des zugehörigen privaten Schlüssels 106 wieder entschlüsselt werden können.

Ferner umfasst das Computersystem 300 der Werkstatt eine Kommunikationsschnittstelle 316 zur Kommunikation mit dem Fahrzeugcomputersystem 100 und dessen Kommunikationsschnittstelle 120 über die Kommunikationsverbindung 274.

Bei der Kommunikationsverbindung 274 kann es sich beispielsweise um eine kabellose oder eine kabelgebundene Kommunikationsverbindung handeln.

Das Fahrzeugcomputersystem 100 kann beispielsweise über das Mobilfunknetz 270 mit dem Blockchain-Netzwerkwerk 260 kommunizieren. Das Blockchain-Netzwerkwerk 260 umfasst zumindest einen oder mehrere Blockchain-Server 200, 220, 240. Die Blockchain-Server 200, 220, 240 umfassen jeweils einen Speicher 202, 222, 242 mit der Blockchain 204, welche in einem der Blöcke eine dem Fahrzeug zugeordnetes Programmmodul 206 zum Eintragen von Fahrzeugdaten umfasst. Das Programmmodul 206 umfasst dabei Programminstruktionen. Durch ein Ausführen dieser Programminstruktionen wird ein dem Programmmodul 206 und damit dem entsprechenden Fahrzeug zugeordneten Eintrag mit Fahrzeugdaten 110, 310, 510, 610 des Fahrzeugs in der Blockchain 204 erzeugt. Zudem identifiziert das Programmmodul 206 den öffentlichen kryptografischen Schlüssel 108 des Fahrzeugs. Beispielsweise ist der öffentlichen kryptografischen Schlüssel 108 in einem der Blöcke der Blockchain hinterlegt. Ferner umfasst jeder der Blockchain-Server 200, 220, 240 einen Prozessor 208, 230, 250, welcher jeweils dazu konfiguriert die Programminstruktionen auszuführen, welche von einem in der Blockchain 204 gespeicherten Programmmodul 206 bereitgestellt werden. Schließlich umfassen die Blockchain-Server 200, 220, 240 eine Kommunikationsschnittstelle 210, 230, 250 zur Kommunikation über das Blockchain-Netzwerk 260 und/oder das Mobilfunknetzwerk 270. Bei dem Blockchain-Netzwerk 260 handelt es sich beispielsweise um ein Peer-to-Peer-Netzwerk.

Ferner sind die Kommunikationsschnittstelle 210, 230, 250 zur Kommunikation über das Netzwerk 272 konfiguriert. Über das Netzwerk 272 können beispielsweise ein Computersystem 500 eines Herstellers des Fahrzeugs, Computersysteme 600, 620 von sukzessiven Eigentümern des Fahrzeugs und/oder ein Computersystem 400 eines Providers des Programmmoduls 206 mit einem oder mehreren der Blockchain-Server 200, 220, 240 kommunizieren.

Das Computersystem 400 des Providers des Programmmoduls 206 umfasst einen Speicher 402 mit einem öffentlichen kryptografischen Schlüssel 408 eines dem Provider zugeordneten asymmetrischen Schlüsselpaars. Zudem umfasst der Speicher 402 das von dem Providercomputersystem 400 erstellte Programmmodul 206, welches in einem Block der Blockchain 204 gespeichert wird. Zudem umfasst der Speicher 402 einen geschützten Speicherbereich 404, auf welchen ein Zugriff nur über einen Prozessor 412 des Computersystems 400 möglich ist und in dem ein privater kryptografischer Schlüssel 406 des dem Provider zugeordneten asymmetrischen Schlüsselpaars gespeichert ist. Der Prozessor 412 ist dazu konfiguriert Programminstruktionen 414 auszuführen, durch deren Ausführung der Prozessor 412 das Computersystem 400 so steuert, dass es das Programmmodul 206 erstellt und zur Speicherung in der Blockchain 204 an einen der Blockchain-Server 200, 220, 240 überträgt. Zum Nachweis der Authentizität des entsprechenden Programmmoduls 206 kann dieses mit dem privaten kryptografischen Schlüssel 406 signiert sein. Ferner kann das Programmmodul 206 in der Blockchain einer Adresse zugeordnet sein, welche dem öffentlichen kryptografischen Schlüssel 408 des Providers entspricht. Somit ist das Programmmodul 206 initial dem Provider zugeordnet, welcher mithin die Verfügungsgewalt über das Programmmodul 206 besitzt. Die Authentizität des dem Provider zugeordneten asymmetrischen Schlüsselpaar kann zudem beispielsweise durch ein Zertifikat und/oder eine entsprechende PKI belegt werden. Schließlich kann der Prozessor 412 Programminstruktionen 414 ausführen, welche ein kryptografisches Protokoll implementieren. Mittels des kryptografischen Protokolls kann beispielsweise eine Datenübertragung zwischen dem Computersystem 400 des Providers und den Blockchain-Servern 200, 220, 240 kryptografisch gesichert werden. Schließlich umfasst das Computersystem 400 eine Kommunikationsschnittstelle 416 zur Kommunikation über das Netzwerk 272. Nach Ausführungsformen handelt es sich bei dem Computersystem 400 beispielsweise um einen Blockchain-Server des Blockchain-Netzwerks 260.

Das Computersystem 500 des Herstellers des Fahrzeugs umfasst einen Speicher 502 mit einem öffentlichen kryptografischen Schlüssel 508 eines dem Hersteller zugeordneten asymmetrischen Schlüsselpaars. Zudem umfasst der Speicher 502 Fahrzeugdaten 510 zum Personalisieren des Programmmoduls 206, d.h. zum Zuordnen des Programmmoduls 206 zu dem Fahrzeug. Hierzu werden die Fahrzeugdaten 510 in einem Block der Blockchain 204 gespeichert. Die Fahrzeugdaten 510 können dabei auch initiale Fahrzeugdaten des Fahrzeugs umfassen. Zudem umfasst der Speicher 502 einen geschützten Speicherbereich 504, auf welchen ein Zugriff nur über einen Prozessor 512 des Computersystems 500 möglich ist und in dem ein privater kryptografischer Schlüssel 506 des dem Fahrzeughersteller zugeordneten asymmetrischen Schlüsselpaars gespeichert ist. Der Prozessor 512 ist dazu konfiguriert Programminstruktionen 514 auszuführen, durch deren Ausführung der Prozessor 512 das Computersystem 500 so steuert, dass es das Programmmodul 206 Personalisiert, d.h. die Fahrzeugdaten 510 dem Programmmodul 206 zuordnet und in der Blockchain 204 speichert. Zum Nachweis der Authentizität eines entsprechenden Datensatzes mit den Fahrzeugdaten 510 kann dieser mit dem privaten kryptografischen Schlüssel 506 signiert sein. Ferner kann das Programmmodul 206 in der Blockchain beispielsweise einer Adresse zugeordnet werden, welche dem öffentlichen kryptografischen Schlüssel 508 des Fahrzeugherstellers entspricht. Somit kann das Programmmodul 206 zum Personalisieren dem Fahrzeughersteller zugeordnet werden, welcher fortan ebenso wie über das von ihm hergestellte Fahrzeug auch die Verfügungsgewalt über das Programmmodul 206 besitzt. Die Authentizität des dem Fahrzeughersteller zugeordneten asymmetrischen Schlüsselpaar kann zudem beispielsweise durch ein Zertifikat und/oder eine entsprechende PKI belegt werden. Schließlich kann der Prozessor 512 Programminstruktionen 514 ausführen, welche ein kryptografisches Protokoll implementieren. Mittels des kryptografischen Protokolls kann beispielsweise eine Datenübertragung zwischen dem Computersystem 500 des Fahrzeugherstellers und den Blockchain-Servern 200, 220, 240 kryptografisch gesichert werden. Schließlich umfasst das Computersystem 500 eine Kommunikationsschnittstelle 516 zur Kommunikation über das Netzwerk 272.

Ferner können Computersysteme 600, 620 sukzessiver Eigentümer des Fahrzeugs vorgesehen sein, welche jeweils einen Speicher 602, 622 mit einem öffentlichen kryptografischen Schlüssel 608, 628 eines dem entsprechenden Fahrzeugeigentümer zugeordneten asymmetrischen Schlüsselpaars umfassen. Die Speicher 602, 622 umfassen ferner Fahrzeugdaten 610, 630 des Fahrzeugs. Die Fahrzeugdaten 610, 630 können beispielsweise einen Indikator eines Diebstahls und/oder einer Stilllegung des Fahrzeugs umfassen. Ebenso können die Fahrzeugdaten 610, 630 aber beispielsweise auch den Kilometerstand des Fahrzeugs angeben. Zudem umfassen die Speicher 602, 622 jeweils einen geschützten Speicherbereich 604, 624, auf welchen ein Zugriff nur über einen Prozessor 612, 632 des entsprechenden Computersystems 600, 620 möglich ist und in denen jeweils ein privater kryptografischer Schlüssel 606, 626 des dem jeweiligen Fahrzeugeigentümer zugeordneten asymmetrischen Schlüsselpaars gespeichert ist. Die Prozessoren 612, 632 sind dazu konfiguriert Programminstruktionen 614, 634 auszuführen, durch deren Ausführung der jeweilige Prozessor 612, 632 das Computersystem 600, 620 so steuert, dass ein Datensatz mit den Fahrzeugdaten 610, 630 des Fahrzeugs zum Speichern in der Blockchain 204 erzeugt und an einen der Blockchain-Server 200, 220, 240 sendet. Zum Nachweis der Authentizität eines entsprechenden Datensatzes mit den Fahrzeugdaten 610, 630 kann dieser mit dem privaten kryptografischen Schlüssel 606, 626 signiert sein. Ferner kann das Programmmodul 206 in der Blockchain beispielsweise einer Adresse zugeordnet werden, welche dem öffentlichen kryptografischen Schlüssel 608, 628 des jeweiligen Fahrzeugeigentümers entspricht. Somit kann das Programmmodul 206 beispielsweise nach dem Erwerb des Fahrzeugs durch den jeweiligen Eigentümer, dem entsprechenden Fahrzeugeigentümer zugeordnet werden, welcher fortan ebenso wie über das von ihm erworbene Fahrzeug auch die Verfügungsgewalt über das Programmmodul 206 besitzt. Die Authentizität des dem Fahrzeugeigentümer zugeordneten asymmetrischen Schlüsselpaar kann zudem beispielsweise durch ein Zertifikat und/oder eine entsprechende PKI belegt werden. Schließlich können die Prozessoren 612, 632 jeweils Programminstruktionen 614, 634 ausführen, welche ein kryptografisches Protokoll implementieren. Mittels des kryptografischen Protokolls können beispielsweise Datenübertragungen zwischen den Computersystemen 600, 620 der Fahrzeugeigentümer und den Blockchain-Servern 200, 220, 240 kryptografisch gesichert werden. Schließlich umfassen die Computersysteme 600, 620 jeweils eine Kommunikationsschnittstelle 616, 636 zur Kommunikation über das Netzwerk 272.

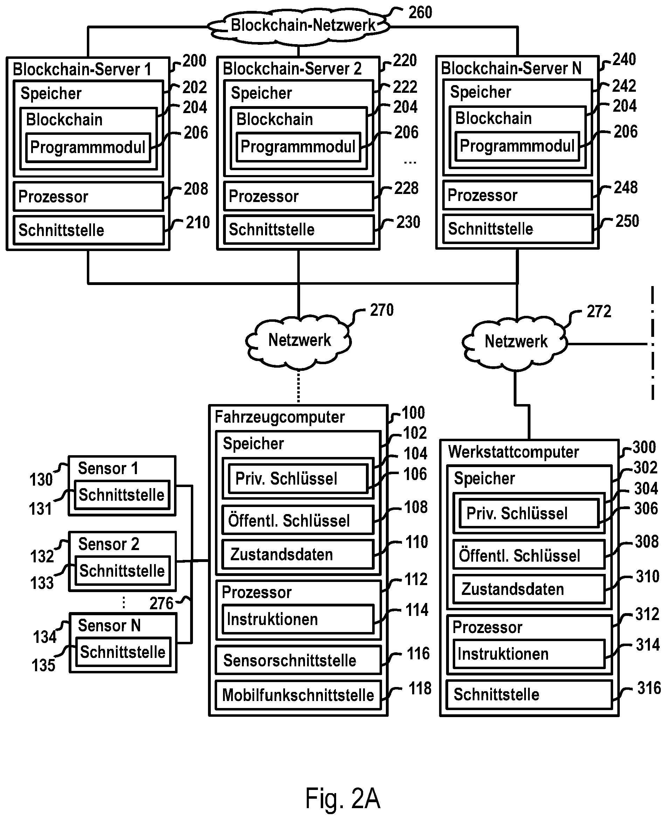

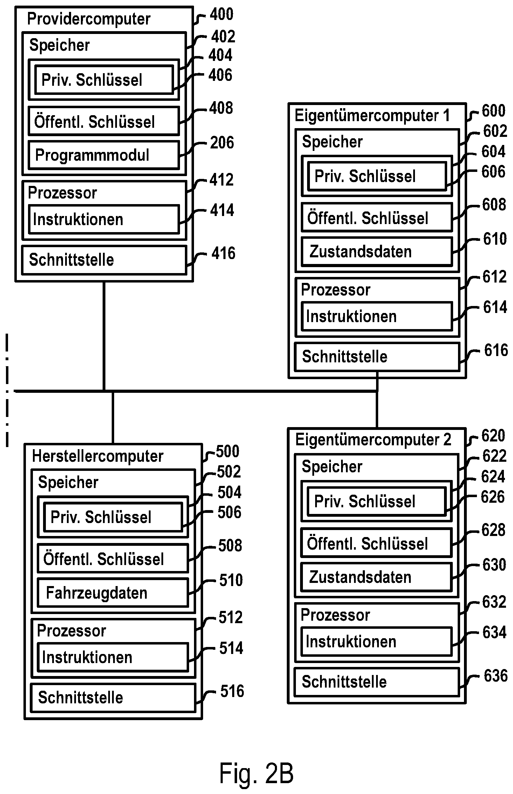

Figuren 2A und 2B zeigen eine zweite Ausführungsform eines exemplarischen Systems zum manipulationssicheren Speichern von Fahrzeugdaten 110, 310, 510, 610 des Fahrzeugs in einer Blockchain 204. Das System entspricht dabei weitestgehend dem System aus den Figuren 1A und 1B. Im Gegensatz zu dem System gemäß den Figuren 1, ist im Falle der Figur 2A das Computersystem 300 der Werkstatt dazu berechtigt selbständig Datensätze mit Fahrzeugdaten 310 an einen oder mehrere der Blockchain-Servern 200, 220, 240 zum Eintragen in die Blockchain 204 zu senden. Hierzu ist das Computersystem 300 dazu konfiguriert mit seiner Kommunikationsschnittstelle 316 über das Netzwerk 272 mit dem Blockchain-Netzwerk 260 zu kommunizieren. Nach weiteren Ausführungsformen kann das Computersystem 300 der Werkstatt zusätzlich wie bereits in Figur 1A gezeigt auch über das Fahrzeugcomputersystem Fahrzeugdaten in die Blockchain 204 eintragen lassen. Hierzu verfügt das Computersystem 300 gemäß Figur 2A zusätzlich über eine Kommunikationsverbindung 274, wie sie in Figur 1A gezeigt ist.

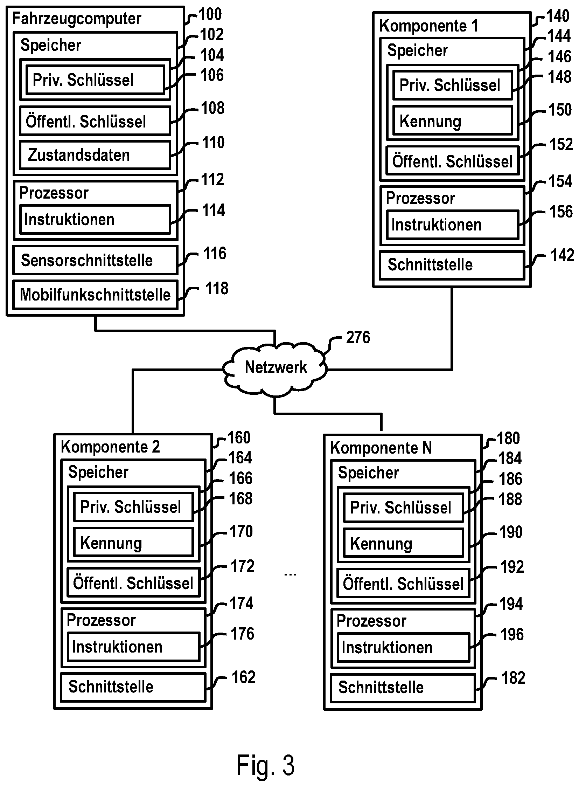

Figur 3 zeigt eine Ausführungsform eines exemplarischen Systems zum Erfassen von Fahrzeugdaten 110 des Fahrzeugs. Das Fahrzeugcomputersystem 100 entspricht den in den Figuren 1A und 2A gezeigten Ausführungsformen. Die fahrzeugeigenen Sensoren umfassen im Falle der Figur 3 eine Mehrzahl von Elektronikkomponenten 140, 160, 180 der Fahrzeugelektronik, welche über das fahrzeugeigene Netzwerk 276 mit dem Fahrzeugcomputersystem 100 verbunden sind.

Die Elektronikkomponenten 140, 160, 180 umfassen jeweils einen Speicher 144, 164, 184 mit einem öffentlichen kryptografischen Schlüssel 152, 172, 192 eines der jeweiligen Elektronikkomponente 140, 160, 180 zugeordneten asymmetrischen Schlüsselpaars. Zudem umfassen die Speicher 144, 164, 184 jeweils einen geschützten Speicherbereich 146, 166, 186, auf welchen ein Zugriff nur über einen Prozessor 154, 174, 194 der jeweiligen Elektronikkomponente 140, 160, 180 möglich ist und in dem ein privater kryptografischer Schlüssel 148, 168, 188 des der jeweiligen Elektronikkomponente 140, 160, 180 zugeordneten asymmetrischen Schlüsselpaars gespeichert ist. Zudem ist in dem geschützten Speicherbereich 146, 166, 186 jeweils eine Kennung 150, 170, 190 der entsprechenden Elektronikkomponente 140, 160, 180 gespeichert. Die Prozessor 154, 174, 194 sind dazu konfiguriert Programminstruktionen 156, 176, 196 auszuführen, durch welche eine kryptografisch gesicherte Übertragung der Kennungen 150, 170, 190 an das Fahrzeugcomputersystem 100 implementiert wird. Schließlich umfassen die Elektronickomponente 140, 160, 180 jeweils eine Kommunikationsschnittstelle 142, 162, 182 zur Kommunikation mit dem Fahrzeugcomputersystem 100 über das Netzwerk 276.

Das System gemäß Figur 3 ermöglicht eine Abfrage der Kennungen, d.h. zum Beispiel der Seriennummern, von einer oder mehreren in dem Fahrzeug eingebauter Komponenten 140, 160, 180 der Fahrzeugelektronik durch das Fahrzeugcomputersystem 100 zum Zusammenstellen von Fahrzeugdaten 110 des Fahrzeugs. Aus empfangenen Seriennummern kann das Fahrzeugcomputersystem 100 beispielsweise Fahrzeugdaten in Form eines die Zusammenstellung der Elektronikkomponenten 140, 160, 180 kennzeichnenden fahrzeugspezifischen Code erstellen, der in mit Hilfe des privaten kryptografischen Schlüssels 106 des Fahrzeugs signiert und zum Eintragen in die Blockchain an einen der Blockchain-Servern 200, 220, 240 übertragen wird. Bei den Elektronikkomponenten 140, 160, 180 handelt es sich beispielsweise um Motorelektronikkomponenten, Fahrwerkselektronikkomponenten und/oder weitere Elektronikkomponenten, die jeweils als gesonderte Electronic Control Units (ECUs) ausgebildet sein können.

Vor der Abfrage der Kennungen, z.B. der Seriennummern, von den Elektronikkomponenten 140, 160, 180 müssen diese Komponenten beispielsweise zunächst untereinander und/oder gegenüber dem Fahrzeugcomputersystem 100 mit Hilfe der jeweiligen Schlüsselpaare kryptografisch authentifiziert werden. Die Authentizität der den Elektronikkomponenten 140, 160, 180 zugeordneten asymmetrischen Schlüsselpaare kann zudem beispielsweise durch Zertifikate und/oder jeweils eine entsprechende PKI belegt werden.

Beispielsweise erzeugt das Fahrzeugcomputersystem 100 bzw. eine authentifizierende Elektronikkomponente eine Zufallszahl, insbesondere ein Pseudo-Zufallszahl, welche mit dem öffentlichen kryptografischen Schlüssel 152, 172, 192 der zu authentifizierenden Elektronikkomponenten 140, 160, 180 verschlüsselt und an die entsprechende zu authentifizierenden Elektronikkomponenten 140, 160, 180 über das Netzwerk 276 gesendet wird, beispielsweise Elektronikkomponente 140. Die Elektronikkomponenten 140 empfängt die verschlüsselte Pseudo-Zufallszahl, entschlüsselt diese mit Hilfe ihres privaten kryptografischen Schlüssels 148 und sendet die entschlüsselte Pseudo-Zufallszahl wieder an das Fahrzeugcomputersystem 100 zurück. Nach Ausführungsformen verschlüsselt die Elektronikkomponente 140 die Pseudo-Zufallszahl mit dem öffentlichen kryptografischen Schlüssel 108 des Fahrzeugcomputersystem 100. Das Fahrzeugcomputersystem 100 empfängt die Pseudo-Zufallszahl von der Elektronikkomponente 140 und entschlüsselt diese gegebenenfalls mit ihrem privaten kryptografischen Schlüssel 106. Nur wenn die von dem Fahrzeugcomputersystem 100 empfangene Pseudo-Zufallszahl mit der ursprünglich gesendeten Zufallszahl übereinstimmt, ist die Elektronikkomponente 140 gegenüber dem Fahrzeugcomputersystem 100 authentifiziert, woraufhin deren Kennung 170 abgefragt werden kann. Die Übertragung der Kennung 170 kann beispielsweise in verschlüsselter Form erfolgen. Beispielsweise wird ein symmetrischer Schlüssel verwendet, der unter Verwendung der Pseudozufallszahl errechnet wird.

Falls die kryptografische einer der Elektronikkomponenten 140, 160, 180 gegenüber dem Fahrzeugcomputersystem 100 fehlschlägt, so kann dieses keinen entsprechenden Code erzeugen und sendet daher als Fahrzeugdaten des Fahrzeugs eine entsprechende Fehlermeldung an die Blockchain-Servern 200, 220, 240, welche diese daraufhin in die Blockchain 204 eintragen.

Fällt eine der Elektronikkomponenten 140, 160, 180 aus und muss diese durch eine neue Elektronikkomponente mit einer neuen Kennung ersetzt werden, so ändert sich durch einen Austausch einer der Elektronikkomponenten 140, 160, 180 der Zustand des Fahrzeugs, was sich damit auch in einem veränderten Code niederschlägt. Nach Ausführungsformen wird der Code jeweils mit dem zuletzt berechneten Code verglichen. Der zuletzt berechnete Code kann beispielsweise in dem Speicher 102 des Fahrzeugcomputers 100 gespeichert sein oder aus der Blockchain 204 abgefragt werden. Unterscheidet sich der neu berechnete Code von dem zuletzt berechneten Code, so umfasst der von dem Fahrzeugcomputers 100 erstellte Datensatz mit dem neuen Code beispielsweise zusätzlich alle einzelnen Kennungen 150, 170, 190 der Elektronikkomponenten 140, 160, 180. Nach weiteren Ausführungsformen werden initial einmal alle Kennungen 150, 170, 190 aller Elektronickomponenten 140, 160, 180 in der Blockchain 204 gespeichert. Anschließend werden bei Änderungen der Zusammenstellung nur diejenigen Kennungen zusammen mit dem neuen Code in der Blockchain gespeichert, welche sich geändert haben, d.h. neu sind. Somit kann beim Austausch einer der Elektronikkomponenten 140, 160, 180 anhand der der Blockchain 204 zudem ermittelt werden, welche der Elektronikkomponenten 140, 160, 180 ausgetauscht wurde.

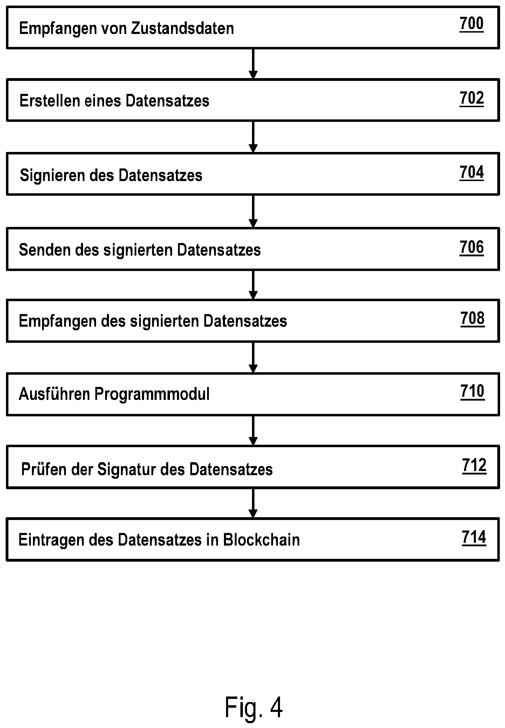

Figur 4 zeigt eine erste Ausführungsform eines exemplarischen Verfahrens zum manipulationssicheren Speichern von Fahrzeugdaten eines Fahrzeugs in einer Blockchain. Die Fahrzeugdaten werden beispielsweise durch ein Computersystem des Fahrzeugs selbst zusammengestellt und zum Eintragen in die Blockchain an einen Blockchain-Server eines Blockchain-Netzwerks gesendet. In Block 700 werden Fahrzeugdaten empfangen. Diese Fahrzeugdaten können beispielsweise von fahrzeugeigenen Sensoren oder externen Sensoren stammen. Je nach Ausführungsform der Sensoren kann vor der Übertragung der Sensormesswerte zunächst eine Authentifizierung eines oder mehrerer Sensoren durch das Fahrzeugcomputersystem und/oder eine Authentifizierung des Fahrzeugcomputersystems durch einen oder mehrere der Sensoren vorgesehen sein. ferner kann auch eine Authentifizierung von Sensoren untereinander vorgesehen sein. Eine Authentifizierung kann beispielsweise unter Verwendung von den zu authentifizierenden Einrichtungen zugeordneten asymmetrischen Schlüsselpaaren erfolgen.

Werden sensormesswerte beispielsweise von einem Computersystem einer autorisierten Werkstatt bereitgestellt, kann beispielsweise vorgesehen sein, dass das Fahrzeugcomputersystem ein asymmetrisches Schlüsselpaar bestehend aus einem öffentlichen kryptografischen Schlüssel und einem privaten kryptografischen Schlüssel sowie einem diesem Schlüsselpaar zugeordneten Zertifikat umfasst, welches dem betreffenden Fahrzeug zugeordnet ist. Das Fahrzeug ist in dem Zertifikat vermerkt. Ferner umfasst das Computersystem der autorisierten Werkstatt zudem ein asymmetrisches Schlüsselpaar bestehend aus einem öffentlichen kryptografischen Schlüssel und einem privaten kryptografischen Schlüssel sowie einem diesem Schlüsselpaar zugeordneten Zertifikat, welches der betreffenden autorisierten Werkstatt zugeordnet ist. Die autorisierte Werkstatt ist in dem Zertifikat vermerkt.

Für die Durchführung einer gegenseitigen kryptografischen Authentifizierung generiert das Fahrzeugcomputersystem und/oder das Computersystem der Werkstatt beispielsweise eine Zufallszahl, insbesondere ein Pseudo-Zufallszahl. Die Pseudo-Zufallszahl(en) werden mit dem jeweiligen privaten kryptografischen Schlüssel von Fahrzeugcomputersystem und/oder Computersystem der Werkstatt verschlüsselt zwischen Fahrzeugcomputersystem und Computersystem der Werkstatt ausgetauscht. Zudem wird mit der verschlüsselten Pseudo-Zufallszahl jeweils auch ein Zertifikat mit dem öffentlichen Schlüssel zum Entschlüsseln der Pseudozufallszahl mitgesendet. Somit können das Fahrzeugcomputersystem und/oder das Computersystem der Werkstatt über den Besitz des jeweiligen privaten Schlüssels Authentifiziert werden.

Nach einer weiteren Ausführungsform wird zur Authentifizierung zunächst eine Zufallszahl, insbesondere ein Pseudo-Zufallszahl von dem Fahrzeugcomputersystem und/oder dem Computersystem der Werkstatt berechnet. Die entsprechende Pseudo-Zufallszahl wird mit dem öffentlichen kryptografischen Schlüssel des Empfängercomputersystems verschlüsselt und an das entsprechende Empfängercomputersystem gesandt. Dieses kann die empfangene verschlüsselte Pseudo-Zufallszahl mit seinem privaten kryptografischen Schlüssel entschlüsseln. Nach Ausführungsformen wird die Pseudo-Zufallszahl anschließend mit dem öffentlichen kryptografischen Schlüssel des ursprünglichen Sendercomputersystems verschlüsselt und an dieses zurückgesendet. Das ursprüngliche Sendercomputersystem kann die Pseudo-Zufallszahl mit seinem privaten kryptografischen Schlüssel entschlüsseln und mit der ursprünglichen Pseudo-Zufallszahl vergleichen. Stimmen diese überein, so ist das Empfängercomputersystem authentifiziert. Ein analoges verfahren kann nun umgekehrt angewandt werden, um das Sendercomputersystem zu authentifizieren. Ferner kann unter Verwendung der Pseudo-Zufallszahl auch ein symmetrischer kryptografischer Schlüssel zur Verschlüsselung der weiteren Kommunikation zwischen den Computersystemen berechnet werden.

Die Übertragung von Sensordaten kann beispielsweise auf eine Anfrage durch das Fahrzeugcomputersystem hin erfolgen. Nach einer alternativen Ausführungsform erfolgt die Übertragung durch den Sensor selbständig. Eine solche selbständige Übertragung kann beispielsweise auf einer Erfüllung eines vordefinierten Kriteriums hin erfolgen. Ein solches vordefiniertes Kriterium kann der beispielsweise ein Ablauf eines vordefinierten Zeitintervalls sein oder ein erfasst Sensormesswert erfüllt ein entsprechendes Kriterium. Beispielsweise liegt der Sensormesswert über oder unter einem vordefinierten Schwellenwert.

In Block 702 erstellt das Fahrzeugcomputersystem einen Datensatz zum Eintragen in die Blockchain, welcher die einzutragenden Fahrzeugdaten umfasst und zudem das dem Fahrzeug zugeordnete Programmmodul identifiziert. Das Programmmodul kann beispielsweise durch eine Kennung, eine dem Programmmodul zugeordnete Adresse oder eine Kennung des Blocks, welcher das Programmmodul umfasst, identifiziert werden. In Block 704 signiert das Fahrzeugcomputersystem den Datensatz mit einem dem Fahrzeugcomputersystem zugeordneten privaten kryptografischen Schlüssel. In Block 706 wird der signierte Datensatz zum Eintragen in die Blockchain an einen Blockchain-Server des Blockchain-Netzwerks gesendet. In Block 708 empfängt der Blockchain-Server den Datensatz. Anhand des Datensatzes identifiziert der Blockchain-Server das zu verwendende Programmmodul, welches in der Blockchain gespeichert ist. In Block 710 wird das Programmmodul durch den Blockchain-Server unter Verwendung des empfangenen Datensatzes ausgeführt. In Block 712 wird die Signatur des Datensatzes geprüft. Beispielsweise ist in der Blockchain der öffentliche kryptografische Schlüssel des Fahrzeugcomputersystems hinterlegt. Nach Ausführungsformen ist das Fahrzeugcomputersystem nur berechtigt Fahrzeugdaten in die Blockchain einzutragen, wenn es hierfür gültig registriert wurde. Beispielsweise wird geprüft, ob der öffentliche kryptografische Schlüssel des Fahrzeugcomputers für das Programmmodul gültig in der Blockchain hinterlegt sein, d.h. ob der entsprechende öffentliche kryptografische Schlüssel zusammen mit einer Kennung des Programmmoduls und einer Signatur des Providers des Programmmoduls in einem Block der Blockchain gespeichert ist. Alternativ kann der entsprechende öffentliche kryptografische Schlüssel mit einer Signatur gespeichert sein, welche auf durch eine in der Blockchain gespeicherte Kette von Signaturen auf eine Signatur des Providers des Programmmoduls zurückgeführt werden kann. Nach Ausführungsformen kann die Blockchain auch Zertifikate umfassen, welche entsprechende öffentliche kryptografische Schlüssel zum Prüfen von Signaturen umfassen und deren Authentizität belegen. Nach Ausführungsformen wird die Authentizität entsprechender Zertifikate beispielsweise durch eine von der Blockchain bereitgestellte PKI belegt.

Ergibt die Prüfung, dass die Signatur des in die Blockchain einzutragenden Datensatzes gültig ist, erfolgt in Block 714 ein eintragen des Datensatzes mit den Fahrzeugdaten des Fahrzeugs durch den Blockchain-Server. Nach Ausführungsformen umfasst der Eintrag einen Zeitstemple. Nachausführungsformen ist bezeichnet der zeitstemple den Zeitpunkt der Messung der den Fahrzeugdaten zugrundeliegenden Messwerten, den Zeitpunkt des Erstellens des Datensatzes und/oder den Zeitpunkt der Eintragung in die Blockchain.

Die Figur 4 wurde hier unter Bezugnahme auf das Fahrzeugcomputersystem beschrieben. In analoger Weise können auch Einträge von Fahrzeugdaten und Fahrzeugspezifikationen von anderen Computersystemen erfolgen, wie etwa einem Providercomputersystem, einem Computersystem einer Werkstatt, einem Computersystem eines Fahrzeugherstellers und/oder dem Computersystem eines Fahrzeugeigentümers. Nach Ausführungsformen ist Voraussetzung hierfür, dass die entsprechenden Computersysteme zu solchen Einträgen berechtigt sind. Eine entsprechende Berechtigung kann wie im Fall Fahrzeugcomputersystem durch signierte Hinterlegung eines dem Computersystem zugeordneten öffentlichen kryptografischen Schlüssel erfolgen.

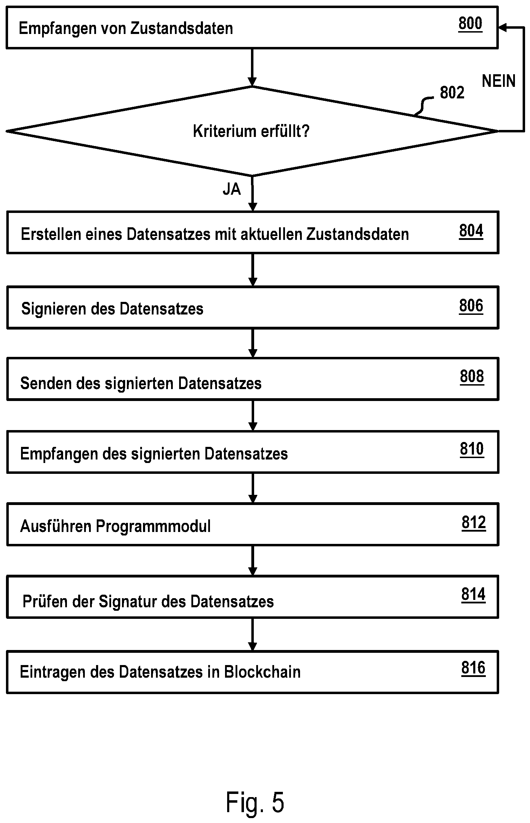

Figur 5 zeigt eine zweite Ausführungsform eines exemplarischen Verfahrens zum manipulationssicheren Speichern von Fahrzeugdaten eines Fahrzeugs in einer Blockchain. Wie in Schritt 700 der Figur 2 werden auch in Schritt 800 der Figur 3 Fahrzeugdaten empfangen. In Schritt 802 wird geprüft, ob ein vordefiniertes Kriterium zum Erstellen eines Datensatzes mit den empfangenen Fahrzeugdaten und Eintragen des entsprechenden Datensatzes in die Blockchain erfüllt ist. Ist das Kriterium erfüllt, so wird das Verfahren in Block 804 mit dem Erstellen eines Datensatzes fortgesetzt, welcher die aktuellen Fahrzeugdaten umfasst. Ist das Kriterium nicht erfüllt, so wird das Verfahren in Block 800 fortgesetzt bis das Kriterium erfüllt wird. Bei dem Kriterium kann es sich beispielsweise um ein Zeitkriterium handeln. Ist eine vordefinierte Zeitspanne abgelaufen, erfolgt ein Eintrag in der Blockchain. Die aktuellen Fahrzeugdaten umfassen dabei beispielsweise entweder die zuletzt erfassten Fahrzeugdaten oder alle in dem Zeitintervall seit der letzten Erstellung eines Datensatzes empfangenen Daten. Als Kriterium für ein Erstellen eines Datensatzes kann beispielsweise auch die Beendigung einer Fahrt dienen, wobei eine Fahrt beispielsweise mit dem Starten der Zündung des Fahrzeugs beginnt und mit dem Ausschalten der Zündung endet. Handelt es sich bei den Fahrzeugdaten um Fahrzeugdaten, bei welchen nur der aktuellste Wert jeweils relevant ist, wie beispielsweise bei dem Kilometerstand des Fahrzeugs, so wird nach Ausführungsformen nur der zuletzt erfasste und damit aktuellste Messwert in den Datensatz aufgenommen. Handelt es bei den Fahrzeugdaten um Fahrzeugdaten, bei welchen alle erfassten Werte relevant sind, wie beispielsweise bei Fehlermeldungen, so werden nach Ausführungsformen alle im relevanten Zeitintervall erfassten Fahrzeugdaten in den Datensatz aufgenommen. Ferner kann das Kriterium beispielsweise ein Über- oder Unterschreiten eines Schwellenwerts durch einen erfassten Messwert sein. Beispielsweise werden relevante Fahrzeugdaten, wie etwa ein aktueller Kilometerstand, jeweils bei Erreichen eines bestimmten Kilometerstands eingetragen. Beispielsweise erfolgt eine Eintragung all 100 km, 500 km, 1.000 km, 2.000 km, 5.000 km oder 10.000 km. Die weiteren Schritte 804 bis 816 sind analog zu den Schritten 702 bis 714 der Figur 4.

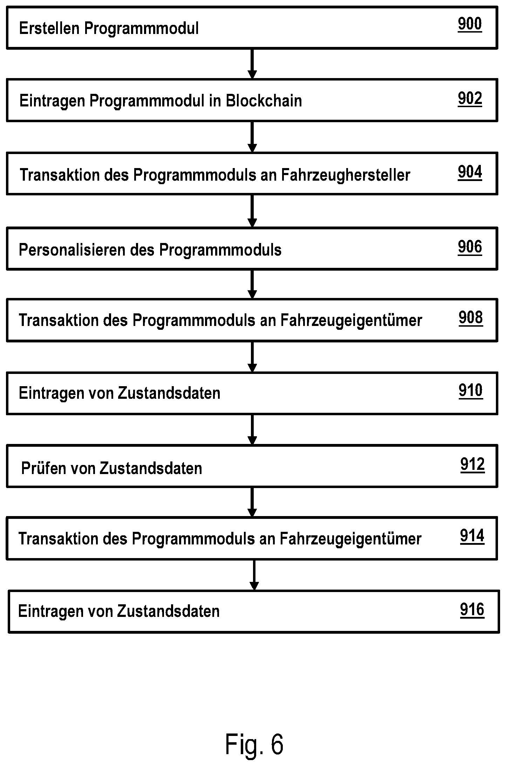

Figur 6 zeigt eine dritte Ausführungsform eines exemplarischen Verfahrens zum manipulationssicheren Speichern von Fahrzeugdaten eines Fahrzeugs in einer Blockchain. In Block 900 wird von dem Provider Computersystem ein Programmmodul erstellt. Die Authentizität des Programmmoduls wird beispielsweise durch eine Signatur mit einem dem Provider zugeordneten privaten kryptografischen Schlüssel belegt. Die Authentizität der Signatur kann beispielsweise durch einen zugehörigen öffentlichen kryptografischen Schlüssel gegebenenfalls in Kombination mit einem entsprechenden Zertifikat nachgewiesen werden. In Block 902 wird das Programmmodul in die Blockchain eingetragen. Nach Ausführungsformen darf beispielsweise nur ein bestimmter Provider oder nur eine begrenzte Anzahl an Providern Programmmodule in die Blockchain eintragen. Das Programmmodul ist beispielsweise noch keinem bestimmten Fahrzeug zugeordnet. Vielmehr umfasst das Programmmodul Programinstruktionen, welche bestimmte Datentypen und Teilnehmertypen des Protokollierungsverfahrens definieren, wie etwa Fahrzeugdaten und Fahrzeugspezifikationen, einen Provider des Programmmoduls, ein Fahrzeug, einen Hersteller des Fahrzeugs, einen Eigentümer des Fahrzeugs, eine Werkstatt. Nach Ausführungsformen ist das Programmmodul initial einer Adresse des Providers zugeordnet, welche beispielsweise einen dem Provider zugeordneten öffentlichen Schlüssel umfasst.

In Block 904 erfolgt eine Transaktion des Programmmoduls von der Adresse des Providers an eine Adresse des Fahrzeugherstellers. Beispielsweise umfasst die dem Fahrzeughersteller zugeordnete Adresse einen öffentlichen kryptografischen Schlüssel des Fahrzeugherstellers. Zusätzlich zur Transaktion des Programmmoduls an die Adresse des Fahrzeugherstellers wird die Berechtigung des Fahrzeugherstellers zum Personalisieren des Programmmoduls für ein bestimmtes Fahrzeug freigeschaltet. Die Freischaltung kann beispielsweise durch einen entsprechenden Funktionsaufruf des Programmmoduls durch den Provider oder durch eine Eingabe eines Passworts von Seiten des Fahrzeugherstellers. Das entsprechende Passwort wird dem Fahrzeughersteller beispielsweise durch den Provider zur Verfügung gestellt. Bei dem Passwort handelt es sich beispielsweise um eine Einmalpasswort, wie etwa eine TAN. Das Passwort wird dem Fahrzeughersteller von dem Provider beispielsweise über eine kryptografisch gesicherte Verbindung zwischen einem Computersystem des Fahrzeugherstellers und einem Computersystem des Providers zur übermittelt. Beispielsweise handelt es sich bei der kryptografisch gesicherten Verbindung verschlüsselte Ende-zu-Ende-Verbindung. Unter einer "verschlüsselten Ende-zu-Ende-Verbindung" bzw. einem "verschlüsselten Ende-zu-Ende-Übertragungskanal" wird hier eine Verbindung zwischen einem Sender und einem Empfänger mit einer Ende-zu-Ende-Verschlüsslung verstanden, bei der zu übertragende Daten vom Sender verschlüsselt und erst vom Empfänger wieder entschlüsselt werden. Die Verschlüsselung übertragener Daten erfolgt somit über alle Übertragungsstationen hinweg, sodass Zwischenstationen aufgrund der Verschlüsslung keine Kenntnis vom Inhalt der übertragenen Daten erlagen können. Die Verbindung wird durch die Verschlüsselung kryptografisch abgesichert, um ein Ausspähen und/oder eine Manipulation der Übertragung zu verhindern, wobei hierzu ein sogenanntes Secure-Messaging-Verfahren eingesetzt werden kann. Eine Ende-zu-Ende-Verschlüsslung beruht beispielsweise auf zwei symmetrischen kryptografischen Schlüsseln, wobei ein erster der symmetrischen Schlüssel zum Verschlüsseln von Nachrichten und ein zweite der symmetrischen Schlüssel zum Authentifizieren des Senders der Nachricht dient.

Der Schlüssel zum Authentifizieren des Senders der Nachricht kann beispielsweise zum Erstellen eines Nachrichtenauthentifizierungscodes (Message Authentication Code, MAC) dienen. Mittels eines MAC lässt sich Gewissheit über den Ursprung der Nachrichten erhalten und deren Integrität verifizieren. MAC-Algorithmen erfordern zwei Eingabeparameter, erstens die zu schützenden Daten und zweitens einen geheimen Schlüssel. Aus diesen beiden wird ein Nachrichtenauthentifizierungscode in Form einer Prüfsumme berechnet. Der Sender einer Nachricht berechnet für die zu übermittelnden Daten der Nachricht einen MAC und sendet die Nachricht zusammen mit dem MAC an den Empfänger. Der Empfänger berechnet den MAC zu der empfangenen Nachricht mit seinem Schlüssel und vergleicht den berechneten MAC mit dem empfangenen MAC. Aus einer Übereinstimmung beider Werte folgt, dass die Nachricht von einer Partei abgeschickt wurde, welche Zugriff auf den geheimen Schlüssel besitzt und die Nachricht wurde während der Übertragung nicht verändert.

In Block 906 wird das Programmmodul von dem Fahrzeughersteller personalisier, d.h. das Programmmodul wird dem Fahrzeug zugeordnet. Hierzu wird beispielsweise ein mit dem privaten kryptografischen Schlüssel des Fahrzeugherstellers signierter Eintrag in der Blockchain erzeugt, welcher einen öffentlichen kryptografischen Schlüssel des Fahrzeugs dem Programmmodul zuordnet. Zudem kann der Eintrag Fahrzeugspezifikationen des Fahrzeugs umfassen, d.h. Attribute des Fahrzeugs.

In Block 908 erfolgt eine Transaktion des Programmmoduls von der Adresse des Fahrzeugherstellers an eine Adresse eines Fahrzeugeigentümers, welcher das Fahrzeug von dem Fahrzeughersteller erwirbt. Beispielsweise umfasst die dem Fahrzeugeigentümer zugeordnete Adresse einen öffentlichen kryptografischen Schlüssel des Fahrzeugeigentümers. In Block 910 werden Fahrzeugdaten des Fahrzeugs unter Verwendung des Programmmoduls beispielsweise durch das Fahrzeugcomputersystem in die Blockchain eingetragen.

In Block 912 können nun beispielsweise die Fahrzeugdaten des Fahrzeugs durch einen Kaufinteressenten geprüft werden. Nach Ausführungsformen werden Fahrzeugdaten welche nicht öffentlich sind verschlüsselt in die Blockchain eingetragen. Beispielsweise werden entsprechende Fahrzeugdaten mit einem öffentlichen kryptografischen Schlüssel des eintragenden Computersystems verschlüsselt, so dass diese nur durch das eintragende Computersystem mit dessen privaten kryptografischen Schlüssel entschlüsselt werden können. In Block 914 erfolgt eine Transaktion des Programmmoduls von der Adresse des bisherigen Fahrzeugeigentümers an eine Adresse eines neuen Fahrzeugeigentümers, welcher das Fahrzeug von dem bisherigen Fahrzeugeigentümer erwirbt. Beispielsweise umfasst die dem neuen Fahrzeugeigentümer zugeordnete Adresse einen öffentlichen kryptografischen Schlüssel des neuen Fahrzeugeigentümers. In Block 916 werden weiterhin Fahrzeugdaten des Fahrzeugs, beispielsweise durch das Fahrzeugcomputersystem, in die Blockchain eingetragen.

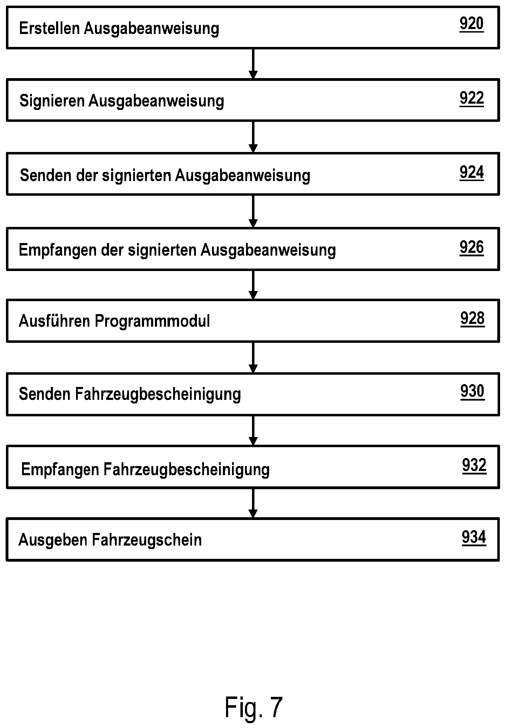

Figur 7 zeigt eine Ausführungsform eines exemplarischen Verfahrens zum Ausgeben einer Fahrzeugbescheinigung unter Verwendung manipulationssicheren in einer Blockchain gespeicherten Fahrzeugdaten eines Fahrzeugs. In Block 920 wird eine Ausgabeanweisung zum Ausgeben der Fahrzeugbescheinigung durch ein Computersystem eines Eigentümers des Fahrzeugs erstellt. Die Ausgabeanweisung identifiziert das dem Fahrzeug zugeordnete Programmmodul, welches Programminstruktionen zum Erstellen der Fahrzeugbescheinigung in der Blockchain bereitstellt. In Block 922 wird die Ausgabeanweisung mit einem privaten kryptografischen Schlüssel des Eigentümers des Fahrzeugs signiert. Der entsprechende private kryptografische Schlüssel ist beispielsweise in einem geschützten Speicherbereich eines Speichers des Computersystems gespeichert. In Block 924 wird die signierte Ausgabeanweisung durch das Computersystem des Eigentümers über ein Netzwerk an einen Blockchain-Server des Blockchain-Netzwerks gesendet. Nach Ausführungsformen erfolgt das Senden beispielsweise über eine Ende-zu-Endeverschlüsselte Kommunikationsverbindung.

In Block 926 empfängt der Blockchain-Server die signierte Ausgabeanweisung und führt in Block 928 Programminstruktionen des durch die Ausgabeanweisung identifizierten Programmmoduls aus. Das Ausführen der Programminstruktionen umfasst ein Prüfen der Signatur der empfangenen Ausgabeanweisung unter Verwendung eines öffentlichen kryptografischen Schlüssels des Eigentümers. Der entsprechende öffentliche kryptografische Schlüssel des Eigentümers ist beispielsweise in der Blockchain gespeichert und dem Programmmodul zugeordnet. Beispielsweise ist der entsprechende Eigentümer als der aktuelle Eigentümer des Fahrzeugs in der Blockchain eingetragen. Im Falle das die Prüfung ergibt, dass die Signatur der Ausgabeanweisung gültig ist wird die angeforderte Fahrzeugbescheinigung erstellt, indem die in der Blockchain gespeicherten aktuellen Werte für die von der Fahrzeugbescheinigung umfassten Angaben ausgelesen werden. Bei den aktuellen Werten handeltet es sich beispielsweise jeweils um den für die jeweilige Angabe zuletzt gespeicherten Wert. In Block 930 wird die Fahrzeugbescheinigung in Antwort auf die Ausgabeanweisung durch den Blockchain-Server an das Computersystem des Eigentümers gesendet. Dies erfolgt beispielsweise wiederum über eine Ende-zu-Ende-verschlüsselte Kommunikationsverbindung.

In Block 932 empfängt das Computersystem des Eigentümers die Fahrzeugbescheinigung und gibt die in Block 934 aus. Die Ausgabe kann beispielsweise durch ein Drucken der Fahrzeugbescheinigung erfolgen oder durch ein Anzeigen auf einem Display des Computersystems, insbesondere wenn es sich bei dem Computersystem um ein mobiles tragbares Kommunikationsgerät handelt. Die ausgegebene Fahrzeugbescheinigung umfasst dabei einen maschinenlesbaren Code. Dieser maschinenlesbare Code identifiziert das dem Fahrzeug zugeordnete Programmmodul und stellt einen privaten kryptografischen Schlüssel eines asymmetrischen Schlüsselpaars zum Auslesen der aktuellen Werte für die Angaben in der Fahrzeugbescheinigung. Durch ein Erfassen des maschinenlesbaren Codes kann der privaten kryptografischen Schlüssel extrahiert und als Nachweis einer Leseberechtigung zum Lesen der entsprechenden Werte aus der Blockchain dienen. In der Blockchain ist ein dem entsprechenden privaten kryptografischen Schlüssel zugeordneter öffentlicher kryptografischer Schlüssel identifiziert, z. B. gespeichert, als Prüfwert zum Prüfen einer Signatur einer Leseanfrage zum Lesen von Fahrzeugdaten der Fahrzeugbescheinigung aus der Blockchain. Die entsprechenden Fahrzeugdaten können aus der Blockchain ausgelesen und mit den Angaben der aufgegebenen Fahrzeugbescheinigung abgeglichen werden. Stimmen die Werte überein ist der Fahrzeugschein gültig.

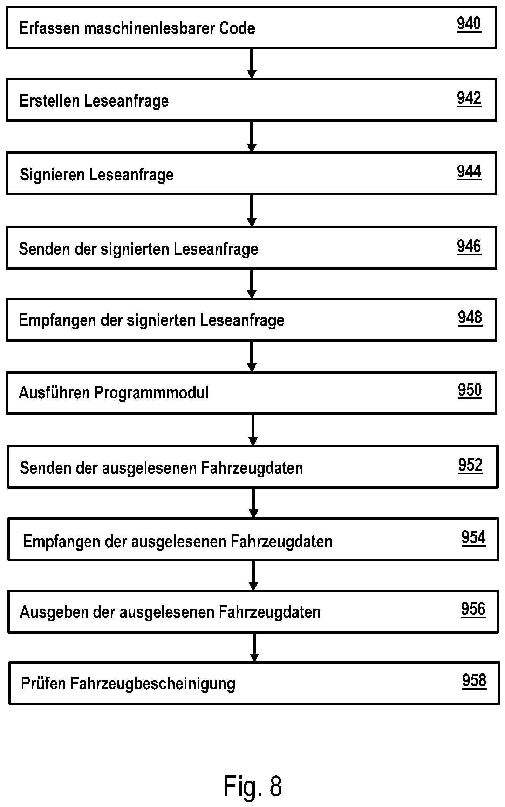

Figur 8 zeigt eine Ausführungsform eines exemplarischen Verfahrens zum Auslesen von manipulationssicheren in einer Blockchain gespeicherten Fahrzeugdaten eines Fahrzeugs. In Block 940 wird der von der ausgegebenen Fahrzeugbescheinigung bereitgestellte maschinenlesbare Code mit einem Lesegerät eines Prüfcomputersystems erfasst. Beispielsweise handelt es sich bei dem Lesegerät um ein optoelektronische Lesegerät zum Erfassen eines in maschinenlesbarer Form auf die Fahrzeugbescheinigung gedruckten Codes oder eines als Teil der Fahrzeugbescheinigung auf einem Display angezeigten Codes. In Block 942 wird eine Leseanfrage mit dem Identifikator des Programmmoduls zum Lesen von Fahrzeugdaten der Fahrzeugbescheinigung aus der Blockchain unter Verwendung des erfassten maschinenlesbaren Codes erstellt. In Block 944 wird die Leseanfrage mit dem von dem maschinenlesbaren Code bereitgestellten privaten kryptografischen Schlüssel signiert. Falls der bereitgestellte private kryptografische Schlüssel verschlüsselt ist, wird dieser zunächst entschlüsselt. In Block 946 wird die signierte Leseanfrage durch das Prüfcomputersystem über ein Netzwerk, beispielsweise ein Mobilfunknetzwerk, falls es sich bei dem Prüfcomputersystem um ein mobiles Tragbares Telekommunikationsgerät handelt, an einen Blockchain-Server des Blockchain-Netzwerks gesendet.

In Block 948 wird der signierten Leseanfrage durch den Blockchain-Server empfangen und in Block 950 werden Programminstruktionen des durch die Leseanfrage identifizierten Programmmoduls ausgeführt. Das Ausführen der Programminstruktionen umfasst ein Prüfen der Signatur der Leseanfrage unter Verwendung des von dem Programmmodul identifizierten öffentlichen kryptografischen Schlüssels zum Prüfen von Leseranfragen. Im Falle einer gültigen Signatur werden die angefragten Fahrzeugdaten der Fahrzeugbescheinigung aus der Blockchain ausgelesen. In Block 952 werden die ausgelesenen Fahrzeugdaten durch den Blockchain-Server in Antwort auf die Leseanfrage an das Prüfcomputersystem gesendet und in Block 954 durch das Prüfcomputersystem empfangen. In Block 956 werden die ausgelesenen Fahrzeugdaten durch das Prüfcomputersystem ausgegeben, z.B. auf einem Display angezeigt, und in Block 958 erfolgt eine Prüfung der Fahrzeugbescheinigung. Beispielsweise werden die Fahrzeugdaten gemäß Fahrzeugschein mit den ausgelesenen Fahrzeugdaten abgeglichen. Bei einer Übereinstimmung ist der Fahrzeugschein gültig, bei Abweichungen ist der ungültig.

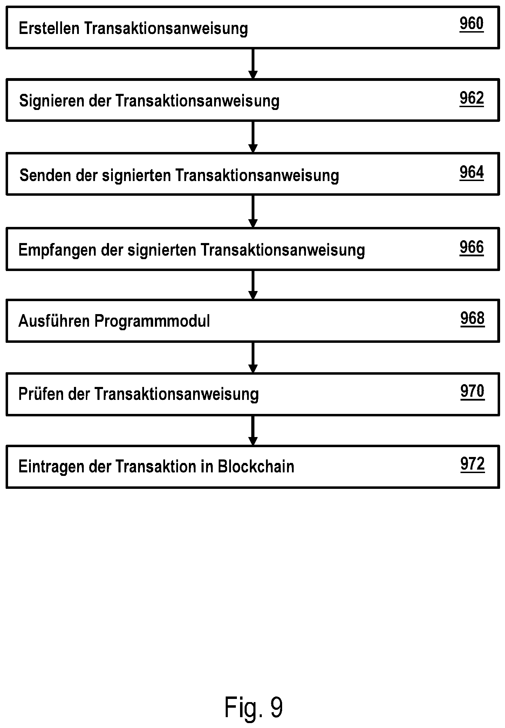

Figur 9 zeigt eine Ausführungsform eines exemplarischen Verfahrens zum Übertragen des Eigentums an einem Fahrzeug von einem ersten Eigentümer an einen zweiten Eigentümer. In Block 960 wird eine Transaktionsanweisung zur Transaktion des Programmmoduls von einer dem ersten Fahrzeugeigentümer zugeordneten Adresse, welche einem asymmetrischen Schlüsselpaar des ersten Fahrzeugeigentümers zugeordnet ist, an eine einem zweiten Fahrzeugeigentümer zugeordneten Adresse. In Block 962 wird die Transaktionsanweisung durch das Computersystem des Fahrzeugeigentümers, d.h. des ersten Eigentümers, mit dem privaten kryptografischen Schlüssel des ersten Eigentümers signiert. In Block 964 wird die signierte Transaktionsanweisung durch das Computersystem des ersten Fahrzeugeigentümers über ein Netzwerk an einen Blockchain-Server des Blockchain-Netzwerks gesendet.

In Block 966 empfängt der Blockchain-Server die Transaktionsanweisung. In Block 968 führt der Blockchain-Server Programminstruktionen des durch die Transaktionsanweisung identifizierten Programmmoduls aus. In Block 970, wird im Zuge der Ausführung geprüft, ob die erste Transaktionsanweisung mit dem der Adresse des ersten Fahrzeugeigentümers zugeordneten privaten kryptografischen Schlüssel gültig signiert ist. In Block 972 wird die Transaktionsanweisung, im Falle einer gültigen Signatur, zu einem zusätzlichen Block für die Blockchain hinzugefügt.

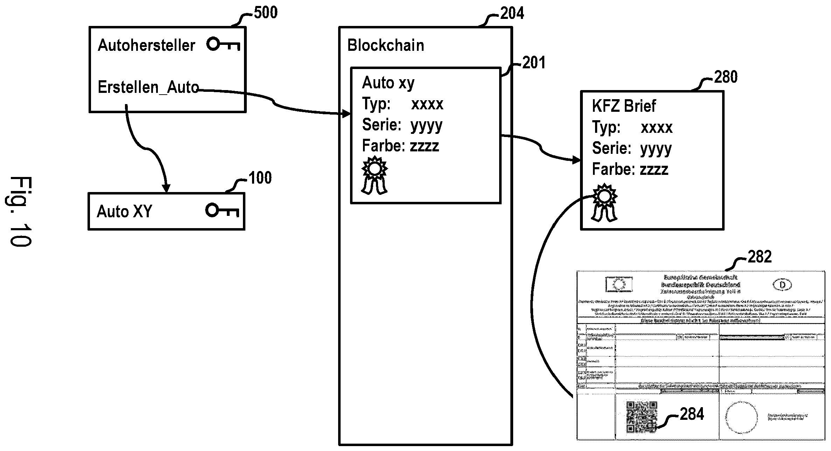

Figur 10 zeigt ein Blockdiagramm eines Verfahrens zum manipulationssichern Speichern von Fahrzeugdaten in einer Blockchain 204. Ein Fahrzeughersteller, beispielsweise ein Hersteller eines Autos, verfügt über ein Herstellercomputersystem 500. Der Hersteller stellt ein Auto her, welches ein Fahrzeugcomputersystem 100 umfasst. Sowohl das Herstellercomputersystem 500 als auch das Fahrzeugcomputersystem 100 umfassen jeweils einen privaten kryptografischen Schlüssel zum Nachweisen von Berechtigungen. Im Zuge der Herstellung erstellt der Fahrzeughersteller einen das Fahrzeug charakterisierenden Datensatz und speichert diesen unter Verwendung eines von der Blockchain 204 bereitgestellten Programmmoduls in einem Eintrag 201 in der Blockchain 204. Dieser Eintrag umfasst beispielsweise eine Fahrzeug-ID, eine Fahrzeugtypenbezeichnung, eine Seriennummer, eine Farbangabe etc. Zum Ausgeben einer Fahrzeugbescheinigung 282 kann der das Fahrzeug charakterisierende Datensatz 280 aus der Blockchain 280 ausgelesen und in Form einer Fahrzeugbescheinigung 282 ausgegeben werden, z.B. ausgedruckt oder auf einem Display angezeigt werden. Die die Fahrzeugbescheinigung 282 umfasst beispielsweise einen maschinenlesbaren Code 284, mit daten zu dem Fahrzeug in der Blockchain 2904 identifiziert und ausgelesen werden können. Somit kann beispielsweise die Gültigkeit der Angaben der Fahrzeugbescheinigung 282 unter Verwendung der Blockchain 204 geprüft werden.

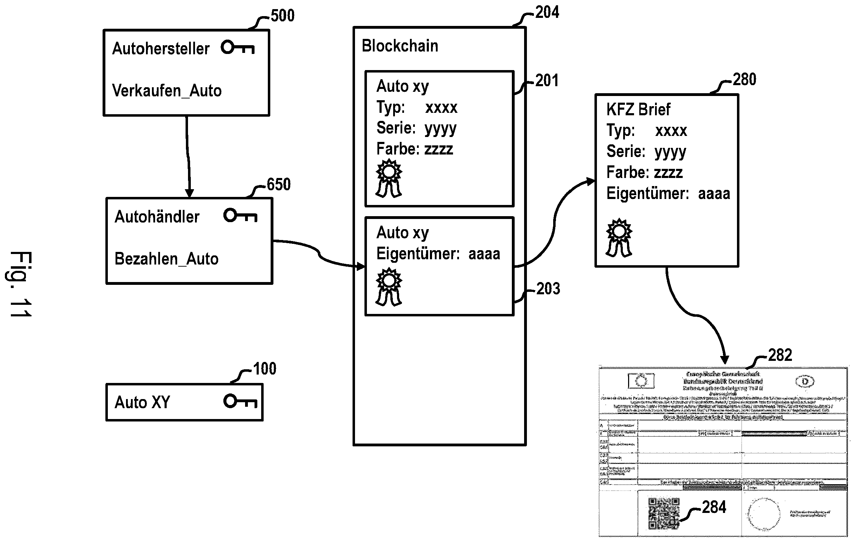

Figur 11 zeigt ein Blockdiagramm eines Verfahrens zum manipulationssichern Eintragen eines Eigentümers des Fahrzeugs in der Blockchain 204. Das Fahrzeug wird von dem Hersteller an einen Händler ausgeliefert bzw. verkauft, welcher über ein Händlercomputersystem mit einem dem Händler zugeordneten privaten kryptografischen Schlüssel zum Nachweis von Berechtigungen des Händlers verfügt. Nach Ausführungsformen kann der Verkauf ebenfalls über die Blockchain 204 abgewickelt werden. Wobei das Abwickeln des Verkaufs eine Überweisung eines Betrags einer Kryptowährung von einer dem Händler zugeordneten Adresse an eine dem Hersteller zugeordnete Adresse umfasst. Im Zuge der Auslieferung wird beispielsweise ein Eintrag 203 zu der Blockchain hinzugeführt, welcher den Autohändler als Eigentümer des Fahrzeugs identifiziert. Bei einer Ausgabe einer Fahrzeugbescheinigung nach der Auslieferung des Fahrzeugs umfasst der für das Fahrzeug charakteristische Datensatz zusätzlich eine Angabe, welche den Händler als den aktuellen Eigentümer des Fahrzeugs identifiziert.

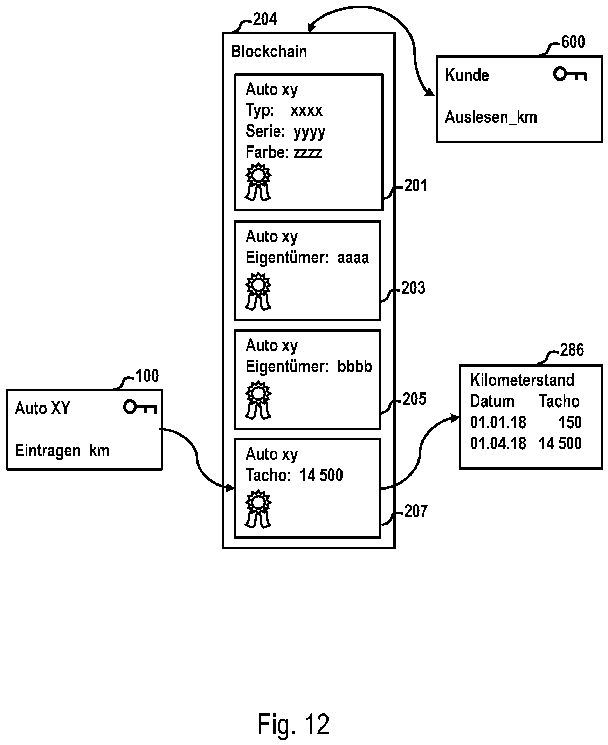

Figur 12 zeigt ein Blockdiagramm eines Verfahrens zum manipulationssichern Eintragen von Zustandsdaten des Fahrzeugs in der Blockchain 204, wie etwa einen Kilometerstand des Fahrzeugs. Das Fahrzeug ist von dem Händler an einen Kunden verkauft worden, weshalb die Blockchain einen weiteren Eintrag 205 umfasst, welcher einen Eigentümerwechsel anzeigt. Das Fahrzeugcomputersystem 100 erfasst einen aktuellen Kilometerstand und trägt diesen in einen weiteren Eintrag 207 der Blockchain 204 ein. Somit kann aus der Blockchain 204 beispielsweise ein Datensatz 286 mit einer Historie der Kilometerstände des Fahrzeugs durch einen Eigentümer des Fahrzeugs ausgelesen werden. Der Eigentümer verfügt beispielsweise über ein Eigentümercomputersystem 600 mit einem dem Eigentümer zugeordneten privaten kryptografischen Schlüssel. Mit diesem privaten kryptografischen Schlüssel kann der Eigentümer z.B. seine Berechtigung zum Auslesen der Historie der Kilometerstände nachweisen. Anhand der Historie der Kilometerstände können Tachomanipulationen effektiv erkannt werden.

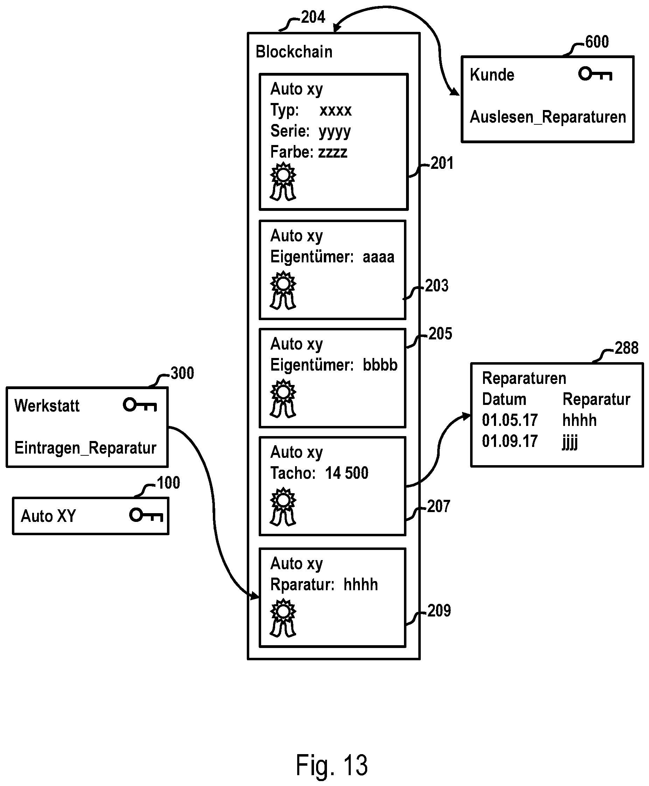

Figur 13 zeigt ein Blockdiagramm eines Verfahrens zum manipulationssichern Eintragen von Reparaturdaten des Fahrzeugs in der Blockchain 204. Führt eine Werkstatt eine Reparatur an dem Fahrzeug aus, wird beispielsweise unter Verwendung eines Werkstattcomputersystems 300 mit einem der Werkstatt zugeordneten privaten kryptographischen Schlüssel als Signaturschlüssel, ein Eintrag 209 in der Blockchain mit Daten zu der Reparatur erstellt. Der Eigentümer des Fahrzeugs kann mit seinem Eigentümercomputersystem 600 eine Historie der an dem Fahrzeug ausgeführten Reparaturarbeiten aus der Blockchain auslesen. Auf eine entsprechende mit seinem privaten kryptographischen Schlüssel signierte Anfrage erhält der Eigentümer einen Datensatz 288 mit der Historie der an dem Fahrzeug ausgeführten Reparaturarbeiten.

### Bezugszeichenliste

- 100: Fahrzeugcomputersystem
- 102: Speicher
- 104: geschützter Speicherbereich
- 106: privater kryptografischer Schlüssel
- 108: öffentlicher kryptografischer Schlüssel
- 110: Fahrzeugdaten
- 112: Prozessor
- 114: Programminstruktionen
- 116: Sensorschnittstelle
- 118: Mobilfunkschnittstelle
- 120: Kommunikationsschnittstelle
- 130: Sensor
- 131: Sensorschnittstelle
- 132: Sensor
- 133: Sensorschnittstelle
- 134: Sensor
- 135: Sensorschnittstelle
- 140: Elektronikkomponente
- 142: Sensorschnittstelle
- 144: Speicher
- 146: geschützter Speicherbereich
- 148: privater kryptografischer Schlüssel
- 150: Kennung
- 152: öffentlicher kryptografischer Schlüssel
- 154: Prozessor
- 156: Programminstruktionen
- 160: Elektronikkomponente
- 162: Sensorschnittstelle
- 164: Speicher
- 166: geschützter Speicherbereich
- 168: privater kryptografischer Schlüssel
- 170: Kennung
- 172: öffentlicher kryptografischer Schlüssel
- 174: Prozessor
- 176: Programminstruktionen
- 180: Elektronikkomponente
- 182: Sensorschnittstelle
- 184: Speicher
- 186: geschützter Speicherbereich
- 188: privater kryptografischer Schlüssel
- 190: Kennung
- 192: öffentlicher kryptografischer Schlüssel
- 194: Prozessor
- 196: Programminstruktionen
- 200: Blockchain-Server
- 201: Eintrag
- 202: Speicher
- 203: Eintrag
- 204: Blockchain
- 205: Eintrag
- 206: Programmmodul
- 207: Eintrag
- 208: Prozessor
- 209: Eintrag
- 210: Kommunikationsschnittstelle
- 220: Blockchain-Server
- 222: Speicher
- 228: Prozessor
- 230: Kommunikationsschnittstelle
- 240: Blockchain-Server
- 242: Speicher
- 248: Prozessor
- 250: Kommunikationsschnittstelle
- 260: Blockchain-Netzwerk
- 270: Mobilfunknetzwerk
- 272: Netzwerk
- 274: Kommunikationsverbindung
- 276: Netzwerk
- 280: Datensatz
- 282: Fahrzeugbescheinigung
- 284: maschinenlesbarer Code
- 286: Datensatz
- 288: Datensatz
- 300: Werkstattcomputersystem
- 302: Speicher
- 304: geschützter Speicherbereich
- 306: privater kryptografischer Schlüssel
- 308: öffentlicher kryptografischer Schlüssel
- 310: Fahrzeugdaten
- 312: Prozessor
- 314: Programminstruktionen
- 316: Kommunikationsschnittstelle
- 400: Providercomputersystem
- 402: Speicher
- 404: geschützter Speicherbereich
- 406: privater kryptografischer Schlüssel
- 408: öffentlicher kryptografischer Schlüssel
- 412: Prozessor
- 414: Programminstruktionen
- 416: Kommunikationsschnittstelle
- 500: Herstellercomputersystem
- 502: Speicher
- 504: geschützter Speicherbereich
- 506: privater kryptografischer Schlüssel
- 508: öffentlicher kryptografischer Schlüssel
- 510: Fahrzeugdaten
- 512: Prozessor
- 514: Programminstruktionen
- 516: Kommunikationsschnittstelle
- 600: Eigentümercomputersystem
- 602: Speicher
- 604: geschützter Speicherbereich
- 606: privater kryptografischer Schlüssel
- 608: öffentlicher kryptografischer Schlüssel
- 610: Fahrzeugdaten
- 612: Prozessor
- 614: Programminstruktionen
- 616: Kommunikationsschnittstelle
- 620: Eigentümercomputersystem
- 622: Speicher
- 624: geschützter Speicherbereich
- 626: privater kryptografischer Schlüssel
- 628: öffentlicher kryptografischer Schlüssel
- 630: Fahrzeugdaten
- 632: Prozessor
- 634: Programminstruktionen
- 636: Kommunikationsschnittstelle
- 650: Händlercomputersystem

## Patentansprüche

1. Verfahren zum manipulationssicheren Speichern von Fahrzeugdaten (110, 310, 510, 610) eines Fahrzeugs in einer Blockchain (204), wobei die Blockchain (204) in einem Block ein Programmmodul (206) mit ersten und zweiten Programminstruktionen umfasst, wobei das Programmmodul (206) dem Fahrzeug zugeordnet ist, wobei durch Ausführen der ersten Programminstruktionen ein dem Programmmodul (206) zugeordneter Eintrag mit Fahrzeugdaten (110, 310, 510, 610) des Fahrzeugs in der Blockchain (204) erzeugt wird, wobei durch Ausführen der zweiten Programminstruktionen eine Fahrzeugbescheinigung (282) mit einem das Fahrzeug charakterisierenden ersten Datensatz erstellt wird, wobei der erste Datensatz in einem dem Programmmodul (206) zugeordneten Eintrag der Blockchain (204) gespeicherte Fahrzeugdaten umfasst, wobei das Programmmodul (206) einem ersten öffentlichen kryptografischen Schlüssel eines ersten asymmetrischen Schlüsselpaars eines ersten Fahrzeugeigentümers zugeordnet ist, wobei in einem Speicher eines Computersystems eines ersten Eigentümers des Fahrzeugs ein privater kryptografischer Schlüssel des ersten asymmetrischen Schlüsselpaars gespeichert ist,
wobei das Verfahren umfasst:
• Erstellen einer Ausgabeanweisung zum Ausgeben der Fahrzeugbescheinigung (282), wobei die Ausgabeanweisung das dem Fahrzeug zugeordnete Programmmodul (206) identifiziert,
• Signieren der Ausgabeanweisung mit dem ersten privaten kryptografischen Schlüssel,
• Senden der signierten Ausgabeanweisung durch das Computersystem des ersten Eigentümers über ein erstes Kommunikationsnetzwerk (272) an einen Blockchain-Server (200, 220, 240) einer Mehrzahl von Blockchain-Servern (200, 220, 240) des Blockchain-Netzwerks (260), welche dazu konfiguriert sind die Programminstruktionen des Programmmoduls (206) auszuführen,
• Empfang der signierten Ausgabeanweisung durch den Blockchain-Server (200, 220, 240),
• Ausführen der zweiten Programminstruktionen des durch die Ausgabeanweisung identifizierten Programmmoduls (206) durch den Blockchain-Server (200, 220, 240), wobei das Ausführen der zweiten Programm instruktionen ein Prüfen der Signatur der Ausgabeanweisung unter Verwendung des ersten öffentlichen kryptografischen Schlüssels (108) umfasst und, im Falle einer gültigen Signatur, ein Erstellen der Fahrzeugbescheinigung (282),
• Senden der Fahrzeugbescheinigung (282) durch den Blockchain-Server (200, 220, 240) an das Computersystem des ersten Eigentümers,
• Empfangen der Fahrzeugbescheinigung (282) durch das Computersystem des ersten Eigentümers,
• Ausgeben der Fahrzeugbescheinigung (282) durch das Computersystem des ersten Eigentümers, wobei die ausgegebene Fahrzeugbescheinigung (282) einen maschinenlesbaren Code (284) umfasst, wobei der maschinenlesbare Code (284) das dem Fahrzeug zugeordnete Programmmodul (206) identifiziert und einen zweiten privaten kryptografischen Schlüssel eines zweiten asymmetrischen Schlüsselpaars umfasst, wobei ein zweiter öffentlicher kryptografischer Schlüssel des zweiten asymmetrischen Schlüsselpaars in der Blockchain (204) identifiziert ist als Prüfwert zum Prüfen einer Signatur einer Leseanfragen zum Lesen von Fahrzeugdaten der Fahrzeugbescheinigung (282) aus der Blockchain (204).

2. Verfahren nach Anspruch 1, wobei der zweite private kryptografische Schlüssel mit einem in der Blockchain (204) identifizierten dritten öffentlichen kryptografischen Schlüssel eines dritten asymmetrischen Schlüsselpaars verschlüsselt ist, wobei es der maschinenlesbare Code (284) mit dem verschlüsselten zweiten privaten kryptografischen Schlüssel einem Besitzer eines dritten privaten kryptografischen Schlüssels des dritten asymmetrischen Schlüsselpaars ermöglicht, Leseanfragen zum Lesen von Fahrzeugdaten der Fahrzeugbescheinigung (282) aus der Blockchain (204) mit dem zweiten privaten kryptografischen Schlüssel gültig zu signieren.

3. Verfahren nach einem der vorangehenden Ansprüche, wobei das zweite asymmetrische Schlüsselpaar identisch mit dem ersten asymmetrischen Schlüsselpaar ist, oder
wobei das zweite asymmetrische Schlüsselpaar ein fahrzeugbescheinigungsindividuelles Schlüsselpaar ist, wobei die Ausgabeanweisung den zweiten öffentlichen kryptografischen Schlüssel umfasst und wobei der zweite öffentliche kryptografische Schlüssel, im Fall einer gültigen Signatur, in der Blockchain (204) gespeichert wird.

4. Verfahren nach einem der vorangehenden Ansprüche, wobei das Ausgeben ein Ausdrucken der Fahrzeugbescheinigung (282) unter Verwendung eines Druckers umfasst, und/oder
wobei das Ausgeben ein Anzeigen der Fahrzeugbescheinigung (282) auf einem Display eines mobilen tragbaren Telekommunikationsgeräts umfasst.

5. Verfahren nach einem der vorangehenden Ansprüche, wobei das Verfahren ferner umfasst:
• Erfassen des maschinenlesbaren Codes (284) der ausgegebenen Fahrzeugbescheinigung (282) mit einem Lesegerät eines Prüfcomputersystems,
• Erstellen der Leseanfrage zum Lesen von Fahrzeugdaten der Fahrzeugbescheinigung (282) aus der Blockchain (204) unter Verwendung des erfassten maschinenlesbaren Codes (284), wobei die Leseanfrage den von dem maschinenlesbaren Code (284) bereitgestellten Identifikator des Programmmoduls (206) umfasst,
• Signieren der Leseanfrage mit dem von dem maschinenlesbaren Code (284) bereitgestellten zweiten privaten kryptografischen Schlüssel,
• Senden der signierten Leseanfrage durch das Prüfcomputersystem über ein zweites Kommunikationsnetzwerk (272) an einen Blockchain-Server (200, 220, 240) des Blockchain-Netzwerks (260),
• Empfang der signierten Leseanfrage durch den Blockchain-Server (200, 220, 240),
• Ausführen dritter Programminstruktionen des durch die Leseanfrage identifizierten Programmmoduls (206) durch den Blockchain-Server (200, 220, 240), wobei das Ausführen der dritten Programminstruktionen ein Prüfen der Signatur der Leseanfrage unter Verwendung des von dem Programmmodul (206) identifizierten zweiten öffentlichen kryptografischen Schlüssels (108) umfasst und, im Falle einer gültigen Signatur, ein Auslesen der zum Lesen angefragten Fahrzeugdaten der Fahrzeugbescheinigung (282),
• Senden der ausgelesenen Fahrzeugdaten durch den Blockchain-Server (200, 220, 240) an das Prüfcomputersystem,
• Empfangen der ausgelesenen Fahrzeugdaten durch das Prüfcomputersystem,
• Ausgeben der ausgelesenen Fahrzeugdaten durch das Prüfcomputersystem,
wobei das Verfahren ferner beispielsweise ein Entschlüsseln des von dem maschinenlesbaren Code (284) in verschlüsselter Form bereitgestellten zweiten privaten kryptografischen Schlüssel mit dem dritten privaten Schlüssel umfasst.

6. Verfahren nach einem der vorangehenden Ansprüche, wobei das Verfahren umfasst:
• Erstellen einer ersten Transaktionsanweisung zur Transaktion des Programmmoduls (206) von einer dem ersten Fahrzeugeigentümer zugeordneten ersten Adresse, welche dem ersten asymmetrischen Schlüsselpaar zugeordnet ist, an eine einem zweiten Fahrzeugeigentümer zugeordneten zweiten Adresse,
• Signieren der ersten Transaktionsanweisung durch das Computersystem (500) des ersten Fahrzeugeigentümers mit dem ersten privaten kryptografischen Schlüssel (506),
• Senden der signierten ersten Transaktionsanweisung durch das Computersystem (500) des ersten Fahrzeugeigentümers über ein drittes Kommunikationsnetzwerk (272) an einen Blockchain-Server (200, 220, 240) des Blockchain-Netzwerks (260),
• Empfangen der ersten Transaktionsanweisung durch den Blockchain-Server (200, 220, 240),
• Ausführen vierter Programminstruktionen des durch die Transaktionsanweisung identifizierten Programmmoduls (206) durch den Blockchain-Server (200, 220, 240), wobei das Ausführen der vierten Programminstruktionen ein Prüfen umfasst, ob die erste Transaktionsanweisung mit dem der ersten Adresse zugeordneten privaten kryptografischen Schlüssel (506) gültig signiert ist, und, im Falle einer gültigen Signatur, Hinzufügen der ersten Transaktionsanweisung zu einem zusätzlichen Block für die Blockchain (204).

7. Verfahren nach einem der vorangehenden Ansprüche, wobei das Fahrzeug ein Fahrzeugcomputersystem (100) umfasst, wobei das Fahrzeugcomputersystem (100) einen Speicher (102) umfasst, wobei in dem Speicher (102) ein vierter privater kryptografischer Schlüssel (106) eines dem Fahrzeug zugeordneten vierten asymmetrischen Schlüsselpaars gespeichert ist, wobei das Fahrzeugcomputersystem (100) eine Mobilfunkschnittstelle (118) zur Kommunikation über ein Mobilfunknetzwerk (270) umfasst, wobei das Programmmodul (206) einen vierten öffentlichen kryptografischen Schlüssel (108) des dem Fahrzeug zugeordneten asymmetrischen Schlüsselpaars identifiziert,
wobei das Verfahren umfasst:
• Empfangen von Fahrzeugdaten (110, 310) des Fahrzeugs durch das Fahrzeugcomputersystem (100),
• Erstellen eines zweiten Datensatzes zum Eintragen in die Blockchain (204), wobei der zweite Datensatz die Fahrzeugdaten (110, 310) des Fahrzeugs umfasst und das dem Fahrzeug zugeordnete Programmmodul (206) identifiziert,
• Signieren des zweiten Datensatzes durch das Fahrzeugcomputersystem (100) mit dem vierten privaten kryptografischen Schlüssel (106),
• Senden des signierten zweiten Datensatzes durch das Fahrzeugcomputersystem (100) über das Mobilfunknetzwerk (270) an einen Blockchain-Server (200, 220, 240),
• Empfangen des signierten zweiten Datensatzes durch den Blockchain-Server (200, 220, 240),
• Ausführen der ersten Programminstruktionen des durch den zweiten Datensatz identifizierten Programmmoduls (206) durch den Blockchain-Server (200, 220, 240), wobei das Ausführen der ersten Programminstruktionen ein Prüfen der Signatur des zweiten Datensatzes unter Verwendung des von dem Programmmodul (206) identifizierten vierten öffentlichen kryptografischen Schlüssels (108) umfasst und, im Falle einer gültigen Signatur, ein Hinzufügen eines ersten Eintrags mit dem signierten zweiten Datensatz und einem ersten Zeitstempel zu einem zusätzlichen Block für die Blockchain (204).

8. Verfahren nach Anspruch 7, wobei das Fahrzeug zumindest einen Sensor (130, 150, 170) zum Erfassen von Fahrzeugdaten (110, 310) des Fahrzeugs umfasst und wobei die Fahrzeugdaten (110, 310) des Fahrzeugs von dem zumindest einen Sensor (130, 150, 170) empfangen werden.

9. Verfahren nach Anspruch 8, wobei die Fahrzeugdaten (110, 310) den Kilometerstand des Fahrzeugs umfassen, und/oder
wobei die Fahrzeugdaten (110, 310) eine Störmeldung des Fahrzeugs umfassen, und/oder
wobei die Fahrzeugdaten (110, 310) eine Software-ID eines Softwareupdates des Fahrzeugcomputersystems (100) umfassen, und/oder
wobei die Fahrzeugdaten (110, 310) eine einer Mehrzahl von Elektronikkomponenten (140, 160, 180) des Fahrzeugs zugeordnete Kennung (150, 170, 190) umfassen.

10. Verfahren nach einem der vorangehenden Ansprüche, wobei das Fahrzeugcomputersystems (100) die Fahrzeugdaten (310) von einem Computersystem (300) einer Werkstatt empfängt, wobei die von dem Computersystem (300) der Werkstatt empfangenen Fahrzeugdaten (310) mit einem fünften privaten kryptografischen Schlüssel (306) eines der Werkstatt zugeordneten fünften asymmetrischen Schlüsselpaars signiert sind und wobei das Verfahren ferner umfasst:
• Prüfen der Signatur der von der Werkstatt empfangenen Daten unter Verwendung eines fünften öffentlichen kryptografischen Schlüssels (308) des der Werkstatt zugeordneten fünften asymmetrischen Schlüsselpaars,
• im Falle einer gültigen Signatur, Verwenden der von der Werkstatt empfangenen Daten zum Erstellen des zweiten Datensatzes.

11. Verfahren nach Anspruch 10, wobei der zweite Datensatz zusätzlich eine Werkstatt-ID als Ursprung der Fahrzeugdaten (310) umfasst,
wobei der zweite Datensatz als Werkstatt-ID beispielswiese die Signatur der von dem Computersystem (300) der Werkstatt empfangen Fahrzeugdaten (310) umfasst, und/oder
wobei die von dem Computersystem (300) der Werkstatt empfangenen Fahrzeugdaten (310) Daten über ausgeführte Wartungs-/Reparaturmaßnahmen umfassen,
wobei die von dem Computersystem (300) der Werkstatt empfangenen Fahrzeugdaten (310) beispielsweise zumindest eine Fahrzeugteile-ID eines ausgetauschten Fahrzeugteils umfassen.

12. Verfahren nach einem der vorangehenden Ansprüche, wobei das Erstellen des zweiten Datensatzes nach Ablauf eines vordefinierten Zeitintervalls erfolgt, und/oder
wobei das Erstellen des zweiten Datensatzes auf das Empfangen der Fahrzeugdaten (110, 310) erfolgt, wenn die Fahrzeugdaten (110, 310) ein vordefiniertes Kriterium erfüllen,
wobei das Kriterium beispielsweise ein Erreichen eines vordefinierten Kilometerstands ist.

13. Verfahren nach einem der vorangehenden Ansprüche, wobei das Programmmodul (206) den fünften öffentlichen kryptografischen Schlüssel (308) des der Werkstatt zugeordneten fünften asymmetrischen Schlüsselpaars identifiziert, wobei in einem Speicher (302) des Computersystems (300) der Werkstatt der fünfte private kryptografische Schlüssel (306) des der Werkstatt zugeordneten fünften asymmetrischen Schlüsselpaars gespeichert ist, wobei das Computersystem (300) der Werkstatt eine Kommunikationsschnittstelle (316) zur Kommunikation über ein drittes Kommunikationsnetzwerk (272) umfasst und
wobei das Verfahren ferner umfasst:
• Erstellen eines dritten Datensatzes zum Eintragen in die Blockchain (204) durch das Computersystem (300) der Werkstatt, wobei der dritte Datensatz Fahrzeugdaten (310) des Fahrzeugs umfasst und das dem Fahrzeug zugeordnete Programmmodul (206) identifiziert,
• Signieren des dritten Datensatzes durch das Computersystem (300) der Werkstatt mit dem fünften privaten kryptografischen Schlüssel (306) der Werkstatt,
• Senden des signierten dritten Datensatzes durch das Computersystem (300) der Werkstatt über das dritte Kommunikationsnetzwerk (272) an einen Blockchain-Server (200, 220, 240) des Blockchain-Netzwerks (260),
• Empfangen des signierten dritten Datensatzes durch den Blockchain-Server (200, 220, 240),
• Ausführen der ersten Programminstruktionen des durch den dritten Datensatz identifizierten Programmmoduls (206) durch den Blockchain-Server (200, 220, 240), wobei das Ausführen der ersten Programminstruktionen ein Prüfen der Signatur des dritten Datensatzes unter Verwendung des von dem Programmmodul (206) identifizierten fünften öffentlichen kryptografischen Schlüssels (308) des der Werkstatt zugeordneten asymmetrischen Schlüsselpaars umfasst und, im Falle einer gültigen Signatur, ein Hinzufügen eines zweiten Eintrags mit dem signierten dritten Datensatz und einem zweiten Zeitstempel zu einem zusätzlichen Block für die Blockchain (204).

14. Verfahren nach einem der vorangehenden Ansprüche, wobei das Programmmodul (206) einen sechsten öffentlichen kryptografischen Schlüssel (508) eines einem Hersteller des Fahrzeugs zugeordneten sechsten asymmetrischen Schlüsselpaars identifiziert, wobei in einem Speicher (502) eines Computersystems (500) des Fahrzeugherstellers ein sechster privater kryptografischer Schlüssel (506) des dem Fahrzeugherstellers zugeordneten asymmetrischen Schlüsselpaars gespeichert ist, wobei das Computersystem (500) des Fahrzeugherstellers eine Kommunikationsschnittstelle (516) zur Kommunikation über ein viertes Kommunikationsnetzwerk (272) umfasst und
wobei das Verfahren ferner umfasst:
• Erstellen eines vierten Datensatzes zum Eintragen in die Blockchain (204) durch das Computersystem (500) des Fahrzeugherstellers, wobei der vierte Datensatz Fahrzeugdaten (510) des Fahrzeugs umfasst und das dem Fahrzeug zugeordnete Programmmodul (206) identifiziert,
• Signieren des vierten Datensatzes durch das Computersystem (500) des Fahrzeugherstellers mit dem sechsten privaten kryptografischen Schlüssel (506) des Fahrzeugherstellers,
• Senden des signierten vierten Datensatzes durch das Computersystem (500) des Fahrzeugherstellers über das vierte Kommunikationsnetzwerk (272) an einen Blockchain-Server (200, 220, 240) des Blockchain-Netzwerks (260),
• Empfangen des signierten vierten Datensatzes durch den Blockchain-Server (200, 220, 240),
• Ausführen der ersten Programminstruktionen des durch den vierten Datensatz identifizierten Programmmoduls (206) durch den Blockchain-Server (200, 220, 240), wobei das Ausführen der ersten Programminstruktionen ein Prüfen der Signatur des vierten Datensatzes unter Verwendung des von dem Programmmodul (206) identifizierten sechsten öffentlichen kryptografischen Schlüssels (508) des dem Fahrzeughersteller zugeordneten asymmetrischen Schlüsselpaars umfasst und, im Falle einer gültigen Signatur, ein Hinzufügen eines dritten Eintrags mit dem signierten vierten Datensatz und einem dritten Zeitstempel zu einem zusätzlichen Block für die Blockchain (204),
wobei der vierte Datensatz beispielsweise technische Fahrzeugspezifikationen umfasst.

15. Verfahren nach einem der vorangehenden Ansprüche, wobei das Verfahren ferner umfasst:
• Erstellen eines fünften Datensatzes zum Eintragen in die Blockchain (204) durch das Computersystem (600) des ersten Fahrzeugeigentümers, wobei der fünfte Datensatz Fahrzeugdaten (610) des Fahrzeugs umfasst und das dem Fahrzeug zugeordnete Programmmodul (206) identifiziert,
• Signieren des fünften Datensatzes durch das Computersystem (600) des Fahrzeugeigentümers mit dem ersten privaten kryptografischen Schlüssel (606) des ersten Fahrzeugeigentümers,
• Senden des signierten fünften Datensatzes durch das Computersystem (600) des ersten Fahrzeugeigentümers über das erste Kommunikationsnetzwerk (272) an einen Blockchain-Server (200, 220, 240) des Blockchain-Netzwerks (260),
• Empfangen des signierten fünften Datensatzes durch den Blockchain-Server (200, 220, 240),
• Ausführen der ersten Programminstruktionen des durch den fünften Datensatz identifizierten Programmmoduls (206) durch den Blockchain-Server (200, 220, 240), wobei das Ausführen der ersten Programminstruktionen ein Prüfen der Signatur des fünften Datensatzes unter Verwendung des von dem Programmmodul (206) identifizierten ersten öffentlichen kryptografischen Schlüssels (608) des dem ersten Fahrzeugeigentümer zugeordneten ersten asymmetrischen Schlüsselpaars umfasst und, im Falle einer gültigen Signatur, ein Hinzufügen eines vierten Eintrags mit dem signierten fünften Datensatz und einem vierten Zeitstempel zu einem zusätzlichen Block für die Blockchain (204),
wobei der fünfte Datensatz beispielsweise einen Indikator eines Diebstahls und/oder einer Stilllegung des Fahrzeugs umfasst.

16. Verfahren nach einem der vorangehenden Ansprüche, wobei in einem Speicher (402) eines Computersystems (400) eines Providers des Programmmoduls (206) ein siebter privater kryptografischer Schlüssel (406) einer dritten Adresse gespeichert ist, welche dem Provider des Programmmoduls (206) zugeordnet ist, wobei das Computersystem (400) des Providers eine Kommunikationsschnittstelle (416) zur Kommunikation über ein fünftes Kommunikationsnetzwerk (272) umfasst, wobei in dem Speicher (502) des Computersystems (500) des Fahrzeugherstellers ein privater kryptografischer Schlüssel (506) einer vierten Adresse gespeichert ist, welche dem Fahrzeughersteller zugeordnet ist und
wobei das Verfahren umfasst:
• Erstellen einer zweiten Transaktionsanweisung zur Transaktion des Programmmoduls (206) von der dem Provider des Programmmoduls (206) zugeordneten dritten Adresse an die dem Fahrzeughersteller zugeordneten vierte Adresse durch das Computersystem (400) des Providers,
• Signieren der zweiten Transaktionsanweisung durch das Computersystem (400) des Providers mit dem privaten kryptografischen Schlüssel (406) der dritten Adresse,
• Senden der signierten zweiten Transaktionsanweisung durch das Computersystem (400) des Providers über das fünfte Netzwerk (272) an einen Blockchain-Server (200, 220, 240) des Blockchain-Netzwerks (260),
• Empfangen der signierten zweiten Transaktionsanweisung durch den Blockchain-Server (200, 220, 240),
• Prüfen durch den Blockchain-Server (200, 220, 240), ob die zweite Transaktionsanweisung mit dem der dritten Adresse zugeordneten privaten kryptografischen Schlüssel (406) gültig signiert ist,
• im Falle einer gültigen Signatur, Hinzufügen der zweiten Transaktionsanweisung zu einem zusätzlichen Block für die Blockchain (204), und/oder
wobei in dem Speicher (602) des Computersystems (600) des Fahrzeugeigentümers ein privater kryptographischer Schlüssel (606) einer ersten Adresse gespeichert ist, welche dem ersten Fahrzeugeigentümer zugeordnet ist und
wobei das Verfahren umfasst:
• Erstellen einer dritten Transaktionsanweisung zur Transaktion des Programmmoduls (206) von der dem Fahrzeughersteller zugeordneten vierten Adresse an die dem ersten Fahrzeugeigentümer zugeordnete erste Adresse durch das Computersystem (500) des Fahrzeugherstellers,
• Signieren der dritten Transaktionsanweisung durch das Computersystem (500) des Fahrzeugherstellers mit dem privaten kryptographischen Schlüssel (506) der vierten Adresse,
• Senden der signierten dritten Transaktionsanweisung durch das Computersystem (500) des Fahrzeugherstellers über das vierte Netzwerk (272) an einen Blockchain-Server (200, 220, 240) des Blockchain-Netzwerks (260),
• Empfangen der dritten Transaktionsanweisung durch den Blockchain-Server (200, 220, 240),
• Prüfen durch den Blockchain-Server (200, 220, 240), ob die dritte Transaktionsanweisung mit dem der vierten Adresse zugeordneten privaten kryptographischen Schlüssel (506) signiert ist,
• im Falle einer gültigen Signatur, Hinzufügen der dritten Transaktionsanweisung zu einem zusätzlichen Block für die Blockchain (204).

17. Verfahren nach einem der vorangehenden Ansprüche, wobei das Programmmodul (206) vierter Programminstruktionen umfasst und wobei durch Ausführen der vierten Programminstruktionen ein dem Programmmodul (206) zugeordneter Eintrag in der Blockchain (204) erzeugt wird, welcher eine Freigabe zur Zuordnung des Programmmoduls (206) zu dem Fahrzeug umfasst, wobei das Programmmodul (206) ferner fünfte Programminstruktionen umfasst und durch Ausführen der fünften Programminstruktionen ein dem Programmmodul (206) zugeordneter Eintrag in der Blockchain (204) erzeugt wird, welcher das Programmmodul (206) dem Fahrzeug zuordnet,
wobei das Verfahren umfasst:
• durch einen Blockchain-Server (200, 220, 240) des Blockchain-Netzwerks (260) Empfangen einer ersten Aufforderung zum Freischalten einer Berechtigung zum Zuordnen des Programmmoduls (206) zu dem Fahrzeug durch den Fahrzeughersteller, wobei die erste Aufforderung den öffentlichen kryptografischen Schlüssel (508) des Fahrzeugherstellers umfasst, das dem Fahrzeug zuzuordnende Programmmodul (206) identifiziert und mit dem privaten kryptografischen Schlüssel (406) des Providers des Programmmoduls (206) gültig signiert ist,
• Ausführen der vierten Programminstruktionen des durch die erste Aufforderung identifizierten Programmmoduls (206) durch den Blockchain-Server (200, 220, 240), wobei das Ausführen der vierten Programminstruktionen ein Prüfen der Signatur der ersten Aufforderung unter Verwendung des von dem Programmmodul (206) identifizierten öffentlichen kryptografischen Schlüssels (408) des asymmetrischen Schlüsselpaars umfasst, welches dem Provider zugeordnet ist, und, im Falle einer gültigen Signatur, ein Hinzufügen eines fünften Eintrags mit dem öffentlichen kryptografischen Schlüssel (508) des Fahrzeugherstellers, einer Zuordnungsfreigabe und einem fünften Zeitstempel zu einem zusätzlichen Block für die Blockchain (204),
• Empfangen einer zweiten Aufforderung des Fahrzeugherstellers zum Zuordnen des Programmmoduls (206) zu dem Fahrzeug durch den Blockchain-Server (200, 220, 240), wobei die zweite Aufforderung das dem Fahrzeug zuzuordnende Programmmodul (206) identifiziert und mit dem privaten kryptografischen Schlüssel (506) des Fahrzeugherstellers gültig signiert ist,
• Ausführen der fünften Programminstruktionen des Programmmoduls (206) durch den Blockchain-Server (200, 220, 240), wobei das Ausführen der fünften Programminstruktionen ein Prüfen der Signatur der zweiten Aufforderung unter Verwendung des in dem fünften Eintrag gespeicherten öffentlichen kryptografischen Schlüssels (508) des asymmetrischen Schlüsselpaars umfasst, welches dem Fahrzeugherstellers zugeordnet ist, und, im Falle einer gültigen Signatur, ein Hinzufügen eines sechsten Eintrags mit dem öffentlichen kryptografischen Schlüssel (108) des Fahrzeugs, einer Zuordnung des Programmmoduls (206) zu dem Fahrzeug und einem sechsten Zeitstempel zu einem zusätzlichen Block für die Blockchain (204), und/oder
wobei das Programmmodul (206) sechste Programminstruktionen umfasst und wobei durch Ausführen der sechsten Programminstruktionen ein dem Programmmodul (206) zugeordneter Eintrag in der Blockchain (204) erzeugt wird, welcher eine Freigabe zur Zuordnung des Programmmoduls (206) zu dem Fahrzeug umfasst,
wobei das Zuordnen umfasst:
• durch einen Blockchain-Server (200, 220, 240) des Blockchain-Netzwerks (260) Empfangen einer dritten Aufforderung zum Freischalten einer Berechtigung zum Zuordnen des Programmmoduls (206) zu dem Fahrzeug durch den Fahrzeughersteller, wobei die dritte Aufforderung ein Passwort und den öffentlichen kryptografischen Schlüssel (508) des Fahrzeugherstellers umfasst und das dem Fahrzeug zuzuordnende Programmmodul (206) identifiziert,
• Ausführen der sechsten Programminstruktionen des durch die dritte Aufforderung identifizierten Programmmoduls (206) durch den Blockchain-Server (200, 220, 240), wobei das Ausführen der sechsten Programminstruktionen ein Prüfen des Passworts unter Verwendung eines in der Blockchain (204) gespeicherten verschlüsselten Referenzwerts und, im Falle eines gültigen Referenzwerts, ein Hinzufügen eines siebten Eintrags mit dem öffentlichen kryptografischen Schlüssel (508) des Fahrzeugherstellers, einer Zuordnungsfreigabe und einem siebten Zeitstempel zu einem zusätzlichen Block für die Blockchain (204),
• Empfangen einer zweiten Aufforderung des Fahrzeugherstellers zum Zuordnen des Programmmoduls (206) zu dem Fahrzeug durch den Blockchain-Server (200, 220, 240), wobei die zweite Aufforderung das dem Fahrzeug zuzuordnende Programmmodul (206) identifiziert und mit dem privaten kryptografischen Schlüssel (506) des Fahrzeugherstellers gültig signiert ist,
• Ausführen der fünften Programminstruktionen des Programmmoduls (206) durch den Blockchain-Server (200, 220, 240), wobei das Ausführen der fünften Programminstruktionen ein Prüfen der Signatur der zweiten Aufforderung unter Verwendung des in dem fünften Eintrag gespeicherten öffentlichen kryptografischen Schlüssels (508) des asymmetrischen Schlüsselpaars umfasst, welches dem Fahrzeugherstellers zugeordnet ist, und, im Falle einer gültigen Signatur, ein Hinzufügen des sechsten Eintrags mit dem öffentlichen kryptografischen Schlüssel (108) des Fahrzeugs, einer Zuordnung des Programmmoduls (206) zu dem Fahrzeug und einem sechsten Zeitstempel zu einem zusätzlichen Block für die Blockchain (204).

18. Verfahren nach einem der vorangehenden Ansprüche, wobei einer oder mehrerer der privaten kryptografischen Schlüssel (106, 306, 406, 506, 606) in dem jeweiligen Speicher (102, 302, 402, 502, 602) jeweils in einem geschützten Speicherbereich (104, 304, 404, 504, 604) gespeichert sind, und/oder
wobei die Blockchain zusätzlich zum Ausführen von Überweisungen von Beträgen einer Kryptowährung konfiguriert ist.

19. System, welches ein Computersystem eines ersten Fahrzeugeigentümers und ein Blockchain-Netzwerk (260) mit zumindest einem Blockchain-Server (200, 220, 240) umfasst,
wobei das Computersystem des ersten Fahrzeugeigentümers einen Speicher (102) umfasst, wobei das Computersystem des ersten Fahrzeugeigentümers eine Kommunikationsschnittstelle (118) zur Kommunikation über das erste Netzwerk umfasst,
wobei der zumindest eine Blockchain-Server (200, 220, 240) dazu konfiguriert ist, ein in der Blockchain (204) gespeichertes Programmmodul (206) auszuführen und eine Fahrzeugbescheinigung (282) zur Verfügung zu stellen, und
wobei das System zum Ausführen eines Verfahrens nach einem der Ansprüche 1 bis 4, 15 und 18 konfiguriert ist.

20. System nach Anspruch 19, welches ferner ein Prüfcomputersystem umfasst, wobei das Prüfcomputersystem ein Lesegerät und eine Kommunikationsschnittstelle (316) zur Kommunikation über ein zweites Kommunikationsnetzwerk (272) umfasst,
wobei das System zum Ausführen eines Verfahrens nach Anspruch 5 konfiguriert ist, und/oder
welches ein Fahrzeug mit einem Fahrzeugcomputersystem (100) und ein Blockchain-Netzwerk (260) mit zumindest einem Blockchain-Server (200, 220, 240) umfasst,
wobei das Fahrzeugcomputersystem (100) einen Speicher (102) umfasst, wobei das Fahrzeugcomputersystem (100) eine Mobilfunkschnittstelle (118) zur Kommunikation über ein Mobilfunknetzwerk (270) umfasst,
wobei der zumindest eine Blockchain-Server (200, 220, 240) dazu konfiguriert ist, ein in der Blockchain (204) gespeichertes Programmmodul (206) auszuführen und zusätzliche Blöcke für die Blockchain (204) zu erstellen, und
wobei das System zum Ausführen eines Verfahrens nach einem der Ansprüche 6 bis 9 konfiguriert ist, und/oder
welches ferner ein Computersystem (300) einer Werkstatt umfasst, wobei das Computersystem (300) der Werkstatt einen Speicher (302) umfasst, wobei das Computersystem (300) der Werkstatt eine Kommunikationsschnittstelle (316) zur Kommunikation über ein erstes Kommunikationsnetzwerk (272) umfasst,
wobei das System zum Ausführen eines Verfahrens nach einem der Ansprüche 10 bis 13 konfiguriert ist, und/oder
welches ferner ein Computersystem eines Herstellers (500) des Fahrzeugs umfasst, wobei das Computersystem (500) des Fahrzeugherstellers einen Speicher (502) umfasst, wobei das Computersystem (500) des Fahrzeugherstellers eine Kommunikationsschnittstelle (516) zur Kommunikation über ein zweites Kommunikationsnetzwerk (272) umfasst,
wobei das System zum Ausführen eines Verfahrens nach Anspruch 14 konfiguriert ist, und/oder
welches ferner ein Computersystem (400) eines Providers des Programmmoduls (206) umfasst, wobei das Computersystem (400) eines Providers des Programmmoduls (206) einen Speicher (402) umfasst, wobei das Computersystem (400) des Providers eine Kommunikationsschnittstelle (416) zur Kommunikation über ein viertes Kommunikationsnetzwerk (272) umfasst,
wobei das System zum Ausführen eines Verfahrens nach Anspruch 17 konfiguriert ist.

## Claims

1. Method for the tamper-proof storage of vehicle data (110, 310, 510, 610) of a vehicle in a blockchain (204), wherein the blockchain (204) comprises, in a block, a program module (206) having first and second program instructions, wherein the program module (206) is assigned to the vehicle, wherein, by executing the first program instructions, an entry which is assigned to the program module (206) and which contains vehicle data (110, 310, 510, 610) of the vehicle is generated in the blockchain (204), wherein, by executing the second program instructions, a vehicle certificate (282) containing a first data record characterizing the vehicle is created, wherein the first data record comprises vehicle data stored in an entry of the blockchain (204) assigned to the program module (206), wherein the program module (206) is assigned to a first public cryptographic key of a first asymmetric key pair of a first vehicle owner, wherein a private cryptographic key of the first asymmetric key pair is stored in a memory of a computer system of a first owner of the vehicle, wherein the method comprises:
• creating an output instruction for outputting the vehicle certificate (282), wherein the output instruction identifies the program module (206) assigned to the vehicle,
• signing the output instruction with the first private cryptographic key,
• sending the signed output instruction by means of the computer system of the first owner over a first communication network (272) to a blockchain server (200, 220, 240) of a plurality of blockchain servers (200, 220, 240) of the blockchain network (260) which are configured to execute the program instructions of the program module (206),
• receiving the signed output instruction by means of the blockchain server (200, 220, 240),
• executing, by means of the blockchain server (200, 220, 240), the second program instructions of the program module (206) identified by the output instruction, wherein executing the second program instructions comprises checking the signature of the output instruction using the first public cryptographic key (108) and, if there is a valid signature, creating the vehicle certificate (282),
• sending the vehicle certificate (282) by means of the blockchain server (200, 220, 240) to the computer system of the first owner,
• receiving the vehicle certificate (282) by means of the computer system of the first owner,
• outputting the vehicle certificate (282) by means of the computer system of the first owner, wherein the output vehicle certificate (282) comprises a machine-readable code (284), wherein the machine-readable code (284) identifies the program module (206) assigned to the vehicle and comprises a second private cryptographic key of a second asymmetric key pair, wherein a second public cryptographic key of the second asymmetric key pair is identified in the blockchain (204) as a check value for checking a signature of a read request for reading vehicle data of the vehicle certificate (282) from the blockchain (204).

2. Method according to claim 1, wherein the second private cryptographic key is encrypted with a third public cryptographic key, identified in the blockchain (204), of a third asymmetric key pair, wherein the machine-readable code (284) together with the encrypted second private cryptographic key enables a holder of a third private cryptographic key of the third asymmetric key pair to validly sign read requests for reading vehicle data of the vehicle certificate (282) from the blockchain (204) with the second private cryptographic key.

3. Method according to any one of the preceding claims, wherein the second asymmetric key pair is identical to the first asymmetric key pair, or
wherein the second asymmetric key pair is a key pair specific to the vehicle certificate, wherein the output instruction comprises the second public cryptographic key, and wherein the second public cryptographic key, if there is a valid signature, is stored in the blockchain (204).

4. Method according to any one of the preceding claims, wherein the output comprises printing the vehicle certificate (282) using a printer, and/or
wherein the output comprises displaying the vehicle certificate (282) on a display of a mobile portable telecommunications device.

5. Method according to any one of the preceding claims, wherein the method further comprises:
• capturing the machine-readable code (284) of the output vehicle certificate (282) using a reader of a checking computer system,
• creating the read request to read vehicle data of the vehicle certificate (282) from the blockchain (204) using the captured machine-readable code (284), wherein the read request comprises the identifier of the program module (206) provided by the machine-readable code (284),
• signing the read request with the second private cryptographic key provided by the machine-readable code (284),
• sending the signed read request by means of the checking computer system over a second communication network (272) to a blockchain server (200, 220, 240) of the blockchain network (260),
• receiving the signed read request by means of the blockchain server (200, 220, 240),
• executing, by means of the blockchain server (200, 220, 240), third program instructions of the program module (206) identified by the read request, wherein executing the third program instructions comprises checking the signature of the read request using the second public cryptographic key (108) identified by the program module (206) and, if there is a valid signature, reading out the vehicle data of the vehicle certificate (282) requested for reading,
• sending the read-out vehicle data by means of the blockchain server (200, 220, 240) to the checking computer system,
• receiving the read-out vehicle data by means of the checking computer system,
• outputting the read-out vehicle data by means of the checking computer system,
wherein the method further comprises, for example, decrypting the second private cryptographic key provided by the machine-readable code (284) in encrypted form using the third private key.

6. Method according to any one of the preceding claims, wherein the method comprises:
• creating a first transaction instruction for transacting the program module (206) from a first address assigned to the first vehicle owner, which address is assigned to the first asymmetric key pair, to a second address assigned to a second vehicle owner,
• signing the first transaction instruction by means of the computer system (500) of the first vehicle owner with the first private cryptographic key (506),
• sending the signed first transaction instruction by means of the computer system (500) of the first vehicle owner over a third communication network (272) to a blockchain server (200, 220, 240) of the blockchain network (260),
• receiving the first transaction instruction by means of the blockchain server (200, 220, 240),
• executing, by means of the blockchain server (200, 220, 240), fourth program instructions of the program module (206) identified by the transaction instruction, wherein executing the fourth program instructions comprises checking whether the first transaction instruction is validly signed with the private cryptographic key (506) assigned to the first address and, if there is a valid signature, adding the first transaction instruction to an additional block for the blockchain (204).

7. Method according to any one of the preceding claims, wherein the vehicle comprises a vehicle computer system (100), wherein the vehicle computer system (100) comprises a memory (102), wherein a fourth private cryptographic key (106) of a fourth asymmetric key pair assigned to the vehicle is stored in the memory (102), wherein the vehicle computer system (100) comprises a mobile communications interface (118) for communication over a mobile communications network (270), wherein the program module (206) identifies a fourth public cryptographic key (108) of the asymmetric key pair assigned to the vehicle,
wherein the method comprises:
• receiving vehicle data (110, 310) of the vehicle by means of the vehicle computer system (100),
• creating a second data record for entry in the blockchain (204), wherein the second data record comprises the vehicle data (110, 310) of the vehicle and identifies the program module (206) assigned to the vehicle,
• signing the second data record by means of the vehicle computer system (100) with the fourth private cryptographic key (106),
• sending the signed second data record by means of the vehicle computer system (100) over the mobile communications network (270) to a blockchain server (200, 220, 240),
• receiving the signed second data record by means of the blockchain server (200, 220, 240),
• executing, by means of the blockchain server (200, 220, 240), the first program instructions of the program module (206) identified by the second data record, wherein executing the first program instructions comprises checking the signature of the second data record using the fourth public cryptographic key (108) identified by the program module (206) and, if there is a valid signature, adding a first entry containing the signed second data record and a first timestamp to an additional block for the blockchain (204).

8. Method according to claim 7, wherein the vehicle comprises at least one sensor (130, 150, 170) for capturing vehicle data (110, 310) of the vehicle, and wherein the vehicle data (110, 310) of the vehicle are received by the at least one sensor (130, 150, 170).

9. Method according to claim 8, wherein the vehicle data (110, 310) comprise the mileage of the vehicle, and/or
wherein the vehicle data (110, 310) comprise a fault message of the vehicle, and/or
wherein the vehicle data (110, 310) comprise a software ID of a software update of the vehicle computer system (100), and/or
wherein the vehicle data (110, 310) comprise an identification (150, 170, 190) assigned to a plurality of electronic components (140, 160, 180) of the vehicle.

10. Method according to any one of the preceding claims, wherein the vehicle computer system (100) receives the vehicle data (310) from a computer system (300) of a workshop, wherein the vehicle data (310) received from the computer system (300) of the workshop is signed with a fifth private cryptographic key (306) of a fifth asymmetric key pair assigned to the workshop, and wherein the method further comprises:
• checking the signature of the data received from the workshop using a fifth public cryptographic key (308) of the fifth asymmetric key pair assigned to the workshop,
• if there is a valid signature, using the data received from the workshop to create the second data record.

11. Method according to claim 10, wherein the second data record additionally comprises a workshop ID as the origin of the vehicle data (310),
wherein the second data record for example comprises, as a workshop ID, the signature of the vehicle data (310) received from the computer system (300) of the workshop, and/or
wherein the vehicle data (310) received from the computer system (300) of the workshop comprises data regarding maintenance/repair work carried out,
wherein the vehicle data (310) received from the computer system (300) of the workshop for example comprises at least one vehicle part ID of a replaced vehicle part.

12. Method according to any one of the preceding claims, wherein the second data record is created after a predefined time interval has elapsed, and/or
wherein the second data record is created following receipt of the vehicle data (110, 310) if the vehicle data (110, 310) meets a predefined criterion,
wherein the criterion is, for example, that a predefined mileage is reached.

13. Method according to any one of the preceding claims, wherein the program module (206) identifies the fifth public cryptographic key (308) of the fifth asymmetric key pair assigned to the workshop, wherein the fifth private cryptographic key (306) of the fifth asymmetric key pair assigned to the workshop is stored in a memory (302) of the computer system (300) of the workshop, wherein the computer system (300) of the workshop also comprises a communication interface (316) for communication over a third communication network (272) and
wherein the method further comprises:
• creating a third data record for entry into the blockchain (204) by means of the computer system (300) of the workshop, wherein the third data record comprises vehicle data (310) of the vehicle and identifies the program module (206) assigned to the vehicle,
• signing the third data record by means of the computer system (300) of the workshop with the fifth private cryptographic key (306) of the workshop,
• sending the signed third data record by means of the computer system (300) of the workshop over the third communication network (272) to a blockchain server (200, 220, 240) of the blockchain network (260),
• receiving the signed third data record by means of the blockchain server (200, 220, 240),
• executing, by means of the blockchain server (200, 220, 240), the first program instructions of the program module (206) identified by the third data record, wherein executing the first program instructions comprises checking the signature of the third data record using the fifth public cryptographic key (308), identified by the program module (206), of the asymmetric key pair assigned to the workshop and, if there is a valid signature, adding a second entry containing the signed third data record and a second timestamp to an additional block for the blockchain (204).

14. Method according to any one of the preceding claims, wherein the program module (206) identifies a sixth public cryptographic key (508) of a sixth asymmetric key pair assigned to a manufacturer of the vehicle, wherein a sixth private cryptographic key (506) of the asymmetric key pair assigned to the vehicle manufacturer is stored in a memory (502) of a computer system (500) of the vehicle manufacturer, wherein the computer system (500) of the vehicle manufacturer comprises a communication interface (516) for communication over a fourth communication network (272), and
wherein the method further comprises:
• creating a fourth data record for entry in the blockchain (204) by means of the computer system (500) of the vehicle manufacturer, wherein the fourth data record comprises vehicle data (510) of the vehicle and identifies the program module (206) assigned to the vehicle,
• signing the fourth data record by means of the computer system (500) of the vehicle manufacturer with the sixth private cryptographic key (506) of the vehicle manufacturer,
• sending the signed fourth data record by means of the computer system (500) of the vehicle manufacturer over the fourth communication network (272) to a blockchain server (200, 220, 240) of the blockchain network (260),
• receiving the signed fourth data record by means of the blockchain server (200, 220, 240),
• executing, by means of the blockchain server (200, 220, 240), the first program instructions of the program module (206) identified by the fourth data record, wherein executing the first program instructions comprises checking the signature of the fourth data record using the sixth public cryptographic key (508), identified by the program module (206), of the asymmetric key pair assigned to the vehicle manufacturer and, if there is a valid signature, adding a third entry containing the signed fourth data record and a third timestamp to an additional block for the blockchain (204),
wherein, for example, the fourth data record comprises technical vehicle specifications.

15. Method according to any one of the preceding claims, wherein the method further comprises:
• creating a fifth data record for entry in the blockchain (204) by means of the computer system (600) of the first vehicle owner, wherein the fifth data record comprises vehicle data (610) of the vehicle and identifies the program module (206) assigned to the vehicle,
• signing the fifth data record by means of the computer system (600) of the first vehicle owner with the first private cryptographic key (606) of the first vehicle owner,
• sending the signed fifth data record by means of the computer system (600) of the first vehicle owner over the first communication network (272) to a blockchain server (200, 220, 240) of the blockchain network (260),
• receiving the signed fifth data record by means of the blockchain server (200, 220, 240),
• executing, by means of the blockchain server (200, 220, 240), the first program instructions of the program module (206) identified by the fifth data record, wherein executing the first program instructions comprises checking the signature of the fifth data record using the first public cryptographic key (608), identified by the program module (206), of the first asymmetric key pair assigned to the first vehicle owner and, if there is a valid signature, adding a fourth entry containing the signed fifth data record and a fourth timestamp to an additional block for the blockchain (204),
wherein, for example, the fifth data record comprises an indicator of a theft and/or deregistration of the vehicle.

16. Method according to any one of the preceding claims, wherein a seventh private cryptographic key (406) of a third address assigned to a provider of the program module (206) is stored in a memory (402) of a computer system (400) of the provider of the program module (206), wherein the computer system (400) of the provider comprises a communication interface (416) for communication over a fifth communication network (272), wherein a private cryptographic key (506) of a fourth address assigned to the vehicle manufacturer is stored in the memory (502) of the computer system (500) of the vehicle manufacturer, and
wherein the method comprises:
• creating, by means of the computer system (400) of the provider, a second transaction instruction for transacting the program module (206) from the third address assigned to the provider of the program module (206) to the fourth address assigned to the vehicle manufacturer,
• signing the second transaction instruction by means of the computer system (400) of the provider with the private cryptographic key (406) of the third address,
• sending the signed second transaction instruction by means of the computer system (400) of the provider over the fifth network (272) to a blockchain server (200, 220, 240) of the blockchain network (260),
• receiving the signed second transaction instruction by means of the blockchain server (200, 220, 240),
• checking, by means of the blockchain server (200, 220, 240), whether the second transaction instruction is validly signed with the private cryptographic key (406) assigned to the third address,
• if there is a valid signature, adding the second transaction instruction to an additional block for the blockchain (204), and/or
wherein a private cryptographic key (606) of a first address assigned to the first vehicle owner is stored in the memory (602) of the computer system (600) of the vehicle owner, and
wherein the method comprises:
• creating, by means of the computer system (500) of the vehicle manufacturer, a third transaction instruction for transacting the program module (206) from the fourth address assigned to the vehicle manufacturer to the first address assigned to the first vehicle owner,
• signing the third transaction instruction by means of the computer system (500) of the vehicle manufacturer with the private cryptographic key (506) of the fourth address,
• sending the signed third transaction instruction by means of the computer system (500) of the vehicle manufacturer over the fourth network (272) to a blockchain server (200, 220, 240) of the blockchain network (260),
• receiving the third transaction instruction by means of the blockchain server (200, 220, 240),
• checking, by means of the blockchain server (200, 220, 240), whether the third transaction instruction is signed with the private cryptographic key (506) assigned to the fourth address,
• if there is a valid signature, adding the third transaction instruction to an additional block for the blockchain (204).

17. Method according to any one of the preceding claims, wherein the program module (206) comprises fourth program instructions and wherein, by executing the fourth program instructions, an entry assigned to the program module (206) is generated in the blockchain (204) and comprises a clearance for the assignment of the program module (206) to the vehicle, wherein the program module (206) further comprises fifth program instructions and, by executing the fifth program instructions, an entry assigned to the program module (206) is generated in the blockchain (204), which entry assigns the program module (206) to the vehicle,
wherein the method comprises:
• by means of a blockchain server (200, 220, 240) of the blockchain network (260), receiving a first request for enabling an authorization to assign the program module (206) to the vehicle by the vehicle manufacturer, wherein the first request comprises the public cryptographic key (508) of the vehicle manufacturer, identifies the program module (206) to be assigned to the vehicle, and is validly signed with the private cryptographic key (406) of the provider of the program module (206),
• executing, by means of the blockchain server (200, 220, 240), the fourth program instructions of the program module (206) identified by the first request, wherein executing the fourth program instructions comprises checking the signature of the first request using the public cryptographic key (408), identified by the program module (206), of the asymmetric key pair assigned to the provider and, if there is a valid signature, adding a fifth entry containing the public cryptographic key (508) of the vehicle manufacturer, an assignment clearance, and a fifth timestamp to an additional block for the blockchain (204),
• receiving a second request of the vehicle manufacturer to assign the program module (206) to the vehicle by means of the blockchain server (200, 220, 240), wherein the second request identifies the program module (206) to be assigned to the vehicle and is validly signed with the private cryptographic key (506) of the vehicle manufacturer,
• executing the fifth program instructions of the program module (206) by means of the blockchain server (200, 220, 240), wherein executing the fifth program instructions comprises checking the signature of the second request using the public cryptographic key (508), stored in the fifth entry, of the asymmetric key pair assigned to the vehicle manufacturer and, if there is a valid signature, adding a sixth entry containing the public cryptographic key (108) of the vehicle, an assignment of the program module (206) to the vehicle, and a sixth timestamp to an additional block for the blockchain (204), and/or
wherein the program module (206) comprises sixth program instructions and wherein, by executing the sixth program instructions, an entry assigned to the program module (206) is generated in the blockchain (204) and comprises a clearance for the assignment of the program module (206) to the vehicle,
wherein the assignment comprises:
• by means of a blockchain server (200, 220, 240) of the blockchain network (260), receiving a third request for enabling an authorization to assign the program module (206) to the vehicle by the vehicle manufacturer, wherein the third request comprises a password and the public cryptographic key (508) of the vehicle manufacturer and identifies the program module (206) to be assigned to the vehicle,
• executing, by means of the blockchain server (200, 220, 240), the sixth program instructions of the program module (206) identified by the third request, wherein executing the sixth program instructions involves checking the password using an encrypted reference value stored in the blockchain (204) and, if there is a valid reference value, adding a seventh entry containing the public cryptographic key (508) of the vehicle manufacturer, an assignment clearance, and a seventh timestamp to an additional block for the blockchain (204),
• receiving a second request of the vehicle manufacturer to assign the program module (206) to the vehicle by means of the blockchain server (200, 220, 240), wherein the second request identifies the program module (206) to be assigned to the vehicle and is validly signed with the private cryptographic key (506) of the vehicle manufacturer,
• executing the fifth program instructions of the program module (206) by means of the blockchain server (200, 220, 240), wherein executing the fifth program instructions comprises checking the signature of the second request using the public cryptographic key (508), stored in the fifth entry, of the asymmetric key pair assigned to the vehicle manufacturer and, if there is a valid signature, adding the sixth entry containing the public cryptographic key (108) of the vehicle, an assignment of the program module (206) to the vehicle, and a sixth timestamp to an additional block for the blockchain (204).

18. Method according to any one of the preceding claims, wherein one or more of the private cryptographic keys (106, 306, 406, 506, 606) are stored in the relevant memory (102, 302, 402, 502, 602) in a protected memory area (104, 304, 404, 504, 604) in each case, and/or
wherein the blockchain is additionally configured to execute transfers of amounts of a cryptocurrency.

19. System, which comprises a computer system of a first vehicle owner and a blockchain network (260) comprising at least one blockchain server (200, 220, 240),
wherein the computer system of the first vehicle owner comprises a memory (102), wherein the computer system of the first vehicle owner comprises a communication interface (118) for communication over the first network,
wherein the at least one blockchain server (200, 220, 240) is configured to execute a program module (206) stored in the blockchain (204) and to provide a vehicle certificate (282), and
wherein the system is configured to carry out a method according to any one of claims 1 to 4, 15 and 18.

20. System according to claim 19, which further comprises a checking computer system, wherein the checking computer system comprises a reader and a communication interface (316) for communication over a second communication network (272), wherein the system is configured to carry out a method according to claim 5, and/or
which comprises a vehicle comprising a vehicle computer system (100) and a blockchain network (260) comprising at least one blockchain server (200, 220, 240),
wherein the vehicle computer system (100) comprises a memory (102), wherein the vehicle computer system (100) comprises a mobile communications interface (118) for communication over a mobile communications network (270),
wherein the at least one blockchain server (200, 220, 240) is configured to execute a program module (206) stored in the blockchain (204) and to create additional blocks for the blockchain (204), and
wherein the system is configured to carry out a method according to any one of claims 6 to 9, and/or
which further comprises a computer system (300) of a workshop, wherein the computer system (300) of the workshop comprises a memory (302), wherein the computer system (300) of the workshop comprises a communication interface (316) for communication over a first communication network (272),
wherein the system is configured to carry out a method according to any one of claims 10 to 13, and/or
which further comprises a computer system (500) of a manufacturer of the vehicle, wherein the computer system (500) of the vehicle manufacturer comprises a memory (502), wherein the computer system (500) of the vehicle manufacturer comprises a communication interface (516) for communication over a second communication network (272),
wherein the system is configured to carry out a method according to claim 14, and/or
which further comprises a computer system (400) of a provider of the program module (206), wherein the computer system (400) of a provider of the program module (206) comprises a memory (402), wherein the computer system (400) of the provider comprises a communication interface (416) for communication over a fourth communication network (272),
wherein the system is configured to carry out a method according to claim 17.

## Revendications

1. Procédé d'enregistrement sécurisé contre la manipulation de données de véhicule (110, 310, 510, 610) d'un véhicule dans une chaîne de blocs (204), dans lequel la chaîne de blocs (204) comprend, dans un bloc, un module de programme (206) avec des premières et des deuxièmes instructions de programme, dans lequel le module de programme (206) est associé au véhicule, dans lequel, par l'exécution des premières instructions de programme, une entrée associée au module de programme (206) est créée avec des données de véhicule (110, 310, 510, 610) du véhicule dans la chaîne de blocs (204), dans lequel, par l'exécution des deuxièmes instructions de programme, un certificat de véhicule (282) est établi avec un premier ensemble de données caractérisant le véhicule, dans lequel le premier ensemble de données comprend des données du véhicule enregistrées dans une entrée de la chaîne de blocs (204) associée au module de programme (206), dans lequel le module de programme (206) est associé à une première clé cryptographique publique d'une première paire de clés asymétrique d'un premier propriétaire du véhicule, dans lequel une clé cryptographique privée de la première paire de clés asymétrique est enregistrée dans une mémoire d'un système informatique d'un premier propriétaire du véhicule,
le procédé comprenant :
• l'établissement d'une instruction de sortie permettant l'émission du certificat de véhicule ((282), dans lequel l'instruction de sortie identifie le module de programme (206) associé au véhicule,
• la signature de l'instruction de sortie avec la première clé cryptographique privée,
• l'envoi de l'instruction de sortie signée par le système informatique du premier propriétaire par le biais d'un premier réseau de communication (272) à un serveur de chaînes de blocs (200, 220, 240) parmi une multiplicité de serveurs de chaînes de blocs (200, 220, 240) du réseau de chaîne de blocs (260), lesquels sont conçus pour exécuter les instructions de programme du module de programme (206),
• la réception de l'instruction de sortie signée par le serveur de chaînes de blocs (200, 220, 240),
• l'exécution des deuxièmes instructions de programme du programme de module (206) identifié par l'instruction de sortie par le serveur de chaînes de blocs (200, 220, 240), dans lequel l'exécution des deuxièmes instructions de programme comprend une vérification de la signature de l'instruction de sortie moyennant l'emploi de la première clé cryptographique publique (108) et, dans le cas d'une signature valide, l'établissement du certificat de véhicule (282),
• l'envoi du certificat de véhicule (282) par le serveur de chaînes de blocs (200, 220, 240) au système informatique du premier propriétaire,
• la réception du certificat de véhicule (282) par le système informatique du premier propriétaire,
• l'émission du certificat de véhicule (282) par le système informatique du premier propriétaire, dans lequel le certificat de véhicule (282) émis comprend un code (284) lisible par machine, dans lequel le code (284) lisible par machine identifie le module de programme (206) associé au véhicule et comprend une deuxième clé cryptographique privée d'une deuxième paire de clés asymétrique, dans lequel une deuxième clé cryptographique publique de la deuxième paire de clés asymétrique est identifiée dans la chaîne de blocs (204) en tant que valeur de vérification permettant la vérification d'une signature d'une demande de lecture permettant la lecture de donnés de véhicule du certificat de véhicule (282) à partir de la chaîne de blocs (204).

2. Procédé selon la revendication 1, dans lequel la deuxième clé cryptographique privée est chiffrée avec une troisième clé cryptographique publique d'une troisième paire de clés asymétrique identifiée dans la chaîne de blocs (204), dans lequel elle permet au code (284) lisible par machine, avec la deuxième clé cryptographique privée chiffrée, à un propriétaire d'une troisième clé cryptographique privée de la troisième paire de clés asymétrique, de signer comme valides des demandes de lecture pour la lecture de données de véhicule du certificat du véhicule (282) à partir de la chaîne de blocs (204) avec la deuxième clé cryptographique privée.

3. Procédé selon l'une des revendications précédentes, dans lequel la deuxième paire de clés asymétrique est identique à la première paire de clés asymétrique, ou
dans lequel la deuxième paire de clés asymétrique est une paire de clés individuelle pour le certificat de véhicule, dans lequel l'instruction de sortie comprend la deuxième clé cryptographique publique et dans lequel la deuxième clé cryptographique publique est enregistrée dans la chaîne de blocs (204) dans le cas d'une signature valide.

4. Procédé selon l'une des revendications précédentes, dans lequel la sortie comprend une impression du certificat de véhicule (282) moyennant l'emploi d'une imprimante, et/ou
dans lequel la sortie comprend un affichage du certificat de véhicule (282) sur un écran d'un appareil de télécommunication portable mobile.

5. Procédé selon l'une des revendications précédentes, le procédé comprenant en outre :
• la détection du code (284) lisible par machine du certificat de véhicule (282) émis avec un lecteur d'un système informatique de vérification,
• l'établissement d'une demande de lecture pour la lecture de données de véhicule du certificat de véhicule (282) à partir de la chaîne de blocs (204) moyennant l'emploi du code (284) lisible par machine détecté, dans lequel la demande de lecture comprend l'identificateur du module de programme (206) mis à disposition par le code (284) lisible par machine,
• la signature de la demande de lecture avec la deuxième clé cryptographique privée mise à disposition par le code (284) lisible par machine,
• l'envoi de la demande de lecture signée à un serveur de chaîne de blocs (200, 220, 240) du réseau de chaînes de blocs (260) par le système informatique de vérification par le biais d'un deuxième réseau de communication (272),
• la réception de la demande de lecture signée par le serveur de chaînes de blocs (200, 220, 240),
• l'exécution de troisièmes instructions de programme du module de programme (206) identifié par la demande de lecture par le serveur de chaînes de blocs (200, 220, 240), dans lequel l'exécution des troisièmes instructions de programme comprend une vérification de la signature de la demande de lecture moyennant l'emploi de la deuxième clé cryptographique publique (108) identifiée par le module de programme (206) et, dans le cas d'une signature valide, une lecture des données du véhicule du certificat de véhicule (282) demandées pour lecture,
• l'envoi des données de véhicule lues par le serveur de chaîne de blocs (200, 220, 240) au système informatique de vérification,
• la réception des données de véhicule lues par le système informatique de vérification,
• la production des données de véhicule lues par le système informatique de vérification,
le procédé comprenant en outre, par exemple, un déchiffrement de la deuxième clé cryptographique privée mise à disposition sous forme chiffrée par le code (284) lisible par machine avec la troisième clé privée.

6. Procédé selon l'une des revendications précédentes, le procédé comprenant :
• l'établissement d'une première instruction de transaction pour la transaction du module de programme (206) à partir d'une première adresse associée au premier propriétaire de véhicule, laquelle est associée à la première paire de clés asymétrique, vers une deuxième adresse associée à un deuxième propriétaire du véhicule,
• la signature de la première instruction de transaction par le système informatique (500) du premier propriétaire de véhicule avec la première clé cryptographique privée (506),
• l'envoi de la première instruction de transaction signée par le système informatique (500) du premier propriétaire de véhicule par le biais d'un troisième réseau de communication (272) vers un serveur de chaînes de blocs (200, 220, 240) du réseau de chaînes de blocs (260),
• la réception de la première instruction de transaction par le serveur de chaînes de blocs (200, 220, 240),
• l'exécution de quatrièmes instructions de programme du module de programme (206) identifié par l'instruction de programme par le serveur de chaînes de blocs (200, 220, 240), dans lequel l'exécution des quatrièmes instructions de programme comprend une vérification si la première instruction de transaction est signée comme étant valide avec la clé cryptographique privée (506) associée à la première adresse, et, dans le cas d'une signature valide, l'ajout de la première instruction de transaction à un bloc supplémentaire pour la chaîne de blocs (204).

7. Procédé selon l'une des revendications précédentes, dans lequel le véhicule comprend un système informatique de véhicule (100), dans lequel le système informatique de véhicule (100) comprend une mémoire (102), dans lequel une quatrième clé cryptographique privée (106) d'une quatrième paire de clés asymétrique associée au véhicule est enregistrée dans la mémoire (102), dans lequel le système informatique de véhicule (100) comprend une interface radio mobile (118) permettant la communication par le biais d'un réseau radio mobile (270), dans lequel le module de programme (206) identifie une quatrième clé cryptographique publique (108) de la paire de clés asymétrique associée au véhicule,
le procédé comprenant :
• la réception de données de véhicule (110, 310) du véhicule par le système informatique de véhicule (100),
• l'établissement d'un deuxième ensemble de données à entrer dans la chaîne de blocs (204), dans lequel le deuxième ensemble de données comprend les données de véhicule (110, 310) du véhicule et identifie le module de programme (206) associé au véhicule,
• la signature du deuxième ensemble de données par le système informatique de véhicule (100) avec la quatrième clé cryptographique privée (106),
• l'envoi du deuxième ensemble de données signé par le système informatique de véhicule (100) par le biais du réseau radio mobile (270) vers un serveur de chaînes de blocs (200, 220, 240),
• la réception du deuxième ensemble de données signé par le serveur de chaînes de blocs (200, 220, 240),
• l'exécution des premières instructions de programme du module de programme (206) identifié par le deuxième ensemble de données par le serveur de chaînes de blocs (200, 220, 240), dans lequel l'exécution des premières instructions de programme comprend une vérification de la signature du deuxième ensemble de données, moyennant l'emploi de la quatrième clé cryptographique publique (108) identifiée par le module de programme (206), et, dans le cas d'une signature valide, l'ajout d'une première entrée avec le deuxième ensemble de données signé et d'une première estampille temporelle à un bloc supplémentaire pour la chaîne de blocs (204).

8. Procédé selon la revendication 7, dans lequel le véhicule comprend au moins un capteur (130, 150, 170) permettant la détection de données de véhicule (110, 310) du véhicule, et dans lequel les données de véhicule (110, 310) du véhicule sont réceptionnées par l'au moins un capteur (130, 150, 170).

9. Procédé selon la revendication 8, dans lequel les données de véhicule (110, 310) comprennent le kilométrage du véhicule, et/ou
dans lequel les données de véhicule (110, 310) comprennent un message de défaut du véhicule, et/ou
dans lequel les données de véhicule (110, 310) comprennent un ID de logiciel d'une mise à jour de logiciel du système informatique de véhicule (100), et/ou
dans lequel les données de véhicule (110, 310) comprennent un identifiant (150, 170, 190) associé à une multiplicité de composants électroniques (140, 160, 180) du véhicule.

10. Procédé selon l'une des revendications précédentes, dans lequel le système informatique de véhicule (100) reçoit les données de véhicules (310) à partir d'un système informatique (300) d'une usine, dans lequel les données de véhicules (310) reçues à partir du système informatique (300) de l'usine sont signées avec une cinquième clé cryptographique privée (306) d'une cinquième paire de clés asymétrique associée à l'usine et dans lequel le procédé comprend en outre :
• la vérification de la signature des données reçues à partir de l'usine moyennant l'emploi de la cinquième clé cryptographique publique (308) de la cinquième paire de clés asymétrique associée à l'usine,
• dans le cas d'une signature valide, l'emploi des données reçues à partir de l'usine pour l'établissement du deuxième ensemble de données.

11. Procédé selon la revendication 10, dans lequel le deuxième ensemble de données comprend en outre un ID d'usine servant de source aux données de véhicule (310),
dans lequel le deuxième ensemble de données comprend en tant qu'ID d'usine, par exemple, la signature des données de véhicule (310) reçues à partir du système informatique (300) de l'usine, et/ou
dans lequel les données de véhicules (310) reçues à partir du système informatique (300) de l'usine comprennent des données concernant des mesures de maintenance et de réparation effectuées,
dans lequel les données de véhicules (310) reçues à partir du système informatique (300) de l'usine comprennent, par exemple, au moins une ID de pièces de véhicule d'une pièce de véhicule changée.

12. Procédé selon l'une des revendications précédentes, dans lequel l'établissement du deuxième ensemble de données a lieu après l'écoulement d'un intervalle de temps prédéfini, et/ou
dans lequel l'établissement du deuxième ensemble de données a lieu suite à la réception des données de véhicule (110, 310) lorsque les données de véhicule (110, 310) satisfont à un critère prédéfini,
dans lequel le critère est, par exemple, la réalisation d'un kilométrage prédéfini.

13. Procédé selon l'une des revendications précédentes, dans lequel le module de programme (206) identifie la cinquième clé cryptographique publique (308) de la cinquième paire de clés asymétrique associée à l'usine, dans lequel la cinquième clé cryptographique privée (306) de la cinquième paire de clés asymétrique associée à l'usine est enregistrée dans une mémoire (302) du système informatique (300) de l'usine, dans lequel le système informatique (300) de l'usine comprend une interface de communication (316) pour la communication par le biais d'un troisième réseau de communication (272), et
où le procédé comprend en outre :
• l'établissement d'un troisième ensemble de données à entrer dans la chaîne de blocs (204) par le système informatique (300) de l'usine, où le troisième ensemble de données comprend des données de véhicule (310) du véhicule et identifie le module de programme (206) associé au véhicule,
• la signature du troisième ensemble de données par le système informatique (300) de l'usine avec la cinquième clé cryptographique privée (306) de l'usine,
• l'envoi du troisième ensemble de données signé par le système informatique (300) de l'usine par le biais du troisième réseau de communication (272) vers un serveur de chaînes de blocs (200, 220, 240) du réseau de chaînes de blocs (260),
• la réception du troisième ensemble de données signé par le serveur de chaînes de blocs (200, 220, 240),
• l'exécution des premières instructions de programme du module de programme (206) identifié par le troisième ensemble de données par le serveur de chaînes de blocs (200, 220, 240), où l'exécution des premières instructions de programme comprend une vérification de la signature du troisième ensemble de données moyennant l'emploi de la cinquième clé cryptographique publique (308) identifiée par le module de programme (206) de la paire de clés asymétrique associée à l'usine, et, dans le cas d'une signature valide, l'ajout d'une deuxième entrée avec le troisième ensemble de données signé et d'une deuxième estampille temporelle à un bloc supplémentaire pour la chaîne de blocs (204).

14. Procédé selon l'une des revendications précédentes, dans lequel le module de programme (206) identifie une sixième clé cryptographique publique (508) d'une sixième paire de clés asymétrique associée à un fabricant du véhicule, où une sixième clé cryptographique privée (506) de la paire de clés asymétrique associée au fabricant de véhicule est enregistrée dans une mémoire (502) d'un système informatique (500) du fabricant de véhicule, où le système informatique (500) du fabricant de véhicule comprend une interface de communication (516) permettant la communication par le biais d'un quatrième réseau de communication (272), et
où le procédé comprend en outre :
• l'établissement d'un quatrième ensemble de données à entrer dans la chaîne de blocs (204) par le système informatique (500) du fabricant de véhicule, où le quatrième ensemble de données comprend des données de véhicule (510) du véhicule et identifie le module de programme (206) associé au véhicule,
• la signature du quatrième ensemble de données par le système informatique (500) du fabricant de véhicule avec la sixième clé cryptographique privée (506) du fabricant de véhicule,
• l'envoi du quatrième ensemble de données signé par le système informatique (500) du fabricant de véhicule par le biais du quatrième réseau de communication (272) vers un serveur de chaînes de blocs (200, 220, 240) du réseau de chaînes de blocs (260),
• la réception du quatrième ensemble de données signé par le serveur de chaînes de blocs (200, 220, 240),
• l'exécution des premières instructions de programme du module de programme (206) identifié par le quatrième ensemble de données par le serveur de chaînes de blocs (200, 220, 240), où l'exécution des premières instructions de programme comprend une vérification de la signature du quatrième ensemble de données, moyennant l'emploi de la sixième clé cryptographique publique (508) identifiée par le module de programme (206) de la paire de clés asymétrique associée au fabricant de véhicule, et, dans le cas d'une signature valide, l'ajout d'une troisième entrée avec le quatrième ensemble de données signé et d'une troisième estampille temporelle à un bloc supplémentaire pour la chaîne de blocs (204),
dans lequel le quatrième ensemble de données comprend par exemple des spécifications techniques du véhicule.

15. Procédé selon l'une des revendications précédentes, le procédé comprenant en outre :
• l'établissement d'un cinquième ensemble de données à entrer dans la chaîne de blocs (204) par le système informatique (600) du premier propriétaire de véhicule, où le cinquième ensemble de données comprend des données de véhicule (610) du véhicule et identifie le module de programme (206) associé au véhicule,
• la signature du cinquième ensemble de données par le système informatique (600) du propriétaire du véhicule avec la première clé cryptographique privée (606) du premier propriétaire de véhicule,
• l'envoi du cinquième ensemble de données signé par le système informatique (600) du premier propriétaire de véhicule par le biais du premier réseau de communication (272) vers un serveur de chaînes de blocs (200, 220, 240) du réseau de chaînes de blocs (260),
• la réception du cinquième ensemble de données signé par le serveur de chaînes de blocs (200, 220, 240),
• l'exécution des premières instructions de programme du module de programme (206) identifié par le cinquième ensemble de données par le serveur de chaînes de blocs (200, 220, 240), où l'exécution des premières instructions de programme comprend une vérification de la signature du cinquième ensemble de données moyennant l'emploi de la première clé cryptographique publique (608) de la première paire de clés asymétrique associée au premier propriétaire de véhicule identifiée par le module de programme (206), et, dans le cas d'une signature valide, l'ajout d'une quatrième entrée avec le cinquième ensemble de données signé et d'une quatrième estampille temporelle à un bloc supplémentaire pour la chaîne de blocs (204),
dans lequel le cinquième ensemble de données comprend par exemple un indicateur d'un vol et/ou d'un déclassement du véhicule.

16. Procédé selon l'une des revendications précédentes, dans lequel une septième clé cryptographique privée (406) d'une troisième adresse est stockée dans une mémoire (402) d'un système informatique (400) d'un fournisseur du module de programme (206), laquelle clé est associée au fournisseur du module de programme (206), dans lequel le système informatique (400) du fournisseur comprend une interface de communication (416) pour la communication par le biais d'un cinquième réseau de communication (272), dans lequel une clé cryptographique privée (506) d'une quatrième adresse est stockée dans la mémoire (502) du système informatique (500) du fabricant du véhicule, laquelle est associée au fabricant du véhicule, et
où le procédé comprend :
• l'établissement d'une deuxième instruction de transaction pour la transaction du module de programme (206) à partir d'une troisième adresse associée au fournisseur du module de programme (206) vers la quatrième adresse associée au fabricant du véhicule, par le système informatique (400) du fournisseur,
• la signature de la deuxième instruction de transaction par le système informatique (400) du fournisseur avec la clé cryptographique privée (406) de la troisième adresse,
• l'envoi de la deuxième instruction de transaction signée par le système informatique (400) du fournisseur par le biais d'un cinquième réseau de communication (272) vers un serveur de chaînes de blocs (200, 220, 240) du réseau de chaînes de blocs (260),
• la réception de la deuxième instruction de transaction par le serveur de chaînes de blocs (200, 220, 240),
• la vérification, par le serveur de chaînes de blocs (200, 220, 240), si la deuxième instruction de transaction est signée valide avec la clé cryptographique privée (406) associée à la troisième adresse,
• dans le cas d'une signature valide, l'ajout de la deuxième instruction de transaction à un bloc supplémentaire pour la chaine de blocs (204), et/ou
dans lequel une clé cryptographique privée (606) d'une première adresse est stockée dans la mémoire (602) du système informatique (600) du propriétaire du véhicule, laquelle est associée au premier propriétaire de véhicule et
où le procédé comprend :
• l'établissement d'une troisième instruction de transaction pour la transaction du module de programme (206) à partir d'une quatrième adresse associée au fabricant du véhicule vers la première adresse associée au premier propriétaire du véhicule, par le système informatique (500) du fabricant du véhicule,
• la signature de la troisième instruction de transaction par le système informatique (500) du fabricant du véhicule avec la clé cryptographique privée (506) de la quatrième adresse,
• l'envoi de la troisième instruction de transaction signée par le système informatique (500) du fabricant du véhicule par le biais du quatrième réseau de communication (272) vers un serveur de chaînes de blocs (200, 220, 240) du réseau de chaînes de blocs (260),
• la réception de la troisième instruction de transaction par le serveur de chaînes de blocs (200, 220, 240),
• la vérification, par le serveur de chaînes de blocs (200, 220, 240), si la troisième instruction de transaction est signée avec la clé cryptographique privée (506) associée à la quatrième adresse,
• dans le cas d'une signature valide, l'ajout de la troisième instruction de transaction à un bloc supplémentaire pour la chaine de blocs (204).

17. Procédé selon l'une des revendications précédentes, dans lequel le module de programme (206) comprend des quatrièmes instructions de programme et dans lequel, par l'exécution des quatrièmes instructions de programme, une entrée associée au module de programme (206) est créée dans la chaîne de blocs (204), laquelle comprend un accès à l'affectation du module de programme (206) au véhicule, où le module de programme (206) comprend en outre des cinquièmes instructions de programme et, par l'exécution des cinquièmes instructions de programme, une entrée associée au module de programme (206) est créée dans la chaîne de blocs (204), laquelle associe le module de programme (206) au véhicule,
où le procédé comprend :
• par un serveur de chaines de blocs (200, 220, 240) du réseau de chaînes de blocs (260), la réception d'une première notification pour la délivrance d'une autorisation pour l'association du module de programme (206) au véhicule par le fabricant du véhicule, où la première notification comprend la clé cryptographique publique (508) du fabricant du véhicule, qui identifie le module de programme (206) associé au véhicule et qui est signée valide avec la clé cryptographique privée (406) du fournisseur du module de programme (206),
• l'exécution des quatrièmes instructions de programme du module de programme (206) identifié par la première notification par le serveur de chaînes de blocs (200, 220, 240), où l'exécution des quatrièmes instructions de programme comprend une vérification de la signature de la première notification moyennant l'emploi de la clé cryptographique publique (408) de la paire de clé asymétrique identifiée par le module de programme (206), laquelle est associée au fournisseur, et, dans le cas d'une signature valide, l'ajout d'une cinquième entrée avec la clé cryptographique publique (508) du fabricant du véhicule, d'un accès à l'affectation et d'une cinquième estampille horaire d'un bloc supplémentaire pour la chaine de blocs (204),
• la réception d'une deuxième notification du fabricant du véhicule pour l'association du module de programme (206) au véhicule par le serveur de chaines de blocs (200, 220, 240), où la deuxième notification identifie le module de programme (206) associé au véhicule et est signée valide avec la clé cryptographique privée (506) du fabricant du véhicule,
• l'exécution des cinquièmes instructions de programme du module de programme (206) par le serveur de chaînes de blocs (200, 220, 240), où l'exécution des cinquièmes instructions de programme comprend une vérification de la signature de la deuxième notification moyennant l'emploi de la clé cryptographique publique (508) de la paire de clé asymétrique enregistrée dans la cinquième entrée, laquelle est associée au fabricant du véhicule, et, dans le cas d'une signature valide, l'ajout d'une sixième entrée avec la clé cryptographique publique (108) du véhicule, d'une association du module de programme (206) au véhicule et d'une sixième estampille horaire à un bloc supplémentaire pour la chaine de blocs (204), et/ou
dans lequel le module de programme (206) comprend des sixièmes instructions de programme et dans lequel, par une exécution des sixièmes instructions de programme, une entrée associée au module de programme (206) est créée dans la chaîne de blocs (204), laquelle comprend un accès à l'association du module de programme (206) vers le véhicule,
dans lequel l'association comprend :
• par un serveur de chaines de blocs (200, 220, 240) du réseau de chaînes de blocs (260), la réception d'une troisième notification pour la délivrance d'une autorisation pour l'association du module de programme (206) au véhicule par le fabricant du véhicule, où la troisième notification comprend un mot de passe et la clé cryptographique publique (508) du fabricant du véhicule et identifie le module de programme (206) associé au véhicule,
• l'exécution des sixièmes instructions de programme du module de programme (206) identifié par la troisième notification par le serveur de chaînes de blocs (200, 220, 240), où l'exécution des sixièmes instructions de programme comprend une vérification du mot de passe moyennant l'emploi d'une valeur de référence chiffrée enregistrée dans la chaîne de blocs (204) et, dans le cas d'une valeur de référence valide, l'ajout d'une septième entrée avec la clé cryptographique publique (508) du fabricant du véhicule, d'un accès à l'affectation et d'une septième estampille horaire d'un bloc supplémentaire pour la chaine de blocs (204),
• la réception d'une deuxième notification du fabricant du véhicule pour l'association du module de programme (206) au véhicule par le serveur de chaines de blocs (200, 220, 240), où la deuxième notification identifie le module de programme (206) associé au véhicule et est signée valide avec la clé cryptographique privée (506) du fabricant du véhicule,
• l'exécution des cinquièmes instructions de programme du module de programme (206) par le serveur de chaînes de blocs (200, 220, 240), où l'exécution des cinquièmes instructions de programme comprend une vérification de la signature de la deuxième notification moyennant l'emploi de la clé cryptographique publique (508) de la paire de clé asymétrique enregistrée dans la cinquième entrée, laquelle est associée au fabricant du véhicule, et, dans le cas d'une signature valide, l'ajout d'une sixième entrée avec la clé cryptographique publique (108) du véhicule, d'une association du module de programme (206) au véhicule et d'une sixième estampille horaire à un bloc supplémentaire pour la chaine de blocs (204).

18. Procédé selon l'une des revendications précédentes, dans lequel une ou plusieurs clés cryptographiques privées (106, 306, 406, 506, 606) sont stockées dans la mémoire (102, 302, 402, 502, 602) correspondante respectivement dans une zone de mémoire (104, 304, 404, 504, 604) sécurisée, et/ou
dans lequel la chaine de blocs est en outre configurée pour l'exécution de transferts de sommes d'une crypto monnaie.

19. Système, lequel comprend un système informatique d'un premier propriétaire d'un véhicule et un réseau de chaines de blocs (260) avec au moins un serveur de chaines de blocs (200, 220, 240),
dans lequel le système informatique du premier propriétaire du véhicule comprend une mémoire (102), dans lequel le système informatique du premier propriétaire du véhicule comprend une interface de communication (118) pour la communication par le biais du premier réseau,
dans lequel l'au moins un serveur de chaines de blocs (200, 220, 240) est conçu pour exécuter un module de programme (206) stocké dans la chaine de blocs (204) et mettre à disposition un certificat de véhicule (282), et
où le système est conçu pour l'exécution d'un procédé selon l'une des revendications 1 à 4, 15 et 18.

20. Système selon la revendication 19, lequel comprend en outre un système informatique de vérification, dans lequel le système informatique de vérification comprend un lecteur et une interface de communication (316) pour la communication par le biais d'un deuxième réseau de communication (272),
où le système est conçu pour l'exécution d'un procédé selon la revendication 5, et/ou
lequel comprend un véhicule avec un système informatique de véhicule (100) et un réseau de chaines de blocs (260) avec au moins un serveur de chaines de blocs (200, 220, 240) ;
dans lequel le système informatique de véhicule (100) comprend une mémoire (102), dans lequel le système informatique de véhicule (100) comprend une interface radio mobile (118) pour la communication par le biais d'un réseau radio mobile (270),
dans lequel l'au moins un serveur de chaines de blocs (200, 220, 240) est conçu pour exécuter un module de programme (206) stocké dans la chaine de blocs (204) et établir des blocs supplémentaires pour la chaine de blocs (204), et
où le système est conçu pour exécuter un procédé selon l'une des revendications 6 à 9, et/ou
lequel comprend en outre un système informatique (300) d'une usine, où le système informatique (300) de l'usine comprend une mémoire (302), où le système informatique (300) de l'usine comprend une interface de communication (316) pour la communication par le biais d'un premier réseau de communication ((272),
où le système est conçu pour l'exécution d'un procédé selon l'une des revendications 10 à 13, et/ou
lequel comprend en outre un système informatique d'un fabricant (500) du véhicule, où le système informatique (500) du fabricant du véhicule comprend une mémoire (502), où le système informatique (500) du fabricant du véhicule comprend une interface de communication (516) pour la communication par le biais d'un deuxième réseau de communication ((272),
où le système est conçu pour l'exécution d'un procédé selon la revendication 14, et/ou
lequel comprend en outre un système informatique (400) d'un fournisseur du module de programme (206), où le système informatique (400) d'un fournisseur du module de programme (206) comprend une mémoire (402), où le système informatique (400) du fournisseur comprend une interface de communication (416) pour la communication par le biais d'un quatrième réseau de communication ((272),
où le système est conçu pour l'exécution d'un procédé selon la revendication 17.
